# EUROPEAN PATENT APPLICATION

(11) **EP 4 751 955 A1**
(43) Date of publication of application: **03.06.2026**
(21) Application number: 24847837.2
(22) Date of filing: 18.06.2024
(51) Int. Cl.: B60K 1/04

(54) **BATTERY PACK, SEAT SUPPORT MOUNTING STRUCTURE, AND AUTOMOBILE**

(30) Priority: 26.07.2023 CN 202310932664; 28.09.2023 CN 202311280122
(71) Applicant: BYD Company Limited, Shenzhen, Guangdong 518118 (CN)
(72) Inventor: HU, Shichao, Shenzhen, Guangdong 518118 (CN); ZHANG, Yaosheng, Shenzhen, Guangdong 518118 (CN); ZHU, Liequn, Shenzhen, Guangdong 518118 (CN); LI, Ziqian, Shenzhen, Guangdong 518118 (CN); LAI, Qing, Shenzhen, Guangdong 518118 (CN)
(74) Representative: Mathys & Squire
(86) International application number: PCT/CN2024/099862
(87) International publication number: WO 2025/025874

(57) **Abstract**

An automobile, on which a seat support mounting structure or a battery pack (10) is mounted. The seat support mounting structure comprises the battery pack (10); the battery pack (10) comprises a battery tray (20); a structural beam (22) is provided on the battery tray (20); the structural beam (22) is adapted to divide the battery tray (20) into battery accommodating spaces (21) and an electrical accommodating space (28); the battery accommodating spaces (21) are isolated from the electrical accommodating space (28); each battery accommodating space (21) accommodates one battery module (30); a power distribution box (40a) is accommodated in the electrical accommodating space (28).

## Description

### CROSS-REFERENCE TO RELATED APPLICATIONS

The present disclosure claims priority to Chinese Patent Application No. 202311280122.6, filed on September 28, 2023, titled "BATTERY PACK, SEAT SUPPORT MOUNTING STRUCTURE, AND AUTOMOBILE", and to Chinese Patent Application No. 202310932664.0, filed on July 26, 2023, titled "BATTERY PACK, SEAT SUPPORT MOUNTING STRUCTURE, AND AUTOMOBILE", which are incorporated herein by reference in their entirety.

### FIELD

The present disclosure relates to the field of vehicles, and more specifically to a battery pack, a seat support mounting structure, and a vehicle.

### BACKGROUND

Various components such as battery modules and power distribution boxes exist within the battery pack. The connection relationships and structures are complex. How to improve the safety of the battery pack has always been a problem that needs to be solved.

### SUMMARY

An object of the present disclosure is to provide a battery pack, a seat support mounting structure, and a vehicle.

According to the first aspect of the present disclosure, a battery pack is provided. The battery pack includes a battery tray, a structural beam is arranged on the battery tray, the structural beam is adapted to partition the battery tray into a battery accommodating space and an electrical accommodating space, the battery accommodating space and the electrical accommodating space are isolated from each other, a battery module is accommodated in the battery accommodating space, and a power distribution box is accommodated in the electrical accommodating space.

In an embodiment, each of the battery modules includes a plurality of battery cells, and the battery cells are arranged on the battery tray in an insulated manner.

In an embodiment, an insulating adhesive is arranged between adjacent battery cells; and/or a first insulating layer is arranged between the structural beam and the battery cells; and/or a second insulating layer is arranged in the power distribution box; and/or the battery pack further includes a cooling plate, and a third insulating layer is arranged between the cooling plate and the battery cells.

In an embodiment, an upper surface and/or a lower surface of the cooling plate is a flat surface.

In an embodiment, the cooling plate includes a flow channel plate, a sealing plate, and a support. Two sides of the flow channel plate in a thickness direction are a first side plate and a second side plate respectively, the first side plate has a protrusion, and the protrusion and the second side plate jointly define a flow channel. The sealing plate is arranged on the side of the flow channel plate close to the first side plate. The support is supported between the flow channel plate and the sealing plate.

In an embodiment, the flow channel plate includes a flow channel region and a non-flow channel region, the non-flow channel region is arranged on a peripheral side of the flow channel plate surrounding the flow channel region, the flow channel region is arranged with a flow channel, and the non-flow channel region is not arranged with a flow channel; the support is of a frame-shaped structure, and the support is arranged in the non-flow channel region.

In an embodiment, the battery module includes at least one set of first battery modules and second battery modules; the power distribution box includes a first power distribution box and a second power distribution box; the first power distribution box is connected in series between the first battery module and the second battery module, the second power distribution box is configured to output electrical power externally, and the second power distribution box is connected to the first power distribution box; the first power distribution box is configured to respond to a signal from the second power distribution box, to connect or disconnect the first battery module and the second battery module.

In an embodiment, the first power distribution box includes a first switch module, the first switch module is connected in series between the first battery module and the second battery module and is communicatively connected to the second power distribution box, and the first switch module is configured to respond to the signal from the second power distribution box, to connect or disconnect the first battery module and the second battery module.

In an embodiment, the first power distribution box further includes a second switch module, the second switch module is connected in series between the first battery module and the second battery module, and the second switch module is adapted to disconnect when a preset parameter reaches a threshold.

In an embodiment, the battery pack further includes a battery wire harness; a side of the structural beam away from the battery tray is arranged with an accommodating groove, the open side of the accommodating groove is arranged away from the battery tray, and the battery wire harness is accommodated in the accommodating groove and is insulated from the structural beam.

In an embodiment, the battery pack further includes an accommodating member, the battery wire harness is accommodated in the accommodating member, the accommodating member is accommodated in the accommodating groove, the accommodating member is a troughshaped member, and the open side of the accommodating member faces the same direction as the open side of the accommodating groove.

In an embodiment, a plurality of battery modules are arranged in the battery pack, the two battery modules are connected by a busbar or the battery module and the power distribution box are connected by a busbar, the busbar includes a first connecting portion, a first bending portion, a third transition portion, a second bending portion, and a second connecting portion arranged sequentially, the first bending portion has a plurality of metal sheets arranged sequentially along the thickness direction of the first bending portion, and the second bending portion has a plurality of metal sheets arranged sequentially along the thickness direction of the second bending portion. The first connecting portion and the first bending portion are located at an end of the third transition portion in a first direction, the second bending portion and the second connecting portion are located at an end of the third transition portion in a second direction, and the first direction intersects the second direction.

In an embodiment, the battery pack further includes a sealing cover sealing the battery tray, and a support member is arranged on the battery tray; the battery pack further includes an adapter, two busbars are connected by the adapter, and a connection point between one of the busbars and the adapter, and a connection point between the other busbar and the adapter are both located on a side of the support member facing the sealing cover.

In an embodiment, one of the two busbars is a first connector, and the other busbar is a second connector; the first connector is formed with a first positioning hole; the second connector is formed with a second positioning hole; a first boss and a second boss are arranged on the adapter; and the shape of the first boss corresponds to the shape of the first positioning hole, and the shape of the second boss corresponds to the shape of the second positioning hole.

In an embodiment, in a state where the first connector and the second connector are connected to the adapter, the first connector and the second connector do not overlap in the height direction.

In an embodiment, the structural beam includes a tray transverse beam and a tray longitudinal beam, the tray transverse beam is formed with a third bayonet, the tray longitudinal beam is formed with a fourth bayonet, and the third bayonet of the tray transverse beam engages with the fourth bayonet of the tray longitudinal beam to partition a space inside the battery pack into a plurality of battery accommodating spaces.

In an embodiment, the structural beam includes a tray longitudinal side beam, the tray transverse beam has a first exhaust cavity, the tray longitudinal side beam has a second exhaust cavity, the first exhaust cavity communicates with the second exhaust cavity, the battery accommodating space inside the battery tray communicates with the first exhaust cavity, and the second exhaust cavity communicates with a space outside the battery tray.

In an embodiment, the structural beam partitions the battery tray into a plurality of battery accommodating spaces.

In an embodiment, the battery tray further includes an insulating assembly, the structural beam includes a tray transverse beam and/or a tray longitudinal beam, the tray transverse beam and/or the tray longitudinal beam is formed with an opening, the insulating assembly is arranged on the tray transverse beam and/or the tray longitudinal beam and seals the opening, and the insulating assembly is configured to allow electrical connection of electrical assemblies in two adjacent electrical accommodating spaces and/or battery accommodating spaces.

According to the second aspect of the embodiment, a seat support mounting structure is further provided. The seat support mounting structure includes a seat support and the above battery pack, and the seat support is connected to the battery pack.

In an embodiment, the battery pack further includes a cooling plate, the seat support is arranged above the cooling plate of the battery pack, and the seat support and the cooling plate are adapted to be connected by a structural adhesive.

According to the third aspect of the embodiment, a vehicle is provided. The battery pack is mounted on the vehicle, or the seat support mounting structure is mounted on the vehicle.

The beneficial effect of the embodiment of the application is that by arranging the power distribution box and the battery accommodating space on opposite sides of the structural beam, the impact of the battery modules in the battery accommodating space on the power distribution box is avoided, thereby enhancing the electrical safety of the battery pack.

Other features and advantages of the present application will become apparent from the detailed description of the exemplary embodiment with reference to the accompanying drawings.

### BRIEF DESCRIPTION OF THE DRAWINGS

The accompanying drawings, which are incorporated in and constitute a part of this specification, illustrate the embodiments of the present application and, together with the description thereof, serve to explain the principles of the present disclosure.
FIG. 1 is a schematic structural view of a battery pack according to an embodiment of the present disclosure.
FIG. 2 is a partially enlarged view of part A in FIG. 1;
FIG. 3 is a partially enlarged view of part B in FIG. 1;
FIG. 4 is a partially enlarged view of part C in FIG. 1;
FIG. 5 is a partially enlarged view of part D in FIG. 1;
FIG. 6 is a schematic structural view of a battery pack according to an embodiment of the present disclosure;
FIG. 7 is a partial enlarged view of part E in FIG. 6;
FIG. 8 is a schematic structural view of a battery pack according to an embodiment of the present disclosure;
FIG. 9 is a partial enlarged view of part F in FIG. 8;
FIG. 10 is a partial enlarged view of part G in FIG. 8;
FIG. 11 is a partial enlarged view of part H in FIG. 8;
FIG. 12 is a schematic structural view of a battery pack according to an embodiment of the present disclosure;
FIG. 13 is a partial enlarged view of part K in FIG. 12;
FIG. 14 is an exploded view of a battery pack according to an embodiment of the present disclosure;
FIG. 15 is a perspective view of a sampling bus according to an embodiment of the present disclosure;
FIG. 16 is a perspective view of a second accommodating member according to an embodiment of the present disclosure;
FIG. 17 is a partial enlarged view of a battery pack according to an embodiment of the present disclosure;
FIG. 18 is a partial enlarged view of a battery pack at another position according to an embodiment of the present disclosure;
FIG. 19 is a perspective view of a first connector according to an embodiment of the present disclosure;
FIG. 20 is a front view of the first connector according to an embodiment of the present disclosure;
FIG. 21 is a bottom view of the first connector according to an embodiment of the present disclosure;
FIG. 22 is a perspective view of a second connector according to an embodiment of the present disclosure;
FIG. 23 is a front view of the second connector according to an embodiment of the present disclosure;
FIG. 24 is a bottom view of the second connector according to an embodiment of the present disclosure;
FIG. 25 is a perspective view of an adapter according to an embodiment of the present disclosure;
FIG. 26 is an exploded view of an electrical connecting structure according to an embodiment of the present disclosure;
FIG. 27 is a perspective view of a battery tray according to an embodiment of the present disclosure;
FIG. 28 is a front view of a tray transverse beam according to an embodiment of the present disclosure;
FIG. 29 is a front view of a tray longitudinal beam according to an embodiment of the present disclosure;
FIG. 30 is a side view of the tray transverse beam according to an embodiment of the present disclosure;
FIG. 31 is a perspective view of a battery tray according to an embodiment of the present disclosure;
FIG. 32 is a partial enlarged view of part J in FIG. 31;
FIG. 33 is a schematic structural view of a tray transverse beam according to an embodiment of the present disclosure;
FIG. 34 is a perspective view of a battery pack according to an embodiment of the present disclosure;
FIG. 35 is a schematic structural view of a battery tray according to an embodiment of the present disclosure;
FIG. 36 is a schematic structural view of a battery tray according to an embodiment of the present disclosure;
FIG. 37 is an exploded view of a seat support mounting structure according to an embodiment of the present disclosure;
FIG. 38 is a partial enlarged view of a cooling plate according to an embodiment of the present disclosure;
FIG. 39 is a perspective view of a battery pack according to an embodiment of the present disclosure;
FIG. 40 is a schematic structural view of a battery tray according to an embodiment of the present disclosure;
FIG. 41 is a schematic structural view of a battery tray according to an embodiment of the present disclosure;
FIG. 42 is a diagram showing the matching relationship between the first deformation block, the second deformation block and the annular gasket when the first deformation block and the second deformation block are not deformed according to an embodiment of the present disclosure;
FIG. 43 is a diagram showing the matching relationship between the first deformation block, the second deformation block and the annular gasket when the first deformation block and the second deformation block are deformed according to an embodiment of the present disclosure;
FIG. 44 is another schematic diagram of the dimensional relationship between the first through hole, the first deformation block and the second deformation block according to an embodiment of the present disclosure;
FIG. 45 is a schematic diagram of the dimensional relationship between the first through hole, the first deformation block and the second deformation block according to an embodiment of the present disclosure;
FIG. 46 is a schematic structural view of the first through hole according to an embodiment of the present disclosure;
FIG. 47 is a schematic view of a battery pack according to an embodiment of the present disclosure;
FIG. 48 is an enlarged view of the circled part M in FIG. 47;
FIG. 49 is a schematic view of a battery tray of a battery pack according to an embodiment of the present disclosure;
FIG. 50 is a schematic view of a first insulating layer of a battery pack according to an embodiment of the present disclosure;
FIG. 51 is a schematic view of battery cells and a heat insulator of a battery pack according to an embodiment of the present disclosure;
FIG. 52 is a schematic view of a cooling plate of a battery pack according to an embodiment of the present disclosure;
FIG. 53 is an enlarged view of the circled part N in FIG. 52;
FIG. 54 is a schematic view of a battery module according to an embodiment of the present disclosure;
FIG. 55 is a schematic view of the battery module from another angle according to an embodiment of the present disclosure;
FIG. 56 is an enlarged view of the circled part Q in FIG. 55;
FIG. 57 is an exploded view of a cooling plate according to an embodiment of the present disclosure;
FIG. 58 is a partial cross-sectional view of the cooling plate according to an embodiment of the present disclosure;
FIG. 59 is a schematic view of a busbar according to an embodiment of the present disclosure;
FIG. 60 is a schematic view of the busbar from another angle according to an embodiment of the present disclosure;
FIG. 61 is a schematic view of a busbar according to another embodiment of the present disclosure;
FIG. 62 is a bending schematic view of a busbar according to an embodiment of the present disclosure;
FIG. 63 is a schematic view of a plurality of busbars connected according to an embodiment of the present disclosure;
FIG. 64 is a schematic view of a battery pack according to an embodiment of the present disclosure;
FIG. 65 is an enlarged view of part P in FIG. 64;
FIG. 66 is a schematic plan view of a busbar according to an embodiment of the present disclosure;
FIG. 67 is a schematic plan view of a conductive member according to an embodiment of the present disclosure;
FIG. 68 is a schematic plan view of a wiring connector according to an embodiment of the present disclosure;
FIG. 69 is a schematic plan view of a busbar according to another embodiment of the present disclosure;
FIG. 70 is a schematic plan view of a conductive member according to another embodiment of the present disclosure;
FIG. 71 is a schematic plan view of a conductive member according to another embodiment of the present disclosure;
FIG. 72 is a schematic plan view of a wiring connector according to another embodiment of the present disclosure;
FIG. 73 is a schematic structural view of an insulating assembly in a battery pack according to an embodiment of the present disclosure;
FIG. 74 is a partial structural view of the insulating assembly according to an embodiment of the present disclosure;
FIG. 75 is a partial structural view of the insulating assembly according to an embodiment of the present disclosure; and
FIG. 76 is a cross-sectional view of a tray longitudinal side beam according to an embodiment of the present disclosure.

Description of reference signs:
Battery pack 10; Battery cell 101;
Battery tray 20; Battery accommodating space 21; Structural beam 22; Electrical accommodating space 28;
First insulating layer 201; Heat insulator 202; First heat insulating section 203; Second heat insulating section 204; Fifth insulating layer 205; Insulating adhesive 206; Battery cell connector 207;
Tray transverse side beam 221; Second connecting hole 2211; Exhaust channel 2212; Second exhaust hole 2213; First deformation block 2214; Second deformation block 2215; Third interval space 2216; Weight reducing hole 2217; Second through hole 2218;
Tray longitudinal side beam 222; First exhaust hole 2221; First through hole 2222; Figure-eight reinforcing rib 2223;
Tray transverse beam 223; Third bayonet 2231; Third exhaust hole 2232; First cavity 2233; Second cavity 2234; Third cavity 2235; First tray transverse beam 2236; First interval space 2237; Second tray transverse beam 2238; Second interval space 2239;
Partition body 22301; First insulator 22303; Second insulator 22304; Third through hole 22305; First clearance region 22306; Second clearance region 22307; Limiting member 22308; Protrusion 22309; First sealing strip 22310; Second sealing strip 22312; Annular gasket 22313; Inner edge 22314; Outer edge 22315; Wedge block 22316;
Tray longitudinal beam 224; Fourth bayonet 2241; First accommodating member 2242; Second accommodating member 2243; First bayonet 22431; Accommodating groove 2244; Second bayonet 22441;
Insulating assembly 22302; First connecting assembly 2251; Second connecting assembly 2252; First housing 2253; Second housing 2254; Accommodating cavity 2255; First connecting section 2256; Second connecting section 2257; First extension section 2258; Third connecting section 2259; Second extension section 2260; First clamping portion 2261; Second clamping portion 2262; Fourth connecting section 2263;
Base plate 23; Side beam structure 25; One-way valve 26; Explosion-proof valve 27;
Battery module 30;
First connector 321; First positioning hole 3211; First positioning portion 3212; First transition portion 3213; First bending portion 3214; First wiring portion 3215; First edge 3216;
Second connector 322; Second positioning hole 3321; Second positioning portion 3322; Second transition portion 3323; Second bending portion 3324; Second wiring portion 3325; Second edge 3326; Total positive terminal 34; Total negative terminal 35;
Adapter 303; First boss 3031; Second boss 3032;
Busbar 304a; First connecting portion 304a1; First bending portion 304a2; Third transition portion 304a3; Second bending portion 304a4; Second connecting portion 304a5; Depression 304a6; Positioning hole 304a7; Fixing hole 304a8; Notch 304a9;
Busbar 304b; Conductive member 304b1; Protrusion 304b2; Top surface 304b3; Outer surface 304b4; Groove 304b5; Bottom surface 304b6; Inner surface 304b7; Bump 304b8; Card slot 304b9; Positioning column 304b10; Wiring connector 304b11; Wiring sheet 304b12; Holding portion 304b13; Hollow region 304b14; Boss 304b15; Pre-bending section 304b16; Wiring hole 304b17; Positioning portion 304b18; Positioning hole 304b19; Chamfer 304b20;
Power distribution box 40a; First power distribution box 40; Third secondary busbar 401; First switch module 403; Second switch module 404;
Second power distribution box 41; Third main busbar 411;
Front-drive plugin 42; Fourth busbar 421;
First wiring transfer bar a; Second wiring transfer bar b; Third wiring transfer bar c; Fourth wiring transfer bar d;
High-voltage connector 51; Low-voltage connector 52; Sampling wire 53; Sampling nickel sheet 54; Quick-connect connector 55; Sampling wiring transfer harness plug 56;
Cooling plate 60; Flow channel plate 601; First side plate 602; Protrusion 603; Second side plate 604; Flow channel 605; Sealing plate 606; Opening 607; Support 608; Temperature equalizing plate 609; Seventh insulating layer 610;
Seat support 70; First seat support 71; Second seat support 72; First fixing member 73; Second fixing member 74; Sleeve 75.

### DETAILED DESCRIPTION

Various exemplary embodiments of the present disclosure will now be described in detail with reference to the accompanying drawings. It will be noted that the relative arrangement of components and steps, numerical expressions, and numerical values set forth in these embodiments do not limit the scope of the present disclosure unless specifically stated otherwise.

The following description of at least one exemplary embodiment is merely illustrative in practice and is in no way intended to limit the present disclosure and its application or use.

Techniques, methods, and apparatuses known to a person skilled in the art may not be discussed in detail, but will be regarded as part of the specification where appropriate.

In all examples shown and discussed herein, any specific values should be construed as merely exemplary and not as limiting. Accordingly, other examples of exemplary embodiments may have different values.

It will be noted that similar reference numerals and letters refer to similar items in the following drawings, and therefore, once an item is defined in one drawing, it is not necessary to further discuss it in the following drawings.

In the following description, the Z direction is a height direction and a thickness direction, the X direction is a length direction and a longitudinal direction, and the Y direction is a width direction and a transverse direction.

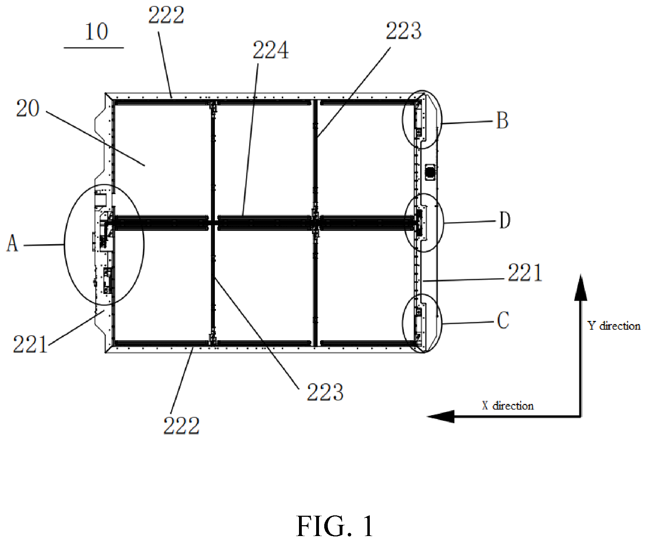

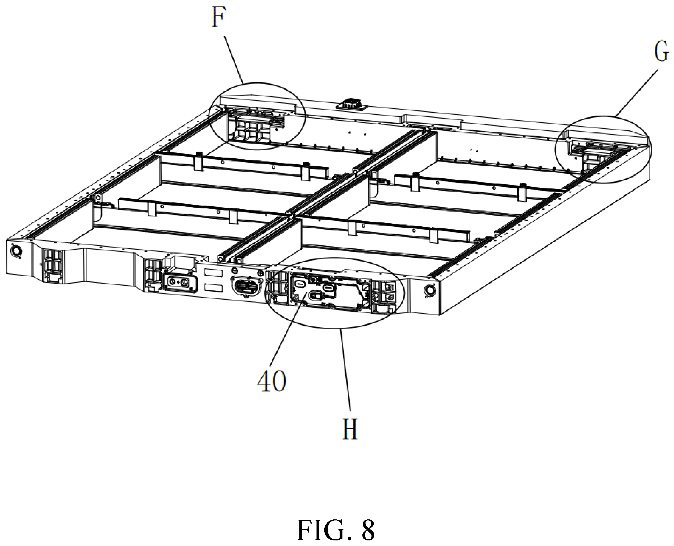

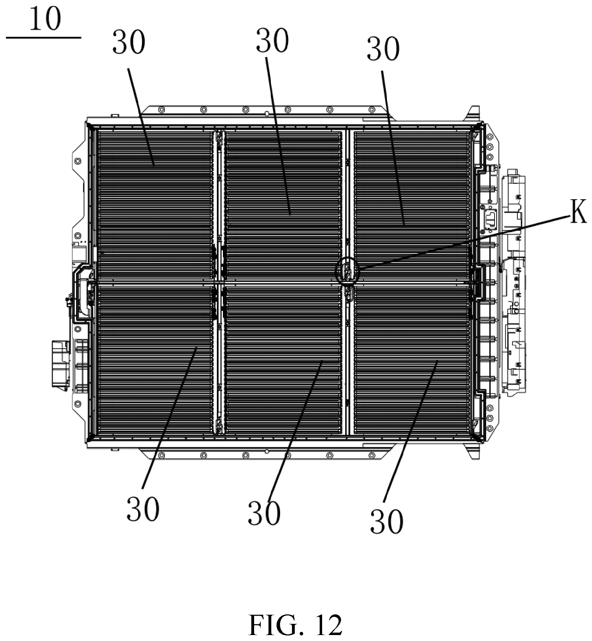

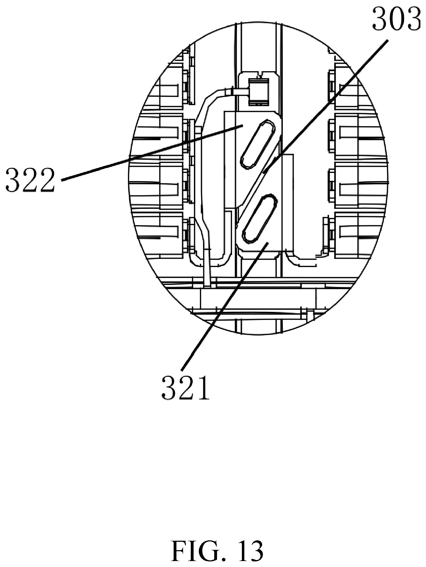

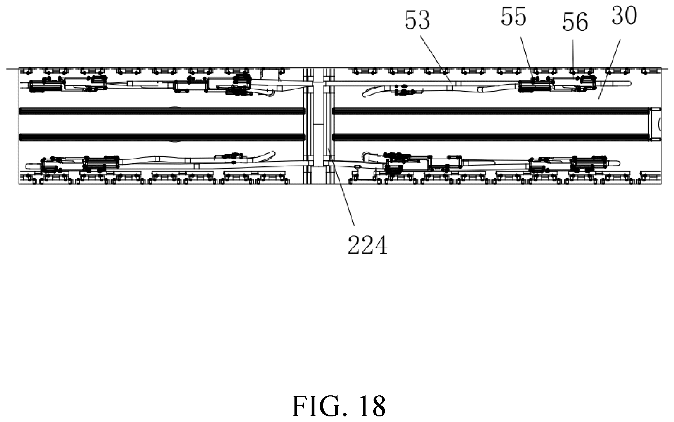

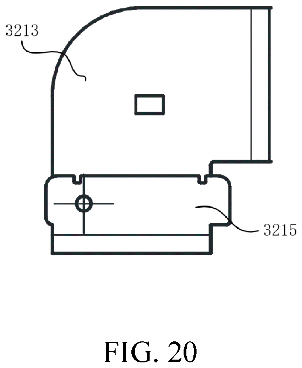

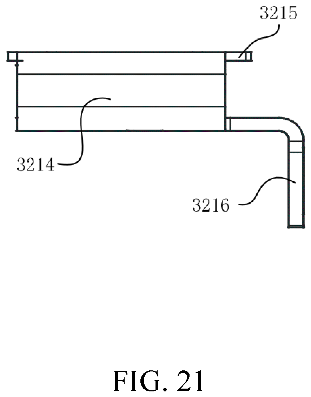

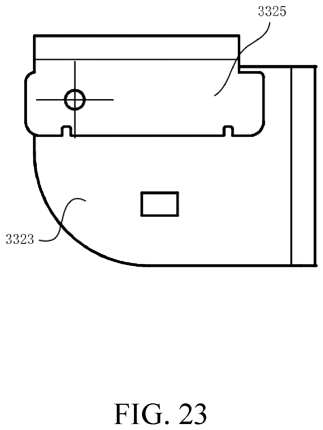

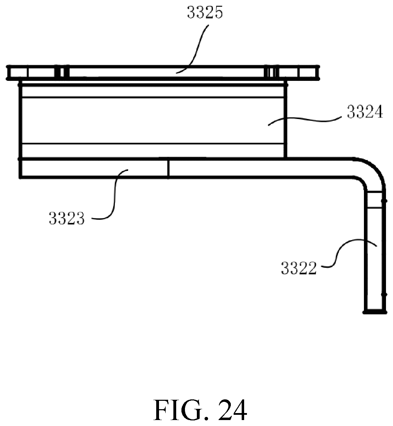

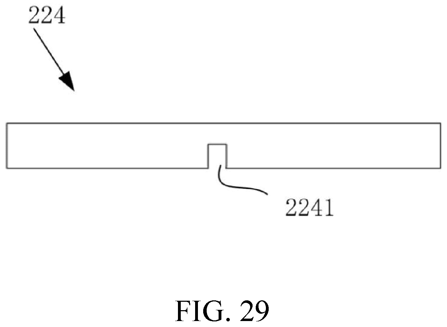

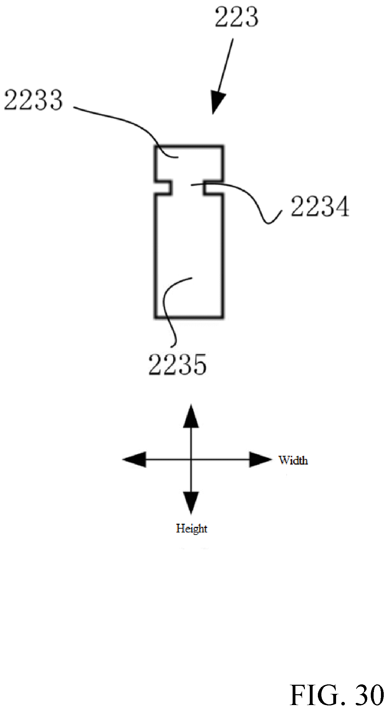

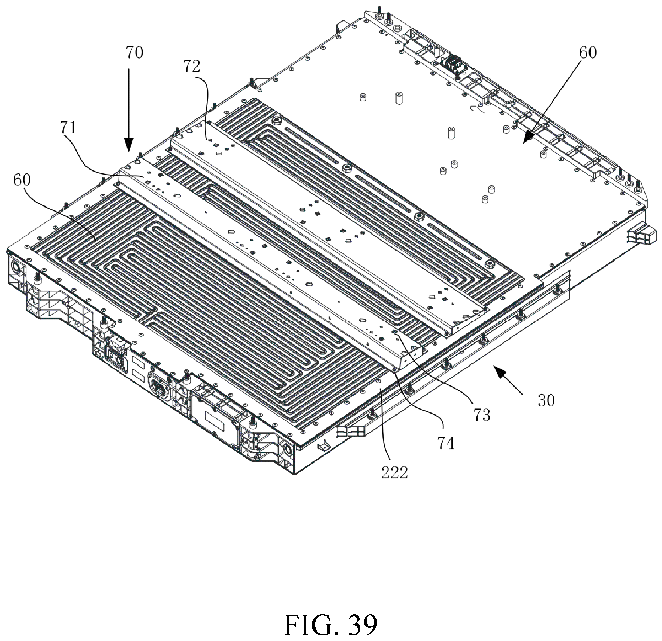

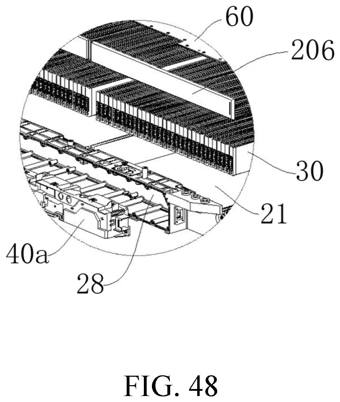

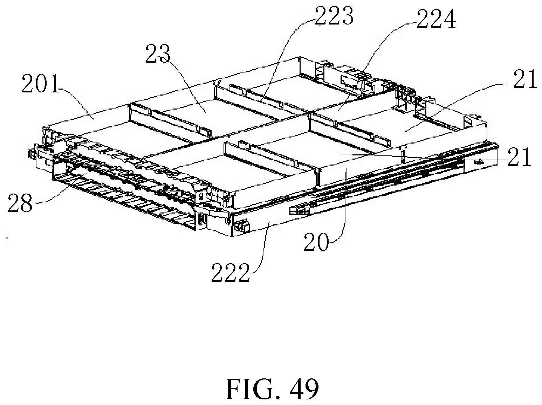

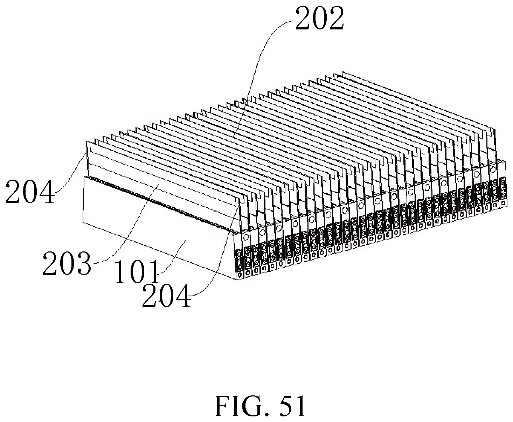

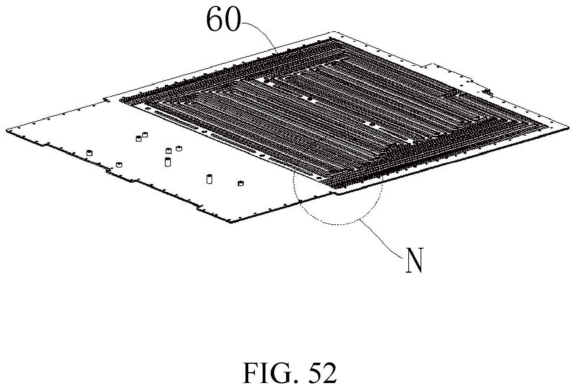

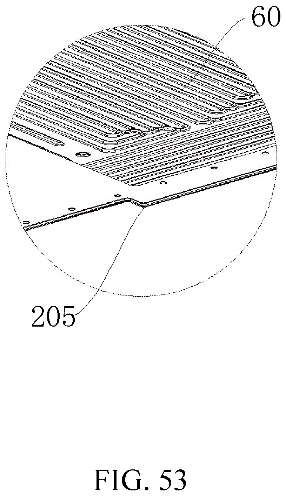

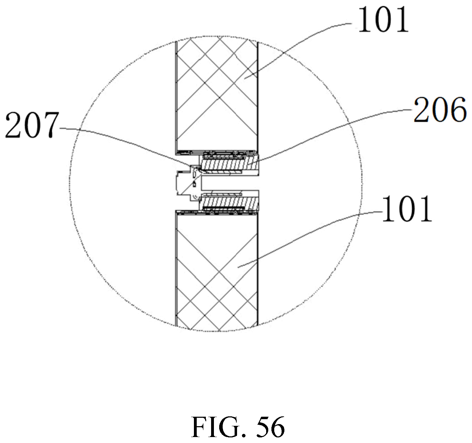

As shown in FIGS. 1 to 72, according to one aspect of the embodiment of the present disclosure, a battery pack 10 is provided. The battery pack 10 includes a battery tray 20, and a structural beam 22 is arranged on the battery tray 20. The structural beam 22 is adapted to partition the battery tray 20 into a battery accommodating space 21 and an electrical accommodating space 28. The battery accommodating space 21 and the electrical accommodating space 28 are isolated from each other. A battery module is accommodated in the battery accommodating space 21, and a power distribution box 40a is accommodated in the electrical accommodating space 28.

To further illustrate, a structural beam 22 is arranged on the battery tray 20. The battery tray 20 is partitioned into a plurality of battery accommodating spaces 21 and an electrical accommodating space 28 by the structural beam 22. The battery accommodating spaces 21 and the electrical accommodating space 28 are separated, and the battery accommodating spaces 21 and the electrical accommodating space 28 are independent spaces respectively. A battery module 30 is placed in each of the battery accommodating spaces 21, and each of the battery modules 30 is separated from the others by the partitioned battery accommodating spaces 21. When any one battery module 30 experiences thermal runaway, it will not affect other battery modules 30, thereby improving electrical safety of the battery pack 10.

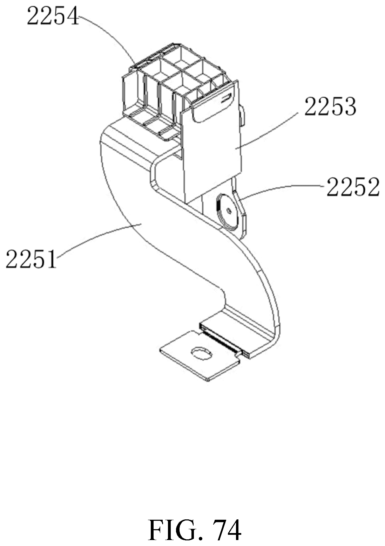

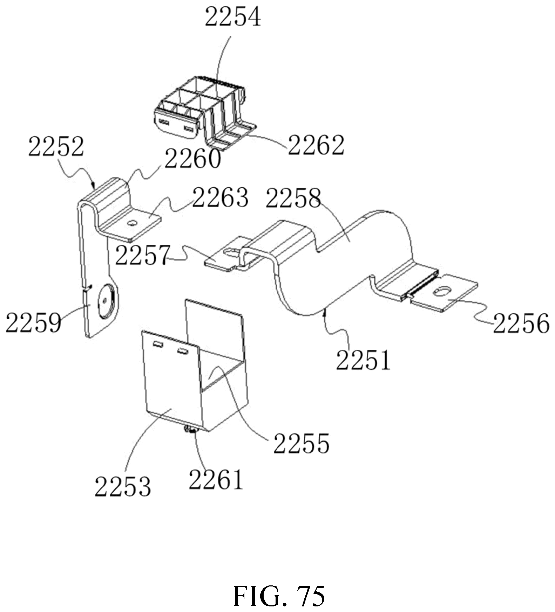

Furthermore, in an embodiment of the present disclosure, as shown in FIGS. 1 to 76, the battery tray 20 includes a base plate 23 and a structural beam 22 arranged on the base plate 23. The structural beam 22 includes a side beam structure 25, and the side beam structure 25 includes at least two tray transverse side beams 221 and at least two tray longitudinal side beams 222. The tray transverse side beams 221 and the tray longitudinal side beams 222 are connected end to end in sequence to form a frame-shaped structure. The frame-shaped structure is connected to the base plate 23 to form the battery tray 20. The structural beam 22 is adapted to partition the battery tray 20 into a battery accommodating space 21 and an electrical accommodating space 28. Specifically, the electrical accommodating cavity 28 is defined in the tray transverse side beam 221 and/or the tray longitudinal side beam 222, and the battery accommodating space 21 is enclosed by the tray transverse side beams 221, the tray longitudinal side beams 222 and the base plate 23. The design of the battery accommodating space 21 and the electrical accommodating space 28 can improve the integration level in the battery pack, thereby increasing the volumetric utilization rate and energy density of the battery pack.

Further, the structural beam 22 further includes a tray transverse beam 223 and/or a tray longitudinal beam 224. The tray transverse beam 223 and/or the tray longitudinal beam 224 is/are located in the space enclosed by the tray transverse side beams 221, the tray longitudinal side beams 222, and the base plate 23. The tray transverse beam 223 and/or the tray longitudinal beam 224 partitions the space into a plurality of battery accommodating spaces 21.

In another embodiment of the present disclosure, the structure of the battery tray 20 is the same as that of the above embodiment, with the difference that the structural beam 22 further includes a tray transverse beam 223 and/or a tray longitudinal beam 224. The tray transverse beam 223 and/or the tray longitudinal beam 224 can partition the space enclosed by the tray transverse side beams 221, the tray longitudinal side beams 222, and the base plate 23 into a battery accommodating space 21 and an electrical accommodating space 28. The battery accommodating space 21 is configured to place battery modules, and the electrical accommodating space 28 is configured to place electrical components such as the power distribution box 40a and a BMS.

To further illustrate, the battery pack 10 further includes a power distribution box 40a. The power distribution box 40a is placed in the electrical accommodating space 28. The power distribution box 40a and the battery modules are arranged separately. When the battery module 30 located in the battery accommodating space 21 experiences thermal runaway, it will not affect the power distribution box 40a placed in the electrical accommodating space 28. This ensures that the power distribution box 40a can operate normally without being affected by the battery module 30, thereby improving electrical safety of the battery pack 10.

In an embodiment, each of the battery modules includes a plurality of battery cells 101, and the battery cells 101 are arranged on the battery tray 20 in an insulated manner.

In an embodiment, an insulating adhesive is arranged between adjacent battery cells 101; and/or a first insulating layer 201 is arranged between the structural beam 22 and the battery cells 101; and/or a second insulating layer is arranged in the power distribution box 40a; and/or the battery pack 10 further includes a cooling plate 60, and a third insulating layer is arranged between the cooling plate 60 and the battery cells 101.

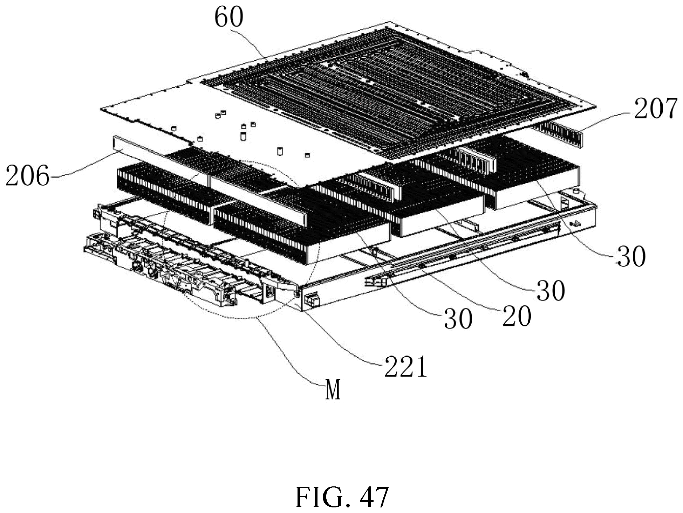

As shown in FIGS. 47 to 56, a first insulating layer 201 is arranged on the inner wall of the battery tray 20, a plurality of battery cells 101 are all arranged in the battery tray 20, and a heat insulator is arranged between at least two adjacently arranged battery cells 101. The battery cell connector 207 is adapted to electrically connect different electrical components. The insulating adhesive 206 covers a portion of the surface of at least one battery cell connector 207.

For example, in the examples shown in FIGS. 47 to 50, a plurality of battery cells 101 are arranged in sequence in the battery tray 20 along the length direction of the battery tray 20. A heat insulator is arranged between every two adjacent battery cells 101 to block heat transfer between the two adjacent battery cells 101, preventing heat from transferring to the adjacent battery cell 101 after a single battery cell 101 experiences thermal runaway, thereby avoiding overall ignition of the battery pack 10 and improving the usage safety of the battery pack 10.

The inner wall of the battery tray 20 will be understood as the wall of the battery tray 20 on the side facing the battery accommodating space 21 in the battery pack 10. For example, when the battery pack 10 has a battery accommodating space 21 for accommodating the battery cells 101 and/or an electrical accommodating space 28 for accommodating the power distribution box 40a, the inner wall includes the wall of the battery tray 20 that defines the battery accommodating space 21 and/or the wall of the battery tray 20 that defines the electrical accommodating space 28.

By arranging the first insulating layer 201 on the inner wall of the battery tray 20 facing the battery cells 101, the insulation of the battery tray 20 is improved, which can further prevent the overall arcing and ignition of the battery pack 10, thereby enhancing the usage safety of the battery pack 10.

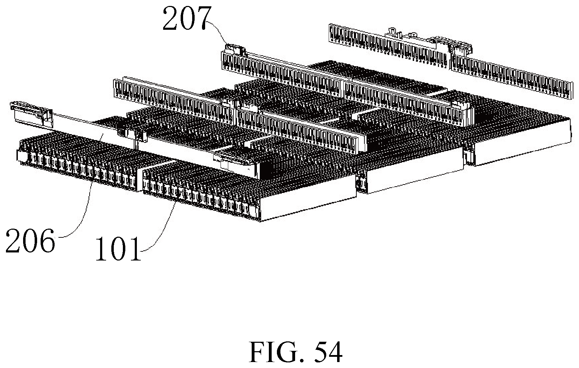

For example, in the examples shown in FIGS. 54 to 56, at least a portion of the battery cell connector 207 is wrapped with the insulating adhesive 206. For example, the insulating adhesive 206 may only wrap the connection position between the battery cell connector and the battery cell 101, i.e., the high-voltage region of the battery pack 10; or the insulating adhesive 206 may cover the outer peripheral surface of the battery cell connector 207. As a supplement to the first insulating layer 201, the insulating adhesive 206 can further enhance the insulation property and heat insulation property of the battery tray 20, thereby further improving the usage safety of the battery pack 10.

It should be noted that the electrical components may include a battery cell 101, a battery module 30 having a plurality of battery cells 101, a power distribution box 40a, a battery management system (BMS), and the like. Different electrical components electrically connected by the battery cell connector 207 may be a battery cell 101 and another battery cell 101, a battery cell 101 and a battery module 30, a battery module 30 and a power distribution box 40a, a battery module 30 and a BMS, and the like.

It should be noted that since the battery cell connector 207 needs to reserve the contact position for electrical connection with electrical components uncovered by the insulating adhesive 206, the insulating adhesive 206 covers a portion of the surface of the battery cell connector 207, rather than the entire surface. For example, the insulating adhesive 206 covers a portion of the surface of the battery cell connector 207; specifically, for the battery cell connector 207 that electrically connects a battery cell 101 to another battery cell 101, the insulating adhesive 206 may only cover the region near the electrical connection position between the battery cell connector 207 and the pole of the battery cell 101 (the electrical connection contact position is not covered). Alternatively, the insulating adhesive 206 may cover the entire surface of the battery cell connector 207 except for the electrical connection contact position. The fact that the insulating adhesive 206 covers a portion of the surface of at least one battery cell connector 207 will be understood as follows: when one battery cell connector 207 is arranged, the insulating adhesive 206 covers a portion of the surface of this single battery cell connector 207; when a plurality of battery cell connectors 207 are arranged, the insulating adhesive 206 covers a portion of the surface of one of the battery cell connectors 207 or a portion of the surface of a plurality of battery cell connectors 207. The insulating adhesive 206 can further enhance the insulation property and heat insulation property of the battery pack 10, thereby further improving the usage safety of the battery pack 10.

According to the battery pack 10 of the embodiment of the present disclosure, a heat insulator 202 is arranged between at least two adjacently arranged battery cells 101, a first insulating layer 201 is arranged on the inner wall surface of the battery tray 20, and an insulating adhesive 206 is wrapped around the battery cell connector. These measures enhance the safety of various parts of the battery pack 10, such as the insulation between the battery tray 20 and the battery cell 101, between the battery tray 22 and the battery cell connector 207, and between one battery cell connector 207 and another battery cell connector 207, as well as the heat insulation between the battery cells 101. Thus, the overall reliability of the battery pack 10 is improved, thereby preventing the overall arcing and ignition of the battery pack 10 caused by the thermal runaway of a certain battery cell 101, greatly enhancing the usage safety of the battery pack 10.

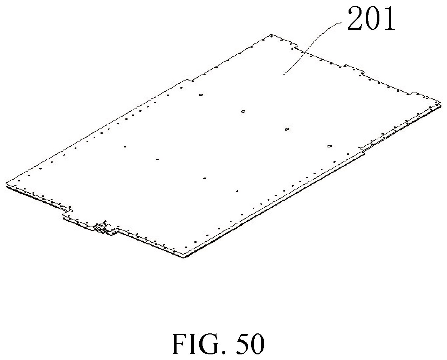

According to some embodiments of the present disclosure, the battery tray 20 includes at least one battery accommodating space 21 and at least one electrical accommodating space 28. The battery cells 101 are arranged in the battery accommodating space 21, and a power distribution box 40a is arranged in the electrical accommodating space 28. First insulating layers 201 are respectively arranged on the inner wall of the battery tray 20 facing the power distribution box 40a and on the inner wall of the battery tray 20 facing the battery cells 101. Referring to FIGS. 47 and 50, one battery accommodating space 21 and two electrical accommodating spaces 28 are arranged on the battery tray 20. The two electrical accommodating spaces 28 are located on two sides of the battery tray 20 in the length direction. A plurality of battery cells 101 are mounted in the battery accommodating space 21, a power distribution box 40a is mounted in each of the electrical accommodating spaces 28, and the power distribution boxes 40a are electrically connected to a plurality of battery cells 101.

By arranging the first insulating layer 201 on the inner wall that defines the electrical accommodating space 28, insulation protection can be applied to the inner wall of the electrical accommodating space 28, which prevents the current generated by the power distribution box 40a from being transmitted to the battery tray 20, and also prevents the fire of the power distribution box 40a from spreading to the battery cells 101, thereby further improving the usage safety of the battery pack 10. By arranging a first insulating layer 201 on the inner wall of the battery tray 20 facing the battery cells 101, insulation protection can be applied to the inner wall of the battery accommodating space 21. This in turn prevents the high-temperature and high-pressure electrolyte from splashing onto the battery tray 20 after the battery cells 101 fail, which would otherwise cause the overall arcing and ignition of the battery pack 10, thus further enhancing the usage safety of the battery pack 10.

Further, the battery tray 20 includes a base plate 23 and interconnected structural beams 22. The base plate 23 and the structural beams 22 jointly define the battery accommodating space 21. First insulating layers 201 are respectively arranged on the surface of the base plate 23 on the side facing the battery accommodating space 21 and the surfaces of each of the structural beams 22 on the side facing the battery accommodating space 21. The surface of the base plate 23 on the side facing the battery accommodating space 21 and the surfaces of each of the structural beams 22 on the side facing the battery accommodating space 21 constitute at least a portion of the inner wall. Referring to FIG. 50, the interconnected structural beams 22 enclose a rectangular annular frame, and the base plate 23 is arranged at one end of the structural beams 22 in the height direction (for example, the up-down direction in FIG. 50), thereby defining the battery accommodating space 21. In this case, the inner wall of the battery accommodating space 21 includes the surface of the base plate 22 on the side facing the battery accommodating space 21 and the surfaces of each of the structural beams 22 on the side facing the battery accommodating space 21. First insulating layers 201 are arranged on the surface of the base plate 23 and the surface of the structural beams 22 on the side facing the battery accommodating space 21, which improves the insulation of the surfaces of the battery tray 20 facing the battery accommodating space 21, thereby effectively preventing the overall arcing and ignition of the battery pack 10, further enhancing the usage safety of the battery pack 10.

Further, the structural beam 22 partitions the space inside the battery tray 20 into a plurality of battery accommodating spaces 21, and a second insulating layer is arranged on the surface of the structural beam 22 facing the battery accommodating spaces 21. With this arrangement, a plurality of battery cells 101 inside the battery tray 20 can be separated from each other, which improves the insulation between the battery tray 20 and the battery cells 101, also prevents the heat in the battery accommodating spaces 21 from increasing due to an excessive number of battery cells 101 in each of the battery accommodating spaces 21, thus avoiding the overall arcing and ignition of the battery pack 10, greatly enhancing the usage safety of the battery pack 10.

According to some embodiments of the present disclosure, referring to FIG. 50, the battery tray 20 includes a plurality of partition beams. The plurality of partition beams may be tray longitudinal beams 224 and tray transverse beams 223. The tray longitudinal beams 224 extend along a first direction (for example, the left-right direction in FIG. 50), and the tray transverse beams 223 extend along a second direction (for example, the front-back direction in FIG. 50). The tray transverse beams 223 and tray longitudinal beams 224 partition a battery accommodating space 21 into a plurality of battery accommodating spaces 21. A plurality of battery cells 101 are respectively arranged in the plurality of battery accommodating spaces 21, and the plurality of battery cells 101 are arranged along the second direction. The first direction is the length direction of the battery tray 20, the second direction is the width direction of the battery tray 20, and second insulating layers are respectively arranged on each of the surfaces of the tray longitudinal beams 224 and the tray transverse beams 223 that face the battery accommodating spaces 21.

The dimension of the battery tray 20 in the length direction is greater than the dimension in the width direction.

For example, in the example shown in FIG. 50, the plurality of partition beams include one tray longitudinal beam 224 and two tray transverse beams 223. The tray longitudinal beam 224 is located at the central axis of a battery accommodating space 21 in the second direction, and the two tray transverse beams 223 are spaced apart along the first direction. By the cooperation of the two tray transverse beams 223 and one tray longitudinal beam 224, a battery accommodating space 21 is partitioned into six battery accommodating spaces 21, thereby separating the plurality of battery cells 101 inside the battery tray 20, which prevents the thermal runaway of the battery cells 101 in one battery accommodating space 21 from spreading to the adjacent battery accommodating spaces 21, thereby avoiding a chain thermal runaway caused by the thermal runaway of a certain battery cell 101, simultaneously preventing short circuits between the partition beams and the battery cells 101 or the electrolyte.

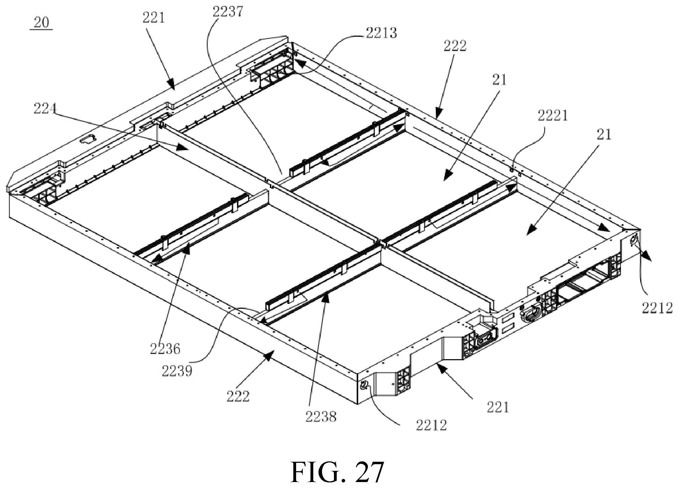

Further, as shown in FIGS. 27 to 30, in an embodiment, the tray transverse beam 223 is formed with a third bayonet 2231, and the tray longitudinal beam 224 is formed with a fourth bayonet 2241. The third bayonet 2231 of the tray transverse beam 223 engages with the fourth bayonet 2241 of the tray longitudinal beam 224 to partition the battery tray 20 into a plurality of battery accommodating spaces 21.

To further illustrate, the structural beam 22 further includes tray transverse beams 223 and tray longitudinal beams 224, and both the tray transverse beams 223 and the tray longitudinal beams 224 are arranged inside the battery tray 20. In the embodiment, two tray transverse beams 223 are arranged, specifically a first tray transverse beam 2236 and a second tray transverse beam 2238. However, in actual manufacturing, the number of tray transverse beams 223 and tray longitudinal beams 224 can be increased or decreased as required. Taking the connection between the first tray transverse beam 2236 and the tray longitudinal beam 224 as an example, the first tray transverse beam 2236 is formed with a third bayonet 2231, and the tray longitudinal beam 224 is formed with a fourth bayonet 2241. The third bayonet 2231 of the first tray transverse beam 2236 engages with the fourth bayonet 2241 of the tray longitudinal beam 224, so that the first tray transverse beam 2236 and the tray longitudinal beam 224 form a cross-shaped connection. This partitions the space inside the battery tray 20 into a plurality of battery accommodating spaces 21. This eliminates the need to cut off the first tray transverse beam 2236 or the tray longitudinal beam 224, so the battery tray 20 has better structural strength. Similarly, the third bayonet 2231 of the second tray transverse beam 2238 engages with another fourth bayonet 2241 of the tray longitudinal beam 224, avoiding the need for cutting as well. After the first tray transverse beam 2236 and the second tray transverse beam 2238 are engaged with the tray longitudinal beam 224, a plurality of battery accommodating spaces 21 are partitioned on two sides of the tray longitudinal beam 224.

In an embodiment, a thermally conductive structural adhesive may be arranged between the bottom of the battery cell 101 and the base plate 23 of the battery tray 20, while the battery cell 101 is firmly fixed to the battery tray 20, the heat from the battery cell 101 can be transferred to the base plate 23 through the thermally conductive structural adhesive, and then transferred from the base plate 23 to the external environment, thereby achieving heat dissipation of the battery pack 10.

According to some embodiments of the present disclosure, an electrical accommodating space 28 is formed in the structural beam 22, and a first insulating layer 201 is arranged on the inner wall defining the electrical accommodating space 28. As shown in FIG. 50, electrical accommodating spaces 28 are formed on the structural beam 22 at least at one end of the battery tray 20 in the first direction. One end of each of the electrical accommodating spaces 28 in the first direction is open, and the power distribution box 40a can be mounted into the electrical accommodating space 28 through the open side. This separates the power distribution box 40a in the electrical accommodating space 28 from the battery cells 101 in the battery accommodating space 21, preventing the power distribution box 40a from catching fire due to high-temperature and high-pressure electrolyte splashing onto the power distribution box 40a after the battery cells 101 fail, or preventing the battery cells 101 from undergoing thermal runaway due to the power distribution box 40a catching fire, avoiding the mutual influence between the power distribution box 40a and the battery cells 101, avoiding short circuits between the power distribution box 40a and the battery tray 20, and improving the usage safety of the battery pack 10.

According to some embodiments of the present disclosure, the first insulating layer 201 is an epoxy resin layer.

According to some embodiments of the present disclosure, the second insulating layer is an epoxy resin layer.

Epoxy resin has advantages such as strong adhesion, high structural strength, good heat resistance and electrical insulation properties. Employing an epoxy resin layer as the first insulating layer 201 and/or the second insulating layer can enhance the insulation of the inner surface of the inner peripheral surface of the battery tray 20, thereby improving the usage safety of the battery pack 10.

According to some embodiments of the present disclosure, the thickness of the first insulating layer 201 is 0.1 cm to 0.5 cm.

According to some embodiments of the present disclosure, the thickness of the second insulating layer is 0.1 cm to 0.5 cm.

Setting the first insulating layer 201 and/or the second insulating layer within the thickness range can ensure insulation property while avoiding excessive occupation of the space of the battery pack 10 by the second insulating layer.

In some optional embodiments, a cooling plate 60 is further included. The cooling plate 60 is arranged on the top of the battery tray 20, and a fifth insulating layer 205 is arranged on the side of the cooling plate 60 facing a plurality of battery cells 101, and the fifth insulating layer 205 is the third insulating layer. A liquid, such as water or another substance with good thermal conductivity, is injected with the cooling plate 60. The cooling plate 60 can absorb the heat generated by the battery cells 101 and transfer the heat to the surrounding environment, or can transfer the heat of the heat-conducting liquid to the battery cells 101 to adjust the temperature of the battery cells 101, so that the temperature of the battery cells 101 remains stable, thereby ensuring the normal operation of the battery pack 10. By arranging the fifth insulating layer 205 on the cooling plate 60, the side of the cooling plate 60 facing the battery cells 101 can be insulated and protected, preventing current from being transferred to the cooling plate 60, thereby improving the usage safety of the cooling plate 60 and further enhancing the usage safety of the battery pack 10.

According to some embodiments of the present disclosure, both the first insulating layer 201 and the fifth insulating layer 205 are epoxy resin layers. Epoxy resin has advantages such as strong adhesion, high structural strength, good heat resistance and electrical insulation properties. Employing epoxy resin layers as the first insulating layer 201 and the fifth insulating layer 205 can enhance the insulation property of the inner peripheral surface of the battery tray 20 and the inner surface of the cooling plate 60, thereby further improving the usage safety of the battery pack 10.

According to some embodiments of the present disclosure, the thickness of the fifth insulating layer 205 is 0.1 cm to 0.5 cm, thus ensuring the insulation property of the first insulating layer 201 and the second insulating layer, so as to improve the usage safety of the battery pack 10.

According to some embodiments of the present disclosure, the battery pack 10 includes a plurality of battery cell connectors 207, and the battery cell connectors are electrically connected between the battery cells 101. The insulating adhesive 206 covers a portion of the surface of the battery cell connector 207. Thus, short circuit between the battery cell connector 207 and other components can be avoided, thereby improving the usage stability and safety of the battery pack 10.

According to some embodiments of the present disclosure, the insulating adhesive 206 is filled in the battery tray 20 and covers a portion of the surface of the battery cell connector 207. Thus, electrical interference between different electrical components in the battery pack 10 can be further avoided, improving the safety of the battery pack 10.

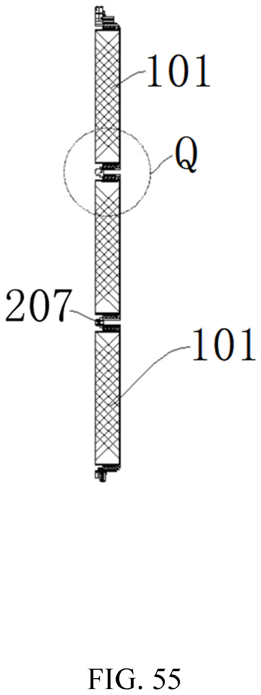

Further, as shown in FIGS. 54 and 55, a plurality of battery cells 101 are arranged in each of the battery accommodating spaces 21 along the width direction of the battery cells 101. It should be noted that the dimension in the length direction of the battery cell 101 is greater than that in the width direction, and the dimension in the thickness direction of the battery cell 101 is greater than that in the width direction. The battery cell connector 207 is arranged between at least one end of the battery cell 101 in the length direction and the structural beam 22 or the partition beam, and the space between at least one end of the battery cell 101 in the length direction and the structural beam 22 or the partition beam is filled with insulating adhesive 206. That is, the battery cell connector 207 is arranged between the battery cell 101 and the structural beam 22; or the battery cell connector 207 is arranged between the battery cell 101 and the partition beam. The insulating adhesive 206 can be filled between the battery cell 101 and the battery cell connector 207, between the battery cell connector 207 and the structural beam 22, or between the battery cell connector 207 and the partition beam. Thus, the battery cell connector 207 is separated from the battery cell 101, the structural beam 22 or the partition beam, enhancing the insulation property between the battery cell connector 207 and the battery cell 101, the structural beam 22 or the partition beam, and further improving the usage safety of the battery pack 10.

According to some embodiments of the present disclosure, a heat insulator 202 is arranged between two adjacent battery cells 101. With this arrangement, battery cells 101 are arranged on two sides of each of the heat insulators 202 in the thickness direction, thereby separating the two adjacent battery cells 101, and further preventing heat transfer from a single battery cell 101 to the adjacent battery cell 101 after the single battery cell 101 experiences thermal runaway, so as to avoid overall fire of the battery pack 10.

In some optional embodiments, a plurality of battery cells 101 are configured into a plurality of battery modules 30, and each of the battery modules 30 includes a plurality of battery cells 101. For example, in the examples of FIG. 47 and FIGS. 54 to 56, six battery modules 30 are arranged, and each of the battery modules 30 is arranged in the corresponding battery accommodating space 21. The battery pack 10 includes a plurality of battery cell connectors 207, and the battery modules 30 are connected between different battery modules 30. With this arrangement, different battery modules 30 are electrically connected using the battery cell connectors 207, ensuring the electrical connection stability between the plurality of battery modules 30, thereby improving the integrity and usage stability of the battery pack 10.

In some optional embodiments, the heat insulator 202 is an aerogel member or a glass fiber member. The aerogel member has advantages such as low density, high structural strength, and high temperature resistance. The glass fiber member has advantages such as strong structure, good non-heat resistance, strong corrosion resistance, and good insulation property. Employing the aerogel member or the glass fiber member as the heat insulator 202 can realize the lightweight design of the battery pack 10, improve the heat insulation capability of the heat insulator 202, and at the same time, the aerogel member or the glass fiber member has relatively low cost.

Further, the heat insulator 202 includes a first heat insulating section 203 and two second heat insulating sections 202. The two second heat insulating sections 202 are respectively arranged at the two ends of the first heat insulating section 203 in the length direction, and the thickness of the first heat insulating section 203 is greater than that of the second heat insulating section 202. That is, the heat insulator 202 is thick in the middle and thin at the edges of the two ends in the length direction. Thus, the thickness of the edges of the heat insulator 202 is reduced, and it has an edge-sealing effect on the heat insulator 202. While ensuring the heat insulation effect of the heat insulator 202, when the heat insulator 202 is damaged, the heat insulator 202 can be handled by the second heat insulating section 202 to realize the replacement of the heat insulator 202. Optionally, the heat insulator 202 is bonded with double-sided tape, and is connected to the battery cell 101 through the double-sided tape.

In some optional embodiments, the insulating adhesive 206 is potting adhesive. The potting adhesive is in a liquid state before curing, has fluidity, and is easy to fill. After being fully cured, the potting adhesive can play the functions of waterproofing and moisture-proofing, dust-proofing, insulation, heat conduction, confidentiality, anti-corrosion, temperature resistance, and shock-proofing. Thus, employing potting adhesive as the insulating adhesive 206 can enhance the encapsulation of the battery cell connector 207.

In related technologies, the batteries in the battery pack exhaust gas when thermal runaway occurs. If this portion of the gas is not discharged from the battery pack, it will affect the safety of other batteries. Therefore, in the embodiment of the present disclosure, as shown in FIGS. 27 to 30, the structural beam 22 includes a tray longitudinal side beam 222. The tray transverse beam 223 has a first exhaust cavity, and the tray longitudinal side beam 222 has a second exhaust cavity. The first exhaust cavity communicates with the second exhaust cavity, the battery accommodating space 21 inside the battery tray 20 communicates with the first exhaust cavity, and the second exhaust cavity communicates with the space outside the battery tray 20.

Referring to FIGS. 27 to 30, the structural beam 22 defines the space inside the battery tray 20. In other words, the structural beam 22 serves as the boundary between the inside and the outside of the battery tray 20. In the embodiment, the structural beam 22 includes paired tray longitudinal side beams 222 and tray transverse side beams 221. The rectangular space enclosed after the tray longitudinal side beams 222 and the tray transverse side beams 221 are connected is the inside of the battery tray 20. The structural beam 22 can also include more side beams to form shapes such as pentagons and hexagons, which are not specifically limited in the embodiment.

To further illustrate, the first tray transverse beam 2236 has a first exhaust cavity and a third exhaust hole 2232. The tray longitudinal side beam 222 has a second exhaust cavity. The first exhaust cavity of the first tray transverse beam 2236 communicates with the second exhaust cavity of the tray longitudinal side beam 222, and the third exhaust hole 2232 of the first tray transverse beam 2236 faces the battery accommodating space 21, so that the battery accommodating space 21 inside the battery tray 20 communicates with the first exhaust cavity, while the second exhaust cavity communicates with the space outside the battery tray 20. The above-mentioned communication method can be realized by means of exhaust holes, or by other suitable methods, such as partially opening the exhaust cavity. The exhaust path is shown with dashed arrows in FIG. 27, once the batteries accommodated in the battery accommodating space 21 generate gas, the gas will pass through the third exhaust hole 2232, the first exhaust cavity, the second exhaust cavity, and the exhaust channel 2212 to be discharged out of the battery pack 10, thereby improving the safety of the battery pack 10. The communication method between the second tray transverse beam 2238 and the tray longitudinal side beam 222 is similar to that of the first tray transverse beam 2236, so it will not be repeated here.

In an embodiment, the first exhaust cavity includes a first cavity 2233, a second cavity 2234, and a third cavity 2235. The first cavity 2233 communicates with the third cavity 2235 through the second cavity 2234. The width of the second cavity 2234 is smaller than that of the first cavity 2233, and the width of the second cavity 2234 is also smaller than that of the third cavity 2235. The first cavity 2233 communicates with the battery accommodating space 21.

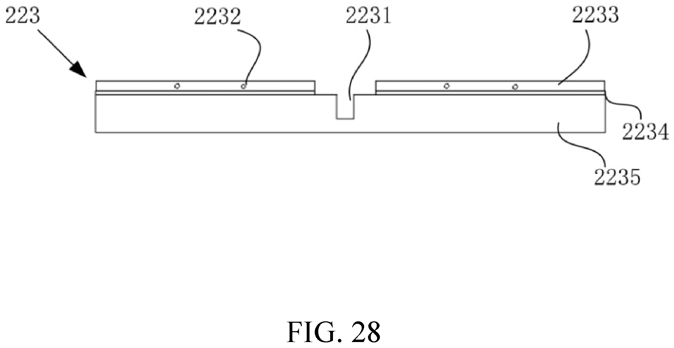

As shown in FIG. 28, the first exhaust cavity includes a first cavity 2233, a second cavity 2234, and a third cavity 2235, and the first cavity 2233 communicates with the third cavity 2235 through the second cavity 2234. The width of the second cavity 2234 is smaller than that of the first cavity 2233, and the width of the second cavity 2234 is also smaller than that of the third cavity 2235. The first cavity 2233 is in communication with the battery accommodating space 21 through the third exhaust hole 2232 or other suitable structures. The advantage of this structure is that the gas in the battery accommodating space 21 first enters the first cavity 2233, and then is blocked at the second cavity 2234. If the pressure of the gas entering the first cavity 2233 from a certain third exhaust hole 2232 is relatively high, the gas will first undergo pressure equalization in the first cavity 2233, and then enter the third cavity 2235 through the second cavity 2234, thus preventing the third cavity 2235 from further squeezing the batteries in the battery accommodating space 21 due to local excessive air pressure. The structures of the first cavity 2233, the second cavity 2234, and the third cavity 2235 of the second tray transverse beam 2238 are similar to those of the first tray transverse beam 2236, so it will not be repeated here.

In an embodiment, the tray transverse beam 223 includes a first tray transverse beam 2236 and a second tray transverse beam 2238. A first interval space 2237 is arranged between the first cavity 2233 of the first tray transverse beam 2236 and the tray longitudinal beam 224, and a second interval space 2239 is arranged between the first cavity 2233 of the second tray transverse beam 2238 and the tray longitudinal side beam 222.

As shown in FIG. 27 and FIG. 28, the difference between the first tray transverse beam 2236 and the second tray transverse beam 2238 lies in that the first cavity 2233 of the first tray transverse beam 2236 reduces by a length toward the two ends at the position of the first bayonet 22431, while the first cavity 2233 of the second tray transverse beam 2238 reduces by a length toward the direction of the first bayonet 22431 at the positions of the two ends. Therefore, after the first tray transverse beam 2236, the second tray transverse beam 2238 and the tray longitudinal beam 224 are connected, a first interval space 2237 is arranged between the first cavity 2233 of the first tray transverse beam 2236 and the tray longitudinal beam 224, and a second interval space 2239 is arranged between the first cavity 2233 of the second tray transverse beam 2238 and the tray longitudinal side beam 222. To prevent gas leakage inside the battery tray 20, the first cavity 2233 of the first tray transverse beam 2236 is sealed at the first interval space 2237, and the first cavity 2233 of the second tray transverse beam 2238 is sealed with a plug cover at the second interval space 2239. Alternatively, the first cavity 2233 of the first tray transverse beam 2236 can also serve as an open air intake structure at the first interval space 2237, similarly, the first cavity 2233 of the second tray transverse beam 2238 can also serve as an open air intake structure at the second interval space 2239, which is configured to allow the gas in the battery accommodating space 21 to enter. In other words, for each of the battery accommodating spaces 21, the first interval space 2237 and the second interval space 2239 are arranged diagonally. The first interval space 2237 and the second interval space 2239 are configured to enable wiring routing between the batteries in each of the battery accommodating spaces 21. Moreover, for the tray longitudinal side beam 222, the exhaust cross-sections of the first tray transverse beam 2236 and the second tray transverse beam 2238 at their communication positions with it are different, which is conducive to forming a pressure difference in the second exhaust cavity and making it easier for high-pressure gas to be discharged to the external environment of the battery pack 10.

In an embodiment, the first cavity 2233 of the first tray transverse beam 2236 extends to the tray longitudinal side beam 222, and the first cavity 2233 of the second tray transverse beam 2238 extends to the tray longitudinal beam 224.

More specifically, the first cavity 2233 of the first tray transverse beam 2236 extends to the tray longitudinal side beam 222, while the first cavity 2233 of the second tray transverse beam 2238 extends to the tray longitudinal beam 224. This structure is conducive to the formation of the pressure difference mentioned above on the one hand, and ensures the overall structural strength of the battery tray 20 as much as possible on the other hand.

In an embodiment, the tray longitudinal side beam 222 has a first exhaust hole 2221, and the first exhaust hole 2221 communicates the battery accommodating space 21 inside the battery tray 20 with the second exhaust cavity.

In an embodiment, the tray longitudinal side beam 222 has a first exhaust hole 2221. The first exhaust hole 2221 communicates the battery accommodating space 21 inside the battery tray 20 with the second exhaust cavity. In this way, a portion of the gas can directly enter the second exhaust cavity and then be discharged to the outside of the battery pack 10.

In an embodiment, the distance between the first exhaust hole 2221 and the position where the first exhaust cavity communicates with the second exhaust cavity is less than the first threshold.

To further illustrate, the distance between the first exhaust hole 2221 and the position where the first exhaust cavity communicates with the second exhaust cavity is less than the first threshold, and the first threshold can be a suitable value such as 2cm or 5cm. In other words, relative to the two ends of the tray longitudinal side beam 222, the first exhaust hole 2221 is closer to the connection position between the first tray transverse beam 2236 (or the second tray transverse beam 2238) and the tray longitudinal side beam 222. This is conducive to the centralized convergence of gas, preventing the tray longitudinal side beam 222 from having an excessive number of air leakage points, and can avoid poor exhaust caused by the compression of the second exhaust cavity due to the reduced structural strength of the tray longitudinal side beam 222, because the connection position between the first tray transverse beam 2236 (or the second tray transverse beam 2238) and the tray longitudinal side beam 222 has higher structural strength.

In an embodiment, below the third bayonet 2231, the first exhaust cavity is communicated.

To further illustrate, below the third bayonet 2231 of the second tray transverse beam 2238, the first exhaust cavity is communicated. This enables the high-pressure gas generated by the batteries in the battery accommodating space on either side of the tray longitudinal beam 224 to be discharged in two directions as shown by the dashed line with arrows in FIG. 27, thereby improving the exhaust efficiency.

In an embodiment, at the clamping joint between the third bayonet 2231 and the fourth bayonet 2241, the tray transverse beam 223 and the tray longitudinal beam 224 are connected by welding.

To further illustrate, at the clamping joint between the third bayonet 2231 and the fourth bayonet 2241, the first tray transverse beam 2236 and the tray longitudinal beam 224 are connected by welding to improve the connection strength. The welding method between the second tray transverse beam 2238 and the tray longitudinal beam 224 is similar to that of the first tray transverse beam 2236, so it will not be repeated here.

In an embodiment, the structural beam 22 further includes a tray transverse side beam 221, and the tray transverse side beam 221 is formed with an exhaust channel 2212. The exhaust channel 2212 communicates the second exhaust cavity with the space outside the battery tray 20.

To further illustrate, the structural beam 22 further includes a tray transverse side beam 221. The tray transverse side beam 221 is formed with an exhaust channel 2212, and the exhaust channel 2212 communicates the second exhaust cavity with the space outside the battery tray 20. A separate explosion-proof valve 27 can be arranged at the position of the exhaust channel 2212, or an explosion-proof structure can be formed by locally thinning the tray transverse side beam 221 to replace the explosion-proof valve 27. As shown in the gas flow path indicated by the dashed line with arrows in FIG. 27, the gas generated by the batteries in the battery accommodating space 21 enters the first cavity 2233, the second cavity 2234, and the third cavity 2235 of the first exhaust cavity through the third exhaust hole 2232, then enters the second exhaust cavity, and is then discharged to the space outside the battery tray 20 through the exhaust channel 2212, thus ensuring the normal air pressure in the battery pack 10.

In an embodiment, the tray transverse side beam 221 is further formed with a second exhaust hole 2213, and the second exhaust hole 2213 joins the exhaust channel 2212 with the battery accommodating space 21 of the battery tray 20.

To further illustrate, the tray transverse side beam 221 is further formed with a second exhaust hole 2213, and the second exhaust hole 2213 communicates the exhaust channel 2212 with the battery accommodating space 21 of the battery tray 20. In this way, a portion of the gas generated by the batteries closest to the tray transverse side beam 221 can be directly discharged to the space outside the battery tray 20.

At least one of the side beam structure 25 and the tray transverse beam 223 corresponding to each of the battery accommodating spaces 21 is formed with a first exhaust port, a second exhaust port, and an exhaust channel 2212 communicating the first exhaust port and the second exhaust port. The first exhaust port is configured to guide the gas in the battery accommodating space 21 into the exhaust channel 2212, and the second exhaust port is configured to discharge the gas in the exhaust channel 2212. That is to say, each of the battery accommodating spaces 21 is correspondingly formed with at least one first exhaust port.

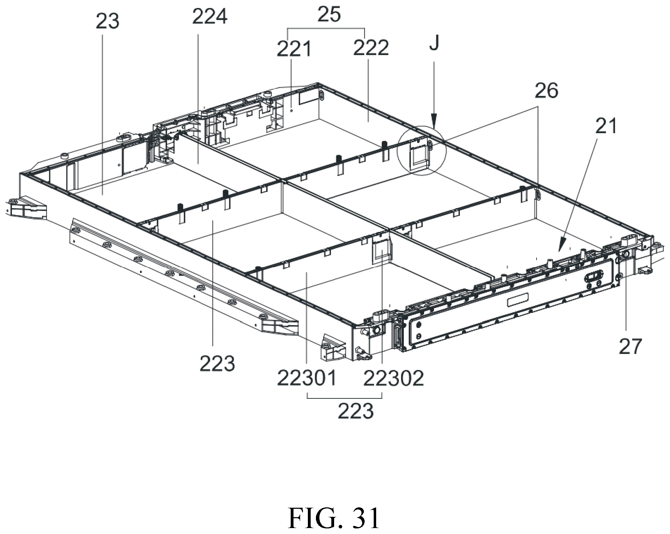

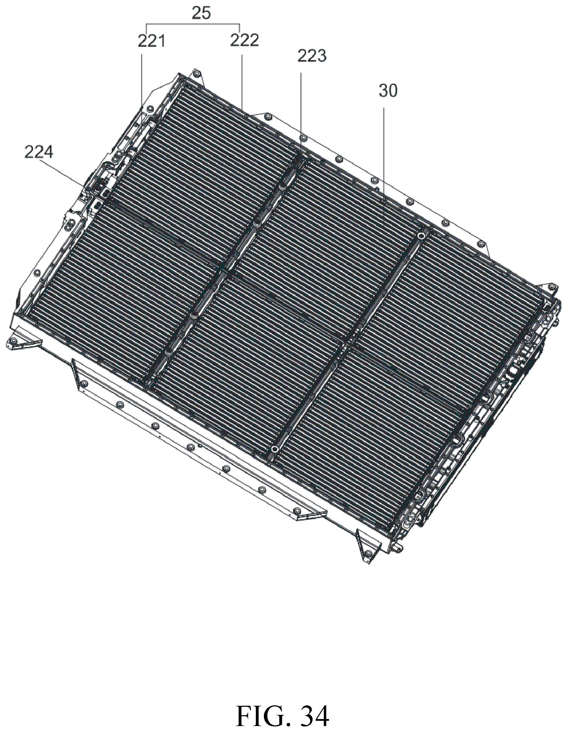

In an embodiment of the present disclosure, as shown in FIGS. 31 and 34, the interior of the side beam structure 25 is configured as an exhaust channel 2212, and a first exhaust port is arranged on the side of the side beam structure 25 close to the tray transverse beam 223, and a second exhaust port is arranged on the side of the side beam structure 25 away from the tray transverse beam 223. The first exhaust port communicates the battery accommodating space 21 with the exhaust channel 2212. The first exhaust port is configured to guide the gas in the battery accommodating space 21 into the exhaust channel 2212. The second exhaust port is configured to discharge the gas in the exhaust channel 2212.

In addition, due to the blocking and heat-insulating effects of the tray transverse beam 223, it can achieve spatial and thermal isolation of high-temperature gas, reducing heat diffusion. This prevents the battery modules 30 in other battery accommodating spaces 21 from being affected by thermal runaway, and effectively avoids secondary damage to the battery modules 30 or adverse impacts on other battery modules 30 caused by the high-temperature gas.

In an embodiment, a top plate is further included, and the top plate is connected to the side beam structure 25 and the tray transverse beam 223 in a sealed manner, so that the battery accommodating space 21 forms a sealed cavity.

To further illustrate, the battery tray 20 further includes a top plate. The top plate is arranged opposite to the base plate 23, and the side beam structure 25 and the tray transverse beam 223 are arranged between the top plate and the base plate 23. The top plate covers the battery accommodating space 21. The top plate is connected to the side of the side beam structure 25 and the side of the tray transverse beam 223 that are away from the base plate 23 in a sealed manner. The sealed connection can be, for example, welding, bonding, etc., so that the battery accommodating space 21 forms a sealed cavity.

By arranging the top plate to cover the battery accommodating space 21, the battery accommodating space 21 forms a sealed cavity. Once the battery module 30 in a certain battery accommodating space 21 experiences thermal runaway, the gas generated by the battery module 30 can directly enter the exhaust channel 2212 through the first exhaust port correspondingly arranged in the battery accommodating space 21, and then be discharged through the second exhaust port, thereby improving the exhaust effect.

In addition, during the exhaust process, each of the battery accommodating spaces 21 is independent, and the exhaust process in the battery accommodating space 21 where the battery module 30 with thermal runaway is located will not affect the battery modules 30 in other battery accommodating spaces 21, thereby improving the safety of the battery modules 30.

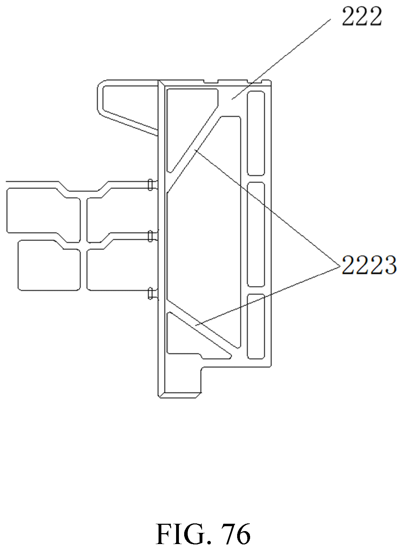

Furthermore, in an embodiment of the present disclosure, as shown in FIG. 76, a figure-eight reinforcing rib 2223 is arranged inside the tray longitudinal side beam 222. The large opening end formed by the figure-eight reinforcing rib 223 faces the side of the tubular member close to the battery accommodating space 21, and the small opening end formed by the figure-eight reinforcing rib 2223 faces the side of the exhaust channel away from the battery accommodating space 21.

In an embodiment, a one-way valve 26 is arranged at the first exhaust port, and the one-way valve 26 is configured to guide the gas in the battery accommodating space 21 into the exhaust channel 2212.

To further illustrate, each of the battery accommodating spaces 21 is correspondingly arranged with at least one one-way valve 26.

In the present disclosure, an exhaust channel 2212 is arranged inside the side beam structure 25, and each of the battery accommodating spaces 21 is correspondingly arranged with at least one exhaust port. Each of the exhaust ports is arranged with a one-way valve 26, and the one-way valve 26 is configured to guide the gas in the battery accommodating space 21 into the exhaust channel 2212.

By arranging the one-way valve 26, it is ensured that the high-temperature gas or electrolyte vapor generated when the battery cell is in thermal runaway can only be discharged from the battery accommodating space 21 into the exhaust channel 2212, and the gas in the exhaust channel 2212 will not flow back into the battery accommodating space 21. This improves the exhaust efficiency of the battery tray 20 when the battery cell is in thermal runaway, and reduces the possibility of fire and explosion of the package due to poor exhaust and gas channeling.

In an optional embodiment, the structural beam partitions the battery tray 20 into a plurality of battery accommodating spaces 21. A positive terminal and a negative terminal of the battery module 30 in each of the battery accommodating spaces 21 are arranged diagonally in the battery accommodating space 21.

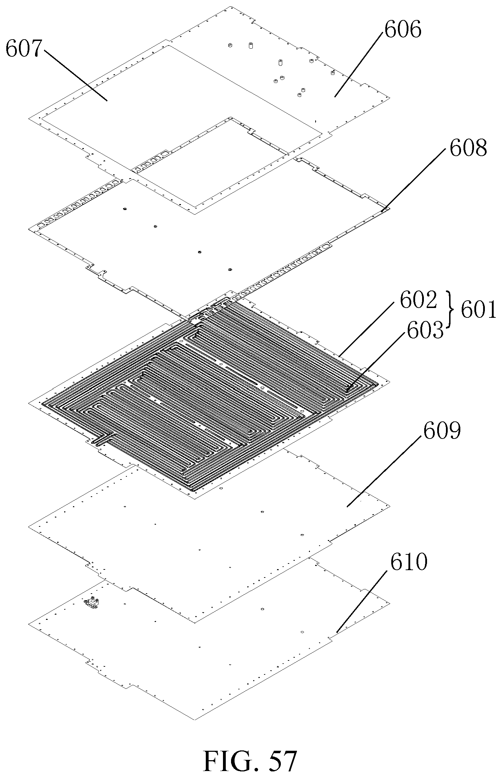

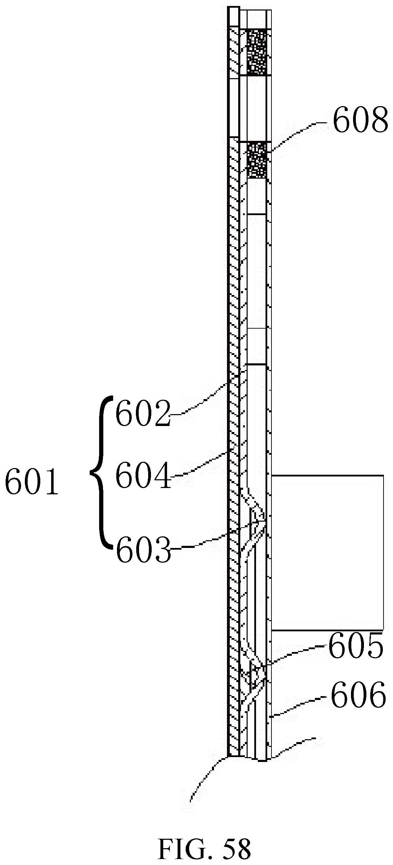

In an embodiment of the present disclosure, as shown in FIGS. 57 and 58, the battery pack further includes a cooling plate, and the cooling plate can be arranged in the battery pack. The upper surface and/or lower surface of the cooling plate 60 is a flat surface, thereby ensuring the connection reliability between the battery and the cooling plate.

To improve the integration level of the battery pack, in an embodiment of the present disclosure, the cooling plate serves as a top plate and is fixedly connected to the battery tray.

Further, the cooling plate 60 includes a flow channel plate 601. The two sides of the flow channel plate 601 in the thickness direction are a first side plate 602 and a second side plate 604 respectively. The first side plate 602 has a protrusion 603, and the protrusion 603 and the second side plate 604 jointly define a flow channel 605. Specifically, the two sides of the flow channel plate 601 in the thickness direction are a first side and a second side respectively, and the first side has a protrusion 603. For example, the flow channel plate 601 includes a first side plate 1602 and a second side plate 604 arranged in the thickness direction, and the protrusion 603 and the second side plate 604 jointly define the flow channel 605.

A sealing plate 606 is included. The sealing plate 606 is arranged on the side of the flow channel plate 601 close to the first side plate 602. Specifically, the sealing plate 606 is arranged on the first side of the flow channel plate 601, and the orthographic projection of the sealing plate 606 on the flow channel plate 601 covers at least a portion of the protrusion 603.

A support 608 is included. The support 608 is supported between the flow channel plate 601 and the sealing plate 606. Specifically, the support 608 being supported between the flow channel plate 601 and the sealing plate 606 means that the support 608 abuts against the flow channel plate 601 and the sealing plate 606.

As shown in FIGS. 57 and 58, the cooling plate 60 according to the embodiment of the present disclosure includes a flow channel plate 601, a sealing plate 606, and a support 608.

Specifically, the two sides of the flow channel plate 601 in the thickness direction are a first side and a second side respectively. For example, the flow channel plate 601 includes a first side plate 602 and a second side plate 604 arranged in the thickness direction, and the first side plate 602 has a protrusion 603. The sealing plate 606 is arranged on the first side of the flow channel plate 601. The support 608 is arranged between the flow channel plate 601 and the sealing plate 606, and the support 608 is supported in the region other than the protrusion 603 on the first side of the flow channel plate 601. That is to say, the first side of the flow channel plate 601 has a protrusion 603 and a non-protruding portion (the non-protruding portion refers to the region other than the protrusion 603 on the first side of the flow channel plate 601), and a support 608 is arranged between the non-protruding portion and the sealing plate 606, and the support 608 is supported between the non-protruding portion and the sealing plate 606. Understandably, "the support 608 is supported in the region other than the protrusion 603 on the first side of the flow channel plate 601" can mean that the support 608 is only supported between a partial region of the non-protruding portion and the sealing plate 606, or that the support 608 is supported between the entire region of the non-protruding portion and the sealing plate 606. In some embodiments, when the sides of the protrusion 603 and the support 608 close to the sealing plate 606 form a surface, the support 608 being supported in the region other than the protrusion 603 on the first side of the flow channel plate 601 means that the surface of the support 608 close to the sealing plate 606 is at least flush with the surface of the protrusion 603 away from the second side plate 604. For example, the surface of the support 608 close to the sealing plate 606 may be exactly flush with the surface of the protrusion 603 away from the second side plate 604, or the surface of the support 608 close to the sealing plate 606 may be slightly higher than the surface of the protrusion 603 away from the second side plate 604.

The flow channel plate 601 has a flow channel 605, and water or other fluids with good thermal conductivity can be injected into the flow channel 605 of the flow channel plate 601, so that the flow channel plate 601 can absorb the heat generated by components in contact with it (such as battery cells), or can transfer the heat of the heat-conducting liquid to the components in contact with it to adjust the temperature of the above components and maintain the temperature of the above components stable. The flow channel plate 601 has a protrusion 603 on the first side. For example, due to weight restrictions, the thickness of the flow channel plate 601 is thinner in the region where the flow channel 605 is not arranged. In the region where the flow channel 605 is arranged, since it is necessary to leave a certain space inside for the flow channel 605, the protrusion 603 is formed at the position of the flow channel. In addition, other components (e.g., fasteners, etc.) may also form the protrusion 603 on the flow channel plate 601.

The flow channel plate 601 can be formed integrally or formed by fixing two independently-formed side plates together. For example, in the examples of FIGS. 57 and 58, the cooling plate 60 can be mounted above the battery tray 20, and at this time, the flow channel plate 601 includes a first side plate 602 and a second side plate 604. The first side plate 602 of the flow channel plate 601 is away from the battery tray 20, and the second side plate 604 of the flow channel plate 601 is close to the battery tray 20. The protrusion 603 of the first side plate 602 extends in a direction away from the second side plate 604, the second side plate 604 can be a flat plate, and the protrusion 603 and the second side plate 604 jointly define the flow channel 605. The first side plate 602 and the second side plate 604 are independently formed and then fixed together to form the flow channel plate 601.

In an embodiment, the orthographic projection of the sealing plate 606 on the flow channel plate 601 covers at least a portion of the protrusion 603. It may be that the orthographic projection of the sealing plate 606 on the flow channel plate 601 covers the entire protrusion 603, or that the orthographic projection of the sealing plate 606 on the flow channel plate 601 covers a portion of the protrusion 603. "Cover" can mean full coverage or partial coverage of the protrusion 603. Specifically, referring to FIG. 1, when the thickness direction of the flow channel plate 601 is the same as the vertical direction and the first side is above the second side, a sealing plate 606 is above at least a portion of the protrusion 603. In addition, the orthographic projection of the sealing plate 606 on the flow channel plate 601 may also cover the region other than the protrusion 603 of the flow channel plate 601. It should be noted that since the flow channel plate 601 is not a flat plate, when understanding the meaning of the orthographic projection of the sealing plate 606 on the flow channel plate 601, the flow channel plate 601 will be approximately understood as a flat plate coplanar with the flat portion of the actual flow channel plate 601.

The sealing plate 606 is a plate configured to seal the cooling plate 60 with external structures, and is configured to provide a flat surface for sealing the heat exchange plate 60 with external structures. For example, the external structure may be a vehicle body, and the heat exchange plate 60 is sealed with the vehicle body through the sealing plate 606 to isolate the passenger compartment from the outside and prevent air, water, etc. from entering the passenger compartment.

The protrusion 603 may be configured to form the flow channel 605 of the flow channel plate 601. In this case, the flow channel 605 is formed at the position of the protrusion 603, and the flow channel 605 is arranged corresponding to the protrusion 603; alternatively, the protrusion 603 may also correspond to other structures other than the flow channel 605, which is not specifically limited here.

For example, the protrusion 603 is configured to form the flow channel 605 of the flow channel plate 601, and the flow channel 605 is formed at the position of the protrusion 603, the flow channel 605 is arranged corresponding to the protrusion 603, and the support 608 may be arranged in the gap between the flow channels 605 (not shown in the figure); alternatively, the support 608 is arranged at the edge of the flow channel plate 601 (as shown in FIG. 57); or alternatively, the support 608 is arranged both in the gap between the flow channels 605 and at the edge of the flow channel plate 601. The support 608 may be arranged in a staggered manner with the flow channels 605 on the flow channel plate 601. The sealing plate 606 is located on the side of the support 608 away from the flow channel plate 601.

The support 608 is supported between the flow channel plate 601 and the sealing plate 606. Understandably, the surface of the support 608 close to the sealing plate 606 is at least flush with the end of the protrusion 603 away from the second side. The surface of the support 608 close to the sealing plate 606 may be exactly flush with the end of the protrusion 603 away from the second side, or the surface of the support 608 close to the sealing plate 606 may be slightly higher than the end of the protrusion 603 away from the second side plate 604.

The sealing plate 606 is a plate configured to seal the cooling plate 60 with external structures, and is configured to provide a flat surface for sealing the cooling plate 60 with external structures. For example, the external structure may be a vehicle body, and the cooling plate 60 is sealed with the vehicle body through the sealing plate 606. At this time, to ensure the sealing between the sealing plate 606 and the vehicle body, a sealing member may also be arranged between the sealing plate 606 and the vehicle body, such as sealing foam.

Referring to FIG. 58, by making the surface of the support 608 close to the sealing plate 606 at least flush with the surface of the protrusion 603 away from the second side plate 604, the support 608 can be configured to fill the height difference caused by the protrusion 603. In other words, the flow channel plate 601 has a protrusion 603 and a non-protruding portion on the first side, and a height difference between the protrusion 603 and the non-protruding portion is arranged. The arrangement of the support 608 can fill the height difference between the protrusion 603 and the non-protruding portion. For example, when the flow channel 605 is arranged corresponding to the protrusion 603, a height difference is formed between the sealing plate 606 and the position of the first side plate 602 other than the flow channel 605, and the height difference can be filled at least at the position where the support 608 is arranged, so that the sealing plate 606 can be attached to the support 608. Thus, by using the support 608 to support the sealing plate 606, the flow channel plate 601 can have a flat surface sealed with the external structure without special design of the structures of the cooling plate 60 and the sealing plate 606 (the special design is, for example, to thicken or bend the non-protruding portion of the flow channel plate 601, or to thicken or bend the position of the sealing plate 606 corresponding to the non-protruding portion of the flow channel plate 601), thus realizing the sealed connection between the battery pack 10 and the vehicle body.

According to the cooling plate 60 of the embodiment of the present disclosure, by arranging the support 608 between the flow channel plate 601 and the sealing plate, and by making the surface of the support 608 close to the sealing plate 606 at least flush with the surface of the protrusion 603 away from the second side, the sealing plate 606 can be flatly mounted on the flow channel plate 601 without special design of the structures of the cooling plate 60 and the sealing plate 606, which increases the flatness of the sealing plate 606. Thus, when the battery pack 10 is applied to a vehicle, the contact area between the battery pack 10 and the vehicle body is increased, thereby realizing the sealed connection between the battery pack 10 and the vehicle body.

In addition, in an embodiment of the present disclosure, the orthographic projection of the sealing plate 606 on the flow channel plate 601 covers at least a portion of the protrusion 603, that is to say, the sealing plate 606 can provide more portions of flat surface for sealing the cooling plate 60 with external structures. By supporting the support 608 between the flow channel plate 601 and the sealing plate 606, the support 608 can be configured to fill the height difference caused by the protrusion 603, and the sealing plate 606 can be easily mounted without special design of the structure of the flow channel plate 601 or the sealing plate 606 (the special design is, for example, to thicken the region of the flow channel plate 601 where the flow channel is not arranged, or to thicken or bend the position of the sealing plate 606 corresponding to the region of the flow channel plate 601 where the flow channel is not arranged). Thus, the sealed connection between the battery pack and the vehicle body can be realized, and the preparation process of the cooling plate 60 can be simplified. Generally speaking, in order to improve the heat exchange efficiency of the heat exchange plate in a limited space, the region of the flow channel plate that is arranged with a flow channel occupies most of the flow channel plate, and only a small portion of the region is left without a flow channel or with only a small number of flow channels. The protrusions formed by the flow channel or other components make the regions with the flow channel difficult to be configured to seal with external structures, while the small regions without a flow channel or with only a small number of flow channels make it difficult to provide sufficient region for the heat exchange plate to be fixedly connected and/or sealed with other structures (such as the battery tray, the vehicle body, etc.). According to the cooling plate 60 of the embodiment of the present disclosure, the orthographic projection of the sealing plate 606 on the flow channel plate covers at least a portion of the protrusion 603, the support 608 is arranged between the flow channel plate 601 and the sealing plate, and support 608 is supported between the flow channel plate 601 and the sealing plate 606. Thus, the sealing plate 606 can be mounted flatly on the flow channel plate 601 without requiring special design of the structures of the cooling plate 60 and the sealing plate 606. This improves the flatness of the sealing plate 606, thereby increasing the area of the cooling plate 60 available for sealing with external structures. When the cooling plate 60 is applied to the battery pack of a vehicle, it increases the contact area between the battery pack and the vehicle body, further achieving a sealed connection between the battery pack and the vehicle body.

According to some embodiments of the present disclosure, the flow channel plate 601 has a flow channel 605, and the flow channel 605 is arranged corresponding to the protrusion 603. The flow channel 605 being arranged corresponding to the protrusion 603 will be understood as the flow channel 605 being formed at the position of the protrusion 603, and the protrusion 603 can be a portion of the structure defining the flow channel 605. In this way, the support 608 can fill the height difference between the flow channel 605 and the non-flow channel region, thereby simplifying the preparation process of the flow channel plate 601 and facilitating the sealed connection between the battery pack 10 and the vehicle body.

According to some embodiments of the present disclosure, referring to FIG. 57, the flow channel plate 601 includes a flow channel region and a non-flow channel region. The flow channel 601 includes a flow channel region and a non-flow channel region. The non-flow channel region is arranged on a peripheral side of the flow channel plate 601 surrounding the flow channel region. The flow channel region is arranged with a flow channel 605. The non-flow channel region may have no flow channels at all, or only a small number of flow channels. At least a portion of the protrusion 603 corresponds to the flow channel 605 and the orthographic projection of the sealing plate 606 on the flow channel plate 601 covers at least a portion of the non-flow channel region and at least a portion of the flow channel region.

Specifically, the orthographic projection of the sealing plate 606 on the flow channel plate 601 covers at least a portion of the non-flow channel region, and the orthographic projection of the sealing plate 606 on the flow channel plate 601 can cover a portion of the non-flow channel region or all of the non-flow channel region. The orthographic projection of the sealing plate 606 on the flow channel plate 601 covers at least a portion of the flow channel region, and the orthographic projection of the sealing plate 606 on the flow channel plate 601 can cover a portion of the flow channel region or all of the flow channel region. When the thickness direction of the flow channel plate 601 is the same as the vertical direction, and the first side is above the second side, the sealing plate 606 extends from above the non-flow channel region to above the flow channel region.

Understandably, in order to improve the heat exchange efficiency of the heat exchange plate in a limited space, generally, the region of the flow channel plate that is arranged with a flow channel occupies most of the flow channel plate, and only a small portion of the region is left without a flow channel or with only a small number of flow channels. That is to say, the width dimension of the non-flow channel region is usually small, making it difficult to provide sufficient area for the heat exchange plate to be fixedly connected with other structures (such as the battery tray, the vehicle body, etc.). In particular, for vehicles using Cell-to-Body (CTB) technology, the upper part of the battery pack needs to be sealed with the entire vehicle's body to form a passenger compartment and an external non-passenger compartment. When the heat exchange plate is applied above the battery pack, the surface of the flow channel region is uneven due to the presence of flow channels, making it difficult to be configured to fix or seal with the battery pack and/or the vehicle body, while the area of the non-flow channel region is small, and the width of the remaining non-flow channel region is narrow except for the region configured to be fixed with the battery tray, and it is difficult to provide sufficient area for sealing with the vehicle body. By the structural design of the flow channel plate 601, sealing plate 606, and support 608, the area of the cooling plate 60 for sealing with external structures (such as the vehicle body) can be increased, and the sealing effect can be improved, thereby ensuring the reliability and safety of the battery pack and the vehicle.

According to some embodiments of the present disclosure, the support 608 is supported between the non-flow channel region and the sealing plate. That is to say, the support 608 is arranged in a position corresponding to the non-flow channel region (the region other than the protrusion 603 on the first side of the flow channel plate 601).

According to some embodiments of the present disclosure, the support 608 is of a frame-shaped structure, and the support 608 is arranged corresponding to the non-flow channel region, or the flow channel plate 601 and the sealing plate 606 are connected in a sealed manner by the support 608. That is to say, the flow channel plate 601 and the sealing plate 606 are connected at the position of the support 608 in a sealed manner. With this arrangement, the support 608 supports the edge of the sealing plate 606 on the outer peripheral side of the entire flow channel 605. While increasing the stability of the sealing plate 606, the support 608 has a simple structure, facilitating processing and reducing the weight of the cooling plate 60. In an embodiment, the support 608 can be formed by welding and assembling a plurality of frame members together; and further in an embodiment, the support 608 can be formed by brazing and assembling four frame members together.

According to some embodiments of the present disclosure, an opening 607 penetrating along the thickness direction of the flow channel plate 601 is formed on the sealing plate 606, and the opening 607 is arranged in a position corresponding to the passenger compartment of the vehicle. Referring to FIGS. 57 and 58, a rectangular opening 607 is formed through the sealing plate 606, and the size of the opening 607 roughly corresponds to the size of the passenger compartment of the vehicle. This can reduce the weight of the cooling plate 60, and at the same time, the passenger compartment of the vehicle corresponds to the flow channel plate 601, so that the heat or cold of the passenger compartment can be utilized for heat exchange with the flow channel plate 601, thereby indirectly enabling heat exchange between the heat and cold of the passenger compartment and the battery cells, and improving the heat exchange efficiency of the battery pack 10. In addition, the portion of the sealing plate 606 where the opening 607 is not formed serves as a fixing point for fixing the cooling plate 60 to the components of the entire vehicle, so that the cooling plate 60 and the non-passenger compartment of the vehicle body can be easily connected, and the battery pack 10 can be stably mounted on the vehicle body while ensuring that the sealing member has good structural strength.

In some optional embodiments, referring to FIG. 57, the cooling plate 60 further includes a temperature equalizing plate 609, and the temperature equalizing plate 609 is arranged on the second side of the flow channel plate 601. For example, the temperature equalizing plate 609 is arranged on the second side plate 604. By arranging the temperature equalizing plate 609 on the second side plate 604 of the flow channel plate 601, the heat in the flow channel 605 is uniformly distributed on the temperature equalizing plate 609 through thermal conduction, and then the temperature equalizing plate 609 is configured to adjust the temperature of the battery cells, ensuring the temperature consistency of the battery cells in the battery pack 10.

In some embodiments, a seventh insulating layer 610 is arranged on the surface of the temperature equalizing plate 609 away from the flow channel plate 601. As shown in FIG. 57, the seventh insulating layer 610 is arranged on the side of the temperature equalizing plate 609 away from the flow channel plate 601, and is arranged facing the battery cells. By arranging the seventh insulating layer 610, the insulation protection performance of the temperature equalizing plate 609 is effectively enhanced, thereby preventing thermal runaway of the battery cells from being transmitted to the temperature equalizing plate 609 and causing arcing and fire, and further improving usage safety of the battery pack 10.

In some optional embodiments, the sealing plate 606, the support 608, the flow channel plate 601 and the temperature equalizing plate 609 are connected into an integrated structure by welding. The type of welding is not particularly limited, in some optional embodiments, the sealing plate 606, the support 608, the flow channel plate 601 and the temperature equalizing plate 609 can be connected into an integrated structure by brazing. Brazing technology is a method that employs a material with a lower melting point than the base metal as the brazing filler metal. It involves heating the workpieces and the brazing filler metal to a temperature higher than the melting point of the brazing filler metal but lower than that of the base metal (keeping the base metal in a solid state). The liquid brazing filler metal then fills the joint gap through its wetting action and diffuses with the base metal to achieve the connection of the welded workpieces. Common types of brazing include soldering, brazing with copper, and lead coating. The sealing plate 606, the support 608, the flow channel plate 601 and the temperature equalizing plate 609 are connected into an integrated structure by brazing, which has the advantages of low heating temperature, minimal deformation of the flow channel plate 601, the sealing plate 606, the support 608 and the temperature equalizing plate 609, flat and neat joints, and high production efficiency.

In some optional embodiments, the flow channel plate 601 includes a first side plate 602 and a second side plate 604 arranged in the thickness direction of the flow channel plate 601. The first side plate 602 has a protrusion 603, and the protrusion 603 and the second side plate 604 jointly define the flow channel 605. In this way, the structure and preparation process of the flow channel plate 601 can be simplified.

According to the embodiment of the present disclosure, the battery pack 10 includes a battery tray 20, a top cooling plate and a battery module 30. The first cooling plate is the cooling plate 60 in the above-mentioned embodiment of the present disclosure, and the cooling plate 60 and the battery tray 20 enclose a battery accommodating space 21. The battery module 30 is accommodated in the battery accommodating space 21. The cooling plate 60 is arranged on the top of the battery tray 20, and the cooling plate 60 is in contact with the top of the battery. The battery accommodating space 21 of the battery tray 20 is adapted to place batteries. The cooling plate 60 seals one side of the battery tray 20 in the thickness direction, and the cooling plate 60 can exchange heat with the battery module 30, thereby realizing heat regulation of the battery module 30, maintaining a stable internal temperature of the battery pack 10, and ensuring the normal operation of the battery pack 10. For example, the top of the battery tray 20 is open, the cooling plate in the above-mentioned embodiment of the present disclosure is arranged at the position of the top opening of the battery tray 20, the battery tray 20 and the cooling plate 60 enclose to form a battery accommodating space 21, the battery accommodating space 21 is located below the flow channel plate 601, and the battery module 30 is accommodated in the battery accommodating space 21.

According to the battery pack 10 in the embodiment of the present disclosure, the temperature of the battery pack 10 is adjusted by employing the cooling plate 60, thereby ensuring the normal operation of the battery pack 10.

In some optional embodiments, the first cooling plate is arranged on the top of the battery tray 20. The battery pack 10 further includes a second cooling plate, and the second cooling plate is arranged on the bottom of the battery tray 20. Thus, cooling plates are respectively arranged on the top and bottom of the battery pack 10, thereby improving the efficiency of temperature regulation inside the battery pack 10 and further improving the usage stability of the battery pack 10.

In an embodiment of the present disclosure, a plurality of battery cells are generally connected in series to form a battery string, and thus the overall voltage of the battery string becomes excessively high. Therefore, it is necessary to ensure the safety under high voltage of the entire battery pack. As shown in FIGS. 1 to 13, in an optional embodiment, the battery module 30 includes at least one set of first battery modules and second battery modules. The power distribution boxes include a first power distribution box 40 and a second power distribution box 41. The first power distribution box 40 is connected in series between the first battery module and the second battery module. The second power distribution box 41 is configured to output electrical power externally, and the second power distribution box 41 is communicatively connected to the first power distribution box 2. The first power distribution box 2 is configured to respond to a signal from the second power distribution box 41 to connect or disconnect the first battery module and the second battery module.

To further illustrate, as shown in FIGS. 1 to 13, the battery module 30 includes a first battery module and a second battery module, and the power distribution boxes include a first power distribution box 40 and a second power distribution box 41. The first power distribution box 40 is connected in series between the first battery module and the second battery module. The circuit between the first battery module and the second battery module can be connected or disconnected by the first power distribution box 40. The second power distribution box 41 is connected to the first power distribution box 40. The second power distribution box 41 is configured to output electrical power externally, thereby regulating the electrical energy within the battery pack. The first power distribution box 40 is configured to respond to a signal from the second power distribution box 41 to connect or disconnect the first battery module and the second battery module. This eliminates the need for an external battery management module to control the operation of the power distribution boxes. During assembly or repair of the battery pack 10, the disconnection or connection of the first power distribution box 40 can be controlled directly by the second power distribution box 41, thereby disconnecting the first battery module and the second battery module by the first power distribution box 40. This allows the entire pack to be split into two equal portions, and the total voltage is also halved, thus reducing the overall pack voltage when disconnected. This mitigates safety risks for operating personnel and reduces the risk of high-voltage arcing when the battery pack 10 fails.

In an embodiment, the first power distribution box 40 includes a first switch module 403. The first switch module 403 is connected in series between the first battery module and the second battery module and is communicatively connected to the second power distribution box 41.

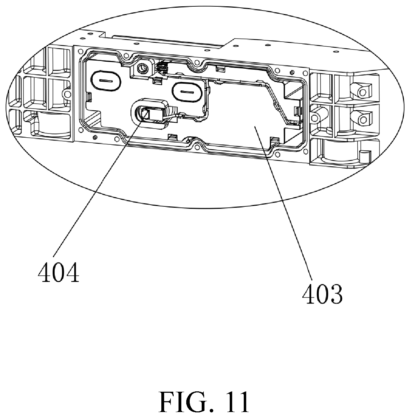

As shown in FIG. 11, the first power distribution box 40 includes a first switch module 403. The first switch module 403 is connected in series between the first battery module and the second battery module. The first switch module 403 can disconnect or close the connection between the first battery module and the second battery module. The first switch module 403 is also connected to the second power distribution box 41, and the second power distribution box 41 can control the disconnecting and closing of the first switch module 403.

To further illustrate, the negative terminal of the first switch module 403 is connected to the positive terminal of the first battery module, and the positive terminal of the first switch module 403 is connected to the negative terminal of the second battery module. Thereby, the first switch module 403 can be connected in series between the first battery module and the second battery module.

To further explain, the first switch module 403 can be a relay, an intelligent fuse, or a circuit board with a control function, so long as it can achieve the disconnection or connection between the first battery module and the second battery module by means of controlling the switching ON and OFF of the first switch module 403.

In an embodiment, the second power distribution box 41 includes a battery management module. The battery management module is communicatively connected to the first switch module 403. The battery management module is configured to send control commands to control the connection or disconnection of the first switch module 403.

The Battery Management System (BMS) is a device that monitors the status of energy storage batteries. Its primary functions include intelligently managing and maintaining individual battery cells, preventing battery overcharge and over-discharge, extending battery service life, and monitoring battery status.

To further illustrate, the second power distribution 3 includes a battery management module, and the battery management module is communicatively connected to the first switch module 403, so that the disconnecting and closing of the first switch module 403 can be controlled by the battery management module. When the battery management module detects a fault in the battery pack 10, or during assembly or repair, it can control the first switch module 403 by the battery management module to disconnect the first battery module from the second battery module. Alternatively, when it is necessary to connect the first battery module to the second battery module, it also controls the first switch module 403 by the battery management module to connect the first battery module to the second battery module.

In another embodiment, the battery management module is communicatively connected to the first switch module 403. The battery management module is configured to send data commands, and the first switch module 403 is configured to respond to these data commands and connect or disconnect the first battery module and the second battery module based on the data commands.

In an embodiment, the first power distribution box 40 further includes a second switch module 404. The second switch module 404 is connected in series between the first battery module and the second battery module, and the second switch module 404 is adapted to disconnect when a preset parameter reaches a threshold.

To further illustrate, if a short circuit or excessive temperature occurs in either the first battery module or the second battery module, the circuit between the first battery module and the second battery module can be disconnected by the second switch module 404, thereby preventing accidents and enhancing the safety of the battery pack 10.

To further illustrate, the second switch module 404 can be selected as a fuse, a self-resetting fuse, etc. When the current in the circuit reaches a certain level or the temperature becomes excessively high, the second switch module 404 will automatically disconnect. A self-resetting fuse can be selected, after the fault in the battery pack 10 is resolved, the self-resetting fuse can resume operation.

To ensure the safety between the first power distribution box, the second power distribution box, and the battery, the electrical accommodating space for mounting the power distribution boxes is isolated from the battery accommodating space for mounting the battery in the present disclosure. Further, the first power distribution box 40 and the second power distribution box 41 are arranged in different electrical accommodating spaces 21. The electrical accommodating space 21 has an opening. The opening of the electrical accommodating space 21 where the first power distribution box 40 is arranged and the opening of the electrical accommodating space 21 where the second power distribution box 41 is arranged face in opposite directions.

In configurations with the battery management system, the first power distribution box 40 can also be equipped with components such as high-voltage relays, circuit breakers, fuses, and low-voltage relays, which is configured to control the external output of the battery and ensure the safety of the battery.

In an embodiment, a first connecting hole (not shown in the figures) is arranged on the second power distribution box 41, and a second connecting hole 2211 is arranged on the tray transverse side beam 221.

The first battery module and the second battery module are connected to the second power distribution box 41 through the first connecting hole and the second connecting hole 2211.

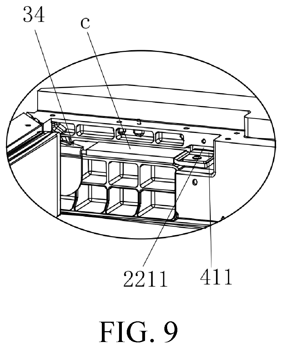

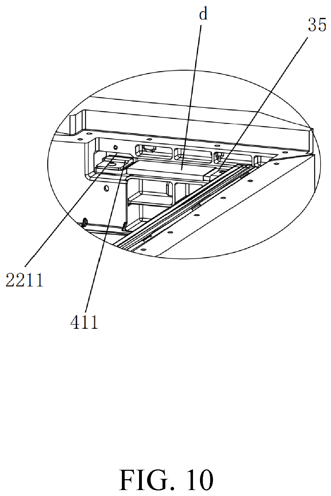

To further illustrate, as shown in FIGS. 9 and 10, a first connecting hole is arranged on the side wall of the second power distribution box 41 adjacent to the cavity, a second connecting hole 2211 is arranged on the side wall of the tray transverse side beam 221 adjacent to the second power distribution box 41, and the position of the first connecting hole corresponds to that of the second connecting hole 2211. A connector of the battery module 30 can extend into the interior of the second power distribution box 41 through the first connecting hole and the second connecting hole 2211 to connect with a connector inside the second power distribution box 41. This arrangement allows the battery accommodating space 21 and the second power distribution box 41 to be separated while facilitating the connection between the battery module 30 and the second power distribution box 41.

In an embodiment, sealing members are arranged at the position of the first connecting hole and the second connecting hole 2211.

To further illustrate, after the connection between the second power distribution box 41 and the battery module 30 is completed, the first connecting hole and the second connecting hole 2211 are sealed with the sealing members, thereby achieving spatial isolation between the battery tray 20 and the second power distribution box 41.

Further, in other embodiments, only one power distribution box may be arranged inside the battery pack. This power distribution box is electrically connected to the positive and negative terminals of the battery string and to the output port of the battery pack, thereby controlling the external output performance of the battery pack.

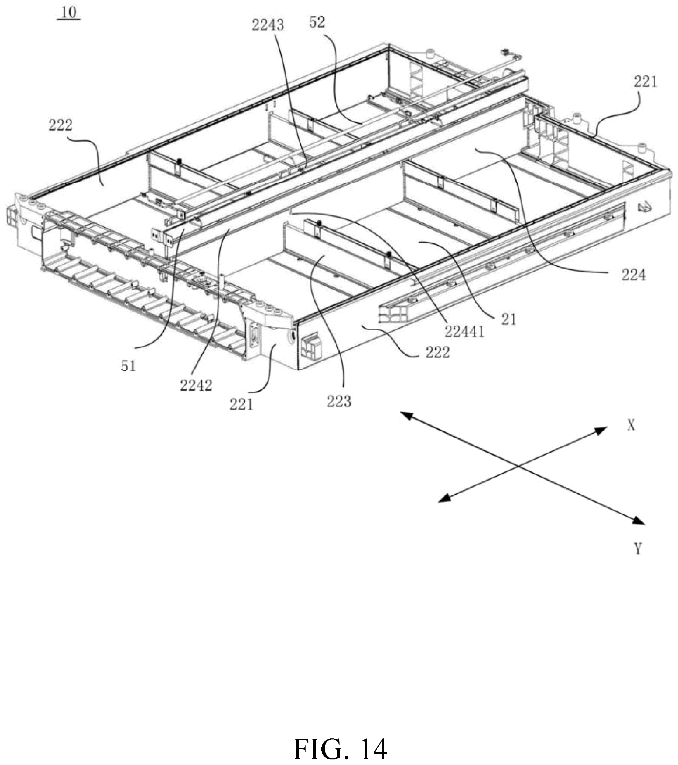

To ensure the neatness and safety of the first power distribution box, the second power distribution box, and related sampling wire harnesses or connecting wire harnesses, when the first power distribution box and the second power distribution box are respectively arranged on both sides of the battery tray, as shown in FIGS. 14 to 18, in an optional embodiment, the battery pack 10 further includes a battery wire harness. The side of the structural beam 22 away from the battery tray 20 is arranged with an accommodating groove 2244, and the battery wire harness is accommodated in the accommodating groove 2244 and insulated from the structural beam 22. The open side of the accommodating groove 2244 is arranged away from the battery tray 20. Moreover, in configurations with two distribution boxes, the above technical solution can also be employed in other application scenarios to ensure the neatness of the wire harnesses.

To further illustrate, the battery pack 10 further includes a battery wire harness. The battery wire harness is accommodated within the accommodating groove 2244 of the structural beam 22 and is insulated from the structural beam 22. Therefore, most of the battery wire harness can be protected by the structural beam 22, and when the battery module 30 in the battery accommodating space 21 experiences thermal runaway, the adverse effects on the battery wire harness will be mitigated. Similarly, accommodating the battery wire harness within the accommodating groove 2244 of the structural beam 22 can also mitigate the adverse effects of the thermal runaway of the battery module 30 on the battery module 30. In addition, the open side of the accommodating groove 2244 is arranged away from the battery tray 20, and the open side is arranged on the side of the structural beam 22 away from the battery tray 20 to facilitate the mounting of the battery wire harness.

The battery wire harness may be in the form of a metal busbar or may be in the form of a cylindrical cable. Regarding this, this disclosure does not impose further limitations.

In an embodiment, an accommodating member is further included. The battery wire harness is accommodated in the accommodating member, and the accommodating member is accommodated in the accommodating groove 2244. The accommodating member is a trough-shaped member, and the open side of the accommodating member faces the same direction as the open side of the accommodating groove 2244.

To further illustrate, the battery wire harness can be directly accommodated within the accommodating groove 2244, or the battery wire harness can first be accommodated within an accommodating member (for example, the first accommodating member 2242 or the second accommodating member 2243 described below), and then the accommodating member is accommodated within the accommodating groove 2244. The accommodating member may be selected as a trough-shaped member, and the open side of the accommodating member faces the same direction as the open side of the accommodating groove 2244.

In an embodiment, the battery wire harness includes a high-voltage connector 51, and the accommodating member includes a first accommodating member 2242. The high-voltage connector 51 is accommodated within the first accommodating member 2242, and the first accommodating member 2242 is accommodated within the accommodating groove 2244.

To further illustrate, the battery wire harness includes a high-voltage connector 51, and the accommodating member includes a first accommodating member 2242. The high-voltage connector 51 includes conductors such as copper or aluminum and is configured to establish a high-voltage electrical connection with the battery module 30, for example, for electrical busing of individual battery modules 30. The insulating film can be wrapped around the exterior of the conductors, such as copper or aluminum, in the high-voltage connector 51. The first accommodating member 2242 can optionally be made of an insulating material and in cases where the high-voltage connector 51 itself is insulated, the first accommodating member 2242107 can also be made of a non-insulating material. The high-voltage connector 51 is accommodated within the first accommodating member 2242, and then the first accommodating member 2242 is accommodated within the accommodating groove, thereby achieving electrical insulation between the high-voltage connector 51 and the structural beam 22. Furthermore, the high-voltage connector 51 receives dual protection from both the first accommodating member 2242 and the structural beam 22, which further helps to mitigate the adverse effects of thermal runaway

The first accommodating member 2242 may be configured as a trough-shaped member or a tubular member. Optionally, the first accommodating member 2242 is a trough-shaped member. As a "trough"-shaped structure, it inherently includes four sides: two opposite side walls, a bottom wall, and an open side. Whether the two ends of the "trough"-shaped structure are open is not limited in the disclosure. The open side of the first accommodating member 2242 faces the same direction as the open side of the accommodating groove 2244. An advantage of this structure is that during the assembly of the battery pack 10, the first accommodating member 2242 can first be mounted into the accommodating groove 2244 from the open side of the accommodating groove 2244, and then the high-voltage connector 51 can be mounted into the first accommodating member 2242 from the open side of the first accommodating member 2242, thereby facilitating convenient assembly.

In an embodiment, the battery wire harness includes a low-voltage connector 52, and the accommodating member includes a second accommodating member 2243. The sampling bus is accommodated within the second accommodating member 2243, and the second accommodating member 2243 is accommodated within the accommodating groove 2244.

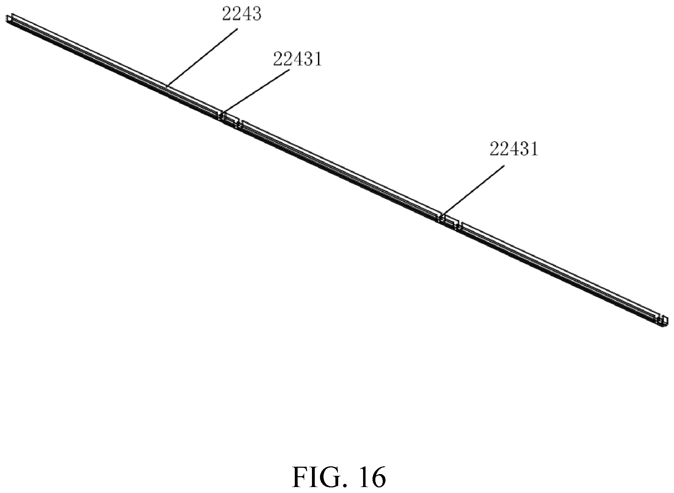

As shown in FIG. 16, the battery wire harness includes a low-voltage connector 52, and the accommodating member includes a second accommodating member 2243. The sampling bus is accommodated within the second accommodating member 2243, and the second accommodating member 2243 is accommodated within the accommodating groove 2244. Consequently, the tray longitudinal beam 224 and the second accommodating member 2243 can provide dual protection for the low-voltage connector 52, further mitigating the adverse effects of thermal runaway. The sampling bus can rely on its own insulating layer to achieve electrical insulation from the tray longitudinal beam 224. The second accommodating member 2243 can be made of either an insulating or a non-insulating material.

Similar to the first accommodating member 2242, the second accommodating member 2243 may be configured as a trough-shaped member or a tubular member. Optionally, the second accommodating member 2243 is a trough-shaped member. The open side of the second accommodating member 2243 faces the same direction as the open side of the accommodating groove 2244105. An advantage of this structure is that during the assembly of the battery pack 10, the second accommodating member 2243 can first be mounted into the accommodating groove 2244 from the open side of the accommodating groove 2244, and then the low-voltage connector 52, such as the sampling bus, can be mounted into the first accommodating member 2242 from the open side of the second accommodating member 2243, thereby facilitating convenient assembly.

In an embodiment, the low-voltage connector 52 includes a sampling bus. The sampling bus includes a plurality of sampling wires 53 and a fourth insulating layer. The plurality of sampling wires 53 are wrapped together by the fourth insulating layer.

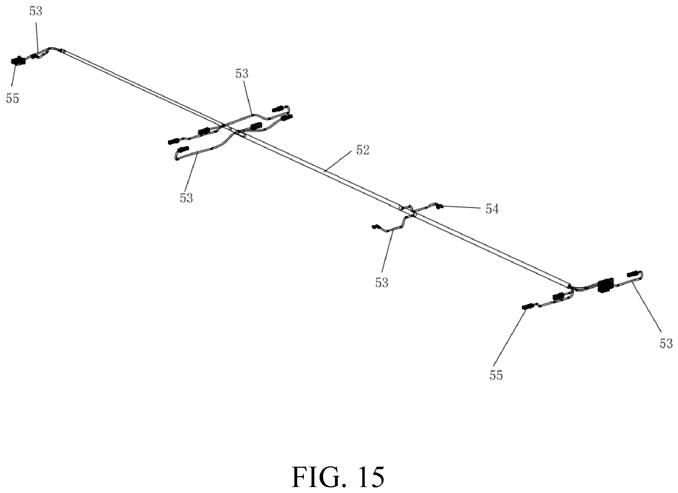

As shown in FIG. 15, the low-voltage connector 52 includes a sampling bus. The sampling bus includes a plurality of sampling wires 53 and a fourth insulating layer. The plurality of sampling wires 53 are wrapped together by the fourth insulating layer. The low-voltage connector 52 may also include other signal wires. Herein, "wrapped" does not imply complete encapsulation, but allows the respective sampling terminals of each sampling wire 53 to connect to devices other than the sampling bus. This structure of the sampling bus can prevent wiring clutter.

In an embodiment, the battery wire harness includes a high-voltage connector 51 and a low-voltage connector 52. The battery pack 10 further includes a first accommodating member 2242 and a second accommodating member 2243. The high-voltage connector 51 is accommodated within the first accommodating member 2242, and the low-voltage connector 52 is accommodated within the second accommodating member 2243. Both the first accommodating member 2242 and the second accommodating member 2243 are accommodated within the accommodating groove 2244. Both the first accommodating member 2242 and the second accommodating member 2243 are trough-shaped members. The open side of the first accommodating member 2242, the open side of the second accommodating member 2243, and the open side of the accommodating groove 2244 all face the same direction, and the bottom wall of the second accommodating member 2243 closes the open side of the wiring accommodating member.

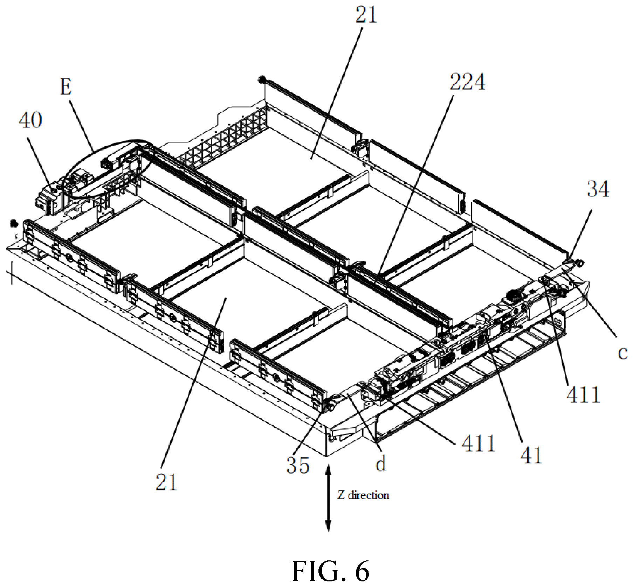

As an optional solution, the battery wire harness includes a high-voltage connector 51 and a low-voltage connector 52 (e.g., the sampling bus). Correspondingly, the accommodating member includes a first accommodating member 2242 and a second accommodating member 2243. Both the first accommodating member 2242 and the second accommodating member 2243 are accommodated within the accommodating groove 2244. Both the first accommodating member 2242 and the second accommodating member 2243 are trough-shaped members. The open side of the first accommodating member 2242, the open side of the second accommodating member 2243, and the open side of the accommodating groove 2244 all face the same direction, i.e., all three open sides face upward as shown in FIG. 6, and the bottom wall of the second accommodating member 2243 closes the open side of the wiring accommodating member. The advantages of this structure are as follows: from an assembly perspective, the first accommodating member 2242 can first be mounted into the accommodating groove 2244 from the open side of the accommodating groove 2244, then, the high-voltage connector 51 can be mounted into the first accommodating member 2242 from the open side of the first accommodating member 2242, subsequently, the second accommodating member 2243 can be mounted into the accommodating groove 2244 from the open side of the accommodating groove 2244, and finally, the low-voltage connector 52, such as the sampling bus, can be mounted into the first accommodating member 2242 from the open side of the second accommodating member 2243. All assembly steps are performed from top to bottom, facilitating convenient assembly. From a protection perspective for the wire harnesses, this structure utilizes the bottom wall of the second accommodating member 2243 to close the open side of the wiring accommodating member, consequently, the high-voltage connector 51, which is more sensitive to thermal runaway risks, receives stronger protection, making the overall structure's protective effect on both the high-voltage and low-voltage connectors 52 more rational.

Furthermore, the high-voltage connector in the aforementioned embodiments may be a busbar extending from the power distribution box. Since the power distribution box is arranged on both sides of the battery tray, and the two charge/discharge ports are also located on both sides of the battery tray, the busbar extending from the second power distribution box needs to connect to the charge/discharge port located at the other end of the battery tray. This configuration allows the high-voltage connector to be housed within the structural beam, achieving a protective effect and resulting in a more organized internal wiring layout within the battery pack. Additionally, low-voltage connectors, such as sampling wire harnesses, can also be integrated into the structural beam to ensure the neatness of the wiring harnesses inside the battery pack and enhance the safety of the battery pack 10.

In an embodiment, the structural beam 22 has a first reinforcing rib. The first reinforcing rib supports the first accommodating member 2242, thus creating an isolation space between the first accommodating member 2242 and the bottom of the structural beam 22.

To further illustrate, the structural beam 22 has a first reinforcing rib. On one hand, the first reinforcing rib structurally reinforces the tray longitudinal beam 224; on the other hand, it supports the first accommodating member 2242, so that an isolation space exists between the first accommodating member 2242 and the bottom of the tray longitudinal beam 224, thereby preventing excessive bending of the battery wire harness caused by the high-voltage connector 51 and the low-voltage connector 52 being inserted too deeply into the accommodating groove 2244.

In an embodiment, the sampling bus has a plurality of sampling terminals, and the second accommodating member 2243 has a plurality of first bayonets 22431. The first bayonets 22431 engage with the sampling wires 53, thereby positioning the sampling terminals outside the second accommodating member 2243.

As shown in FIG. 15, the low-voltage connector 52 has a plurality of sampling terminals. As shown in FIG. 16, the second accommodating member 2243 has a plurality of first bayonets 22431. The sampling terminals project from the open side, thus the respective sampling wires 53 engage with the first bayonets 22431, enabling the sampling terminals to be located outside the low-voltage wire accommodation. Sealing can be performed at the first bayonets 22431 with sealing adhesive.

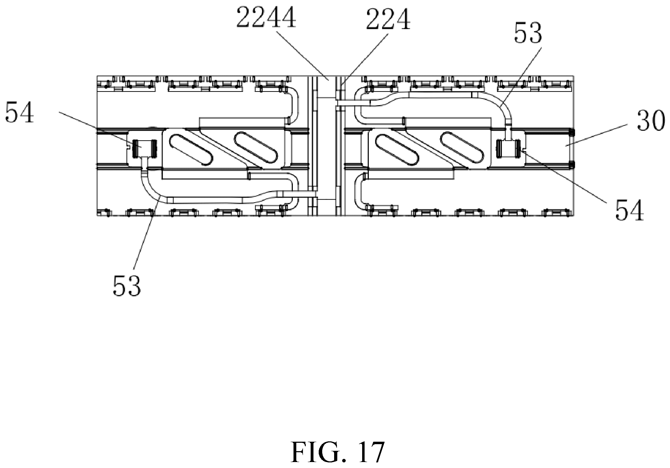

In an embodiment, as more clearly shown in FIG. 17, the sampling terminals include a sampling nickel sheet 54 and a quick-connect connector 55. The sampling nickel sheet 54 is connected to the connector of the battery module 30. The quick-connect connector 55 is plugged into the sampling wiring transfer harness plug 56 of the battery module 30.

In an embodiment, the accommodating groove 2244 is formed with a second bayonet 22441, and the second bayonet 22441 overlaps with the first bayonet 22431.

As shown in FIG. 14, the accommodating groove 2244 is formed with a second bayonet 22441, and the second bayonet 22441 overlaps with the first bayonet 22431, thereby enabling the respective sampling terminals of the sampling wires 53 to pass through the first bayonet 22431 and the second bayonet 22441 smoothly and reach the positions requiring sampling.

In an embodiment, the structural beam 22 includes a tray longitudinal beam 224 and a tray transverse beam 223. The accommodating groove 2244 is formed on the tray longitudinal beam 224 or the tray transverse beam 223. The tray longitudinal beam 224 is connected to the tray transverse beam 223. A longitudinal or transverse distance from at least one second bayonet 22441 to the connection between the tray longitudinal beam 224 and the tray transverse beam 223 is less than a first threshold. Specifically, the accommodating groove 2244 is formed on the tray longitudinal beam 224, and a longitudinal distance from the second bayonet 22441 to the connection between the tray longitudinal beam 224 and the tray transverse beam 223 is less than the first threshold; or, the accommodating groove 2244 is formed on the tray transverse beam 223, and a transverse distance from the second bayonet 22441 to the connection between the tray longitudinal beam 224 and the tray transverse beam 223 is less than the first threshold.

As shown in FIG. 14, the battery tray 20 further includes tray transverse beams 223. The tray longitudinal beams 224 and the tray transverse beams 223 are intersected, thereby partitioning the battery tray 20 into a plurality of battery accommodating spaces 21. The tray longitudinal beams 224 and the tray transverse beams 223 can collectively enhance the structural strength of the battery tray 20. As previously described, the tray transverse beams 223 can also be formed with accommodating grooves 2244, and the accommodating grooves 2244 accommodate battery wire harnesses. Referring to FIGS. 1 and 6, the accommodating grooves 2244 are formed with second bayonets 22441. The second bayonets 22441 overlap with the first bayonets 22431, thereby enabling the respective sampling terminals of the sampling wires 53 to pass through the first bayonets 22431 and the second bayonets 22441 smoothly and reach the positions requiring sampling.

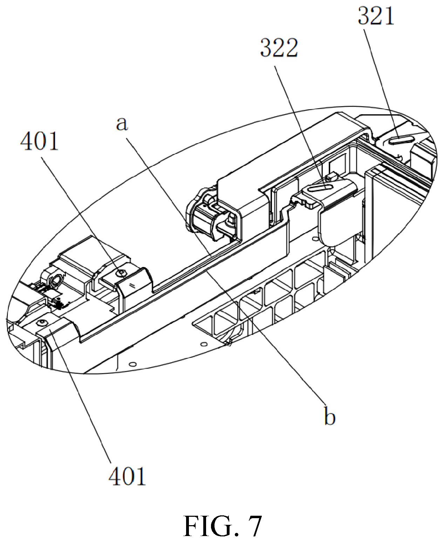

To further illustrate, a longitudinal distance D from at least one second bayonet 22441 to the connection between the tray longitudinal beam 224 and the tray transverse beam 223 is less than a first threshold. The first threshold can be 2 cm, 3 cm, or other suitable values, and can be selected based on the lengths of the tray longitudinal beam 224 and the tray transverse beam 223. In other words, the second bayonet 22441 is adjacent to the connection point between the tray longitudinal beam 224 and the tray transverse beam 223. The connection point has superior structural strength, thereby enabling high-strength protection for the connection point between the sampling wire 53 and the sampling terminal, and making the sampling wire 53 less prone to crushing and fracture. In the embodiment shown in FIG. 7, the second bayonet 22441 is formed on the tray longitudinal beam 224, hence D is a longitudinal distance. If the second bayonet 22441 is formed on the tray transverse beam 223, then the distance D would be a transverse distance.

In an embodiment of the present disclosure, in order to ensure the safety and reliability of operations such as maintenance, mounting, or replacement within the battery pack, the present disclosure also discloses a connection requirement for two busbars. Specifically, as shown in FIGS. 1 to 13, in an optional embodiment, the battery pack 200 includes the aforementioned battery tray 20, a sealing cover sealing the battery tray 20, and a plurality of working units. The plurality of working units are located within the battery tray 20. Every two working units are electrically connected by two busbars, and the connection point of the two busbars constitutes a connection structure. A support member is arranged on the battery tray 20, and at least two connection structures are located on a side of the support member facing the sealing cover.

To further illustrate, the battery pack 10 includes the battery tray 20. A sealing cover for sealing the battery tray 20 is arranged on the battery tray 20, and the working units are placed inside the battery tray 20. The sealing cover is configured to cover the opening of the battery tray 20 where the working units are placed. All the connection structures face the sealing cover, oriented in the same direction, which facilitates assembly.

In an embodiment of the present disclosure, the support member can be a support beam. The battery tray 20 is arranged with the support beam, wherein the support beam can be a tray transverse side beam 221, a tray longitudinal side beam 222, a tray longitudinal beam 224, and a tray transverse beam 223, etc., and can provide a mounting position for the connection structure. In other embodiments of the present disclosure, the support member can also be a separately arranged support plate, located within the battery tray 20 and configured to support the connection structure.

To further illustrate, a working unit can be a battery module 30, a power distribution box, or a front-drive plugin 42.

To further illustrate, any two working units are electrically connected by two busbars, and the connection point of the two busbars constitutes a connection structure. A support member is arranged on the battery tray 20. The connection structure is located on the support member, providing a connection position for the connection between working units and facilitating mounting. The connection structure faces the side of the sealing cover. On one hand, this facilitates operation; on the other hand, since all connections are oriented in the same direction, no directional adjustment is required during assembly, thereby improving production efficiency.

In one embodiment, the number of connection structures is a plurality, and at least 50% or more of the connection structures are located on the side of the support member facing the sealing cover. Thereby, it is ensured that most of the connection structures in the battery pack 10, or the connection structures at necessary positions, are easy to assemble, replace, or maintain, consequently improving production and maintenance efficiency.

In an embodiment, the number of connection structures is a plurality, and at least 80% of the connection structures are located on the side of the support member facing the sealing cover.

In an embodiment, the number of connection structures is a plurality, and all of the connection structures are located on the side of the support member facing the sealing cover. Thereby, it is ensured that all connection structures in the battery pack 10 are easy to assemble, replace, or maintain, consequently improving production and maintenance efficiency.

In an embodiment, the working units include at least two battery modules 30 and a first component. The two battery modules 30 are electrically connected by two busbars to form a first connection structure. The battery module 30 and the first component are electrically connected by two busbars to constitute a second connection structure. Both the first connection structure and the second connection structure are located on the side of the support member facing the sealing cover.

In an embodiment, the working units include at least two battery modules 30 and a first component. The first component can be a battery module 30, a power distribution box, or a front-drive plugin 42.

Specifically, a battery module 30 and another battery module 30 are electrically connected by a busbar to constitute a first connection structure at the connection point. A battery module 30 and the first component are electrically connected by a busbar to form a second connection structure at the connection point. Both the first connection structure and the second connection structure are located on the side of the support member facing the sealing cover. On one hand, this facilitates operation; on the other hand, since all connections are oriented in the same direction, no directional adjustment is required during assembly, thereby improving production efficiency.

In an embodiment, the battery pack 10 further includes an adapter 303. Two busbars are connected by the adapter 303. One busbar and the adapter 303, as well as the other busbar and the adapter 303, are both located on the side of the support member facing the sealing cover.

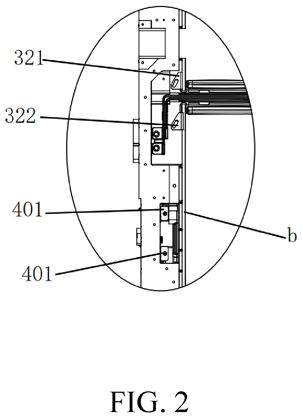

As shown in FIGS. 1 and 2, the battery pack 10 further includes an adapter 303. Two busbars are connected together by the adapter 303. By arranging the adapter 303, it is convenient to connect a battery module 30 to another battery module 30, and connect a battery module 30 to the first component. It also facilitates wiring within the battery pack 10, can improve the space utilization of the battery pack 10, and furthermore facilitates welding.

Specifically, one busbar is electrically connected to one end of the adapter 303, and the other busbar is electrically connected to the other end of the adapter 303, thereby achieving the connection of the two busbars by the adapter 303. The connection point between the busbar and the adapter 303 constitutes a connection structure. The connection point between the busbar and the adapter 303 is located on the side of the support member facing the sealing cover. The busbar and the adapter 303 are connected by means of welding or bolting. In this case, all connections are oriented in the same direction. During mounting, when connecting from top to bottom, on one hand, it facilitates operation; on the other hand, since all connections are oriented in the same direction, no directional adjustment is required, which can improve production efficiency. Moreover, achieving electrical connection and fixation in one direction allows all operations to be performed within the visual range and also facilitates inspection of whether the fixation is qualified.

In one embodiment, the working units include at least two battery modules 30 and a power distribution box, wherein any two battery modules 30 are connected, and a battery module 30 is connected to the power distribution box.

The battery pack 10 provided in the present disclosure includes at least two battery modules 30. In the embodiment, three battery modules 30, four battery modules 30, five battery modules 30, six battery modules 30, or even more may be selected. The number of battery modules 30 can be chosen according to practical applications and is not limited in the present disclosure. If a specific number is mentioned hereinafter, it is for illustrative purposes only.

To further illustrate, a first connector 321 and a second connector 322 are arranged on each of the battery modules 30. The first connector 321 and the second connector 322 are connected to the electrode terminals of the battery module 30, with one connected to the positive terminal of the battery module 30 and the other connected to the negative terminal of the battery module 30. A third busbar is arranged on the power distribution box, and the third busbar is connected to the positive and negative electrode leads of the power distribution box.

To further illustrate, the connection between one battery module 30 and another battery module 30 has a first connection structure. Specifically, the first connector 321 of one of the battery modules 30 is overlapped and lapped with the second connector 322 of the other battery module 30, and the lapping direction faces the side of the sealing cover. The first connector 321 and the second connector 322 are connected by means of welding.

To further illustrate, the power distribution box can be configured to control or monitor the operation of the battery pack 10.

To further illustrate, the connection between the power distribution box and two adjacent battery modules 30 has a second connection structure. Specifically, the third busbar is overlapped and lapped with the first connector 321 of a battery module 30, and the lapping direction faces the side of the sealing cover; alternatively, the third busbar is overlapped and lapped with the second connector 322 of a battery module 30, and the lapping direction faces the side of the sealing cover, thereby achieving the connection relationship between the power distribution box and the battery module 30.

Therefore, whether between a battery module 30 and another battery module 30, or between a battery module 30 and the power distribution box, the connection directions are all overlapped and lapped together, and the lapping direction faces the side of the sealing cover. In this case, the welding directions are all in the same direction. During welding, when welding from top to bottom, on one hand, it facilitates operation; on the other hand, since all welding is performed in the same direction, no directional adjustment is required during the welding process, which can improve production efficiency. Moreover, achieving electrical connection and fixation in one direction allows all operations to be performed within the visual range and also facilitates inspection of whether the fixation is qualified.

In an embodiment, the working units include at least two battery modules 30 and a front-drive plugin 42, wherein any two battery modules 30 are connected, and the battery module 30 is connected to the front-drive plugin 42.

The connection method between a battery module 30 and another battery module 30 is the same as that in the aforementioned embodiments, so it will not be repeated here.

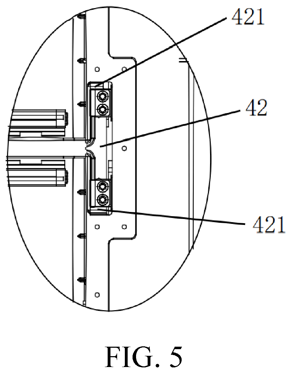

As shown in FIG. 5, the front-drive plugin 42 is arranged on the battery tray 20, which facilitates both the connection to the battery module 30 and the connection to the vehicle.

To further illustrate, the connection between the front-drive plugin 42 and an adjacent battery module 30 has a fourth connection structure. Specifically, the fourth busbar 421 is overlapped and lapped with the first connector 321 of the battery module 30, and the lapping direction faces the side of the sealing cover; alternatively, the fourth busbar 421 is overlapped and lapped with the second connector 322 of the battery module 30, and the lapping direction faces the side of the sealing cover.

Specifically, whether between a battery module 30 and another battery module 30 or between a battery module 30 and the front-drive plugin 42, the connection directions are all overlapped and lapped together. In this case, the welding directions are all in the same direction. During welding, when welding from top to bottom, on one hand, it facilitates operation; on the other hand, since all welding is performed in the same direction, no directional adjustment is required during the welding process, which can improve production efficiency. Moreover, achieving electrical connection and fixation in one direction allows all operations to be performed within the visual range and also facilitates inspection of whether the fixation is qualified.

In an embodiment, the working units include a power distribution box and a front-drive plugin 42. The front-drive plugin 42 is arranged with a fourth busbar 421. The power distribution box is arranged with a third busbar. The front-drive plugin 42 and the power distribution box are electrically connected by the third busbar and the fourth busbar 421, and a fifth connection structure is formed at the connection point. The fifth connection structure is located on the side of the support member facing the sealing cover.

To further illustrate, the connection between the front-drive plugin 42 and the power distribution box has a fifth connection structure. Specifically, the fourth busbar 421 is connected to the third busbar, wherein the fourth busbar 421 is overlapped and lapped with the third busbar, and the lapping direction faces the side of the sealing cover. The fourth busbar 421 and the third busbar are connected from top to bottom by means of screw fastening. In this case, the connection directions are all in the same direction. On one hand, this facilitates operation; on the other hand, since all connections are oriented in the same direction, no directional adjustment is required during assembly, thereby improving production efficiency.

In an embodiment, the working units include at least two battery modules 30, a power distribution box, and a front-drive plugin 42. A first connector 321 and a second connector 322 are arranged on each of the battery modules 30. A third busbar is arranged on the power distribution box. The front-drive plugin 42 is arranged with a fourth busbar 421. Among adjacent battery modules 30, the first connector 321 of one battery module 30 is electrically connected to the second connector 322 of another battery module 30, constituting a first connection structure at the connection point. The third busbar of the power distribution box is electrically connected to the first connector 321 or the second connector 322 of a battery module 30, constituting a third connection structure at the connection point. The fourth busbar 421 of the front-drive plugin 42 is electrically connected to the first connector 321 or the second connector 322 of a battery module 30, constituting a fourth connection structure at the connection point. The fourth busbar 421 of the front-drive plugin 42 is electrically connected to the third busbar of the power distribution box, constituting a fifth connection structure at the connection point. At least two of the first connection structure, the third connection structure, the fourth connection structure, and the fifth connection structure are located on the side of the support member facing the sealing cover.

In an embodiment of the present disclosure, an operation space is arranged between the end of the support member facing the sealing cover and the sealing cover, and the connection structure is placed within the operation space. This operation space can facilitate the user's mounting and maintenance of the connection structure, avoiding reduced mounting efficiency due to obstruction by other components above the connection structure.

In other embodiments of the present disclosure, the connection structure is arranged at the end of the support member facing the sealing cover and is arranged adjacent to the sealing cover. The arrangement of the connection structure adjacent to the sealing cover further reduces the gap between the connection structure and the sealing cover, avoiding reduced mounting efficiency due to obstruction by other components above the connection structure.

In an embodiment, the working units include at least two battery modules 30, a power distribution box, and a front-drive plugin 42, wherein any two battery modules 30 are connected, the battery module 30 is connected to the front-drive plugin 42, a battery module 30 is connected to the power distribution box, and the power distribution box is connected to the front-drive plugin 42.

The connection method between a battery module 30 and another battery module 30, the connection method between a battery module 30 and the front-drive plugin 42, the connection method between a battery module 30 and the power distribution box, and the connection method between the power distribution box and the front-drive plugin 42 are the same as those in the aforementioned embodiments, so it will not be repeated here.

Specifically, whether between a battery module 30 and another battery module 30, between a battery module 30 and the power distribution box, between a battery module 30 and the front-drive plugin 42, or between the power distribution box and the front-drive plugin 42, the connection directions are all overlapped and lapped together, and the connection directions are all in the same direction. When connection and mounting are required, that is, when connecting from top to bottom, on one hand, it facilitates operation; on the other hand, since all connections are oriented in the same direction, no directional adjustment is required during the connection process, which can improve production efficiency. Moreover, achieving electrical connection and fixation in one direction allows all operations to be performed within the visual range and also facilitates inspection of whether the fixation is qualified.

In an embodiment, the power distribution box includes a first power distribution box 40. Two third secondary busbars 401 are arranged on the first power distribution box 40. One of the third secondary busbars 401 of the first power distribution box is electrically connected to the first connector 321 of one of the battery modules 30, constituting a third secondary connection structure at the connection point. The other third secondary busbar 401 of the first power distribution box is electrically connected to the second connector 322 of the other battery module 30, constituting a fourth secondary connection structure at the connection point. Both the third secondary connection structure and the fourth secondary connection structure are located on the side of the support member facing the sealing cover.

In an embodiment, the power distribution box includes a first power distribution box 40. The first power distribution box 40 is connected in series between two adjacent battery modules 30, enabling the first power distribution box 40 to control the connection or disconnection of the circuit of the battery pack 10. The circuit is disconnected by the first power distribution box 40, so that the battery pack 10 can be split into two equal portions, and the total voltage is also halved, thus reducing the total voltage of the battery pack 10 when disconnected. This mitigates safety risks for operating personnel and reduces the risk of high-voltage arcing when the battery pack 10 fails.

In an embodiment, if the battery pack 10 has four battery modules 30 connected in series, the first power distribution box 40 is connected in series between the second battery module 30 and the third battery module 30, so as to control the disconnection and connection between two battery modules 30 and the other two battery modules 30, thereby enabling the voltage of the battery pack 10 to be split into two equal portions. If the battery pack 10 has six battery modules 30 connected in series, the first power distribution box 40 is connected in series between the third battery module 30 and the fourth battery module 30, so as to control the disconnection and connection between three battery modules 30 and the other three battery modules 30, thereby enabling the voltage of the battery pack 10 to be split into two equal portions. In summary, the first power distribution box 40 is connected in series at the middle position of the plurality of battery modules 30, so that when the circuit is disconnected, the voltage can be equally divided, thereby mitigating safety risks for operating personnel and reducing the risk of high-voltage arcing when the battery pack 10 fails.

To further illustrate, two third secondary busbars 401 are arranged on the first power distribution box 40. The two third secondary busbars 401 are connected to the positive and negative electrode leads of the first power distribution box 40, respectively, with one connected to the positive electrode lead and the other connected to the negative electrode lead. To further illustrate, one of the third secondary busbars 401 is overlapped and lapped with the first connector 321 of one of the battery modules 30, and the lapping direction faces the side of the sealing cover; the other third secondary busbar 401 is overlapped and lapped with the second busbar 12 of the another battery module 30, and the lapping direction faces the side of the sealing cover, thereby achieving the connection relationship between the first power distribution box 40 and the battery modules 30.

Specifically, between the battery module 30 and the first power distribution box 40, the connection directions are all overlapped and lapped together. In this case, the welding directions are all in the same direction. During welding, when welding from top to bottom, on one hand, it facilitates operation; on the other hand, since all welding is performed in the same direction, no directional adjustment is required during the welding process, which can improve production efficiency. Moreover, achieving electrical connection and fixation in one direction allows all operations to be performed within the visual range and also facilitates inspection of whether the fixation is qualified.

In an embodiment, the battery pack 10 further includes a first wiring transfer bar a and a second wiring transfer bar b. The first connector 321 is connected to one of the third secondary busbars 401 by the first wiring transfer bar a; the connection point between the first connector 321 and the first wiring transfer bar a, and the connection point between one of the third secondary busbars 401 and the first wiring transfer bar a, are both located on the support member and face the side of the sealing cover. The second connector 322 is connected to the other third secondary busbar 401 by the second wiring transfer bar b; the connection point between the second connector 322 and the second wiring transfer bar b, and the connection point between the other third secondary busbar 401 and the second wiring transfer bar b, are both located on the support member and face the side of the sealing cover.

To further illustrate, the battery pack 10 further includes a first wiring transfer bar a and a second wiring transfer bar b. Specifically, the first connector 321 is connected to one of the third secondary busbars 401 by the first wiring transfer bar a, and the second connector 322 is connected to the other third secondary busbar 401 by the second wiring transfer bar b. This facilitates connecting the battery module 30 to the first power distribution box 40, and also facilitates wiring within the battery pack 10, which can improve the space utilization of the battery pack 10 and furthermore facilitates welding.

To further illustrate, the first connector 321 of one of the battery modules 30 is connected to a third secondary busbar 401 by the first wiring transfer bar a; the second connector 322 of the other battery module 30 is connected to the other third secondary busbar 401 by the second wiring transfer bar b. As shown in FIG. 2, the first connector 321 of one of the battery modules 30 is overlapped and lapped with the first wiring transfer bar a, and the lapping direction faces the side of the sealing cover; the third secondary busbar 401 is overlapped and lapped with the first wiring transfer bar a, and the lapping direction faces the side of the sealing cover. The second connector 322 of the other battery module 30 is overlapped and lapped with the second wiring transfer bar b, and the lapping direction faces the side of the sealing cover; the other third secondary busbar 401 is overlapped and lapped with the second wiring transfer bar b, and the lapping direction faces the side of the sealing cover. That is, one of the battery modules 30 is connected to one of the third secondary busbars 401 of the first power distribution box 40 by the first wiring transfer bar a, and the other battery module 30 is connected to the other third secondary busbar 401 of the first power distribution box 40 by the second wiring transfer bar b, and both are overlapped in the same direction, resulting in identical mounting directions. In this case, the welding directions are all in the same direction. During welding, that is, when welding from top to bottom, on one hand, it facilitates operation; on the other hand, since all welding is performed in the same direction, no directional adjustment is required during the welding process, which can improve production efficiency.

In an embodiment, the power distribution box further includes a second power distribution box 41, and the second power distribution box 41 is connected to the total positive terminal 34 and the total negative terminal 35 of a plurality of battery modules 30 connected in series.

Two third main busbars 411 are arranged on the second power distribution box 41.

The total positive terminal 34 is electrically connected to one of the third main busbars 411 to form a third main connection structure, and the total negative terminal 35 is electrically connected to the other third main busbar 411 to form a fourth main connection structure; wherein both the third main connection structure and the fourth main connection structure are located on a side of the support member facing the sealing cover.

To further illustrate, a plurality of battery modules 30 connected in series have a total positive terminal 34 and a total negative terminal 35, wherein the total positive terminal 34 and the total negative terminal 35 are located on the battery modules 30 at the two ends of the plurality of battery modules 30 connected in series, respectively, and the second power distribution box 41 is connected to the plurality of battery modules 30 connected in series. The second power distribution box 41 is configured to monitor and control the operation of the battery pack 10.

To further illustrate, two third main busbars 411 are arranged on the second power distribution box 41, wherein the two third main busbars 411 are connected to the positive and negative leads of the second power distribution box 41, respectively, with one connected to the positive lead and the other connected to the negative lead. To further illustrate, one of the third main busbars 411 is overlapped and lapped with the total positive terminal 34, and the lapping direction faces the side of the sealing cover; the other third main busbar 411 is overlapped and lapped with the total negative terminal 35, and the lapping direction faces the side of the sealing cover, thereby realizing the connection relationship between the second power distribution box 41 and the battery modules 30.

Specifically, between the battery module 30 and the second power distribution box 41, the connection directions are all overlapped and lapped together in the same direction. In this case, the welding directions are all in the same direction. During welding, when welding from top to bottom, on one hand, it facilitates operation; on the other hand, since all welding is performed in the same direction, no directional adjustment is required during the welding process, which can improve production efficiency. Moreover, achieving electrical connection and fixation in one direction allows all operations to be performed within the visual range and also facilitates inspection of whether the fixation is qualified.

In an embodiment, the battery pack 10 further includes a third wiring transfer bar c and a fourth wiring transfer bar d. The total positive terminal 34 is connected to one of the third main busbars 411 by the third wiring transfer bar c. Both the connection point between the total positive terminal 34 and the third wiring transfer bar c, and the connection point between one of the third main busbars 411 and the third wiring transfer bar c, are located on the support member and face the side of the sealing cover. The total negative terminal 35 is connected to the other third main busbar 411 by the fourth wiring transfer bar d. Both the connection point between the total negative terminal 35 and the fourth wiring transfer bar d, and the connection point between the other third main busbar 411 and the fourth wiring transfer bar d, are located on the support member and face the side of the sealing cover.

To further illustrate, the battery pack 10 further includes a third wiring transfer bar c and a fourth wiring transfer bar d. The total positive terminal 34 is connected to one of the third main busbars 411 by the third wiring transfer bar c, and the total negative terminal 35 is connected to the other third main busbar 411 by the fourth wiring transfer bar d. This configuration facilitates connecting the battery module 30 to the second power distribution box 41, facilitates wiring within the battery pack 10, can improve the space utilization of the battery pack 10, and furthermore facilitates welding.

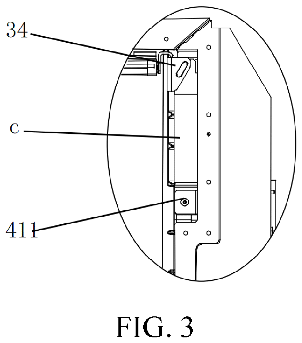

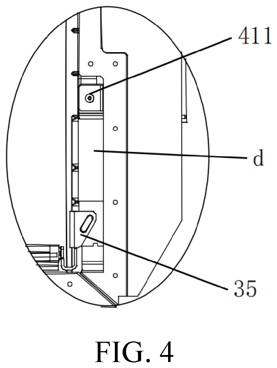

To further illustrate, the total positive terminal 34 is connected to one of the third main busbars 411 by the third wiring transfer bar c, and the total negative terminal 35 is connected to the other third main busbar 411 by the fourth wiring transfer bar d. As shown in FIGS. 3 and 4, the total positive terminal 34 is overlapped and lapped with the third wiring transfer bar c, and the lapping direction faces the side of the sealing cover; one of the third main busbars 411 is overlapped and lapped with the third wiring transfer bar c, and the lapping direction faces the side of the sealing cover. The total negative terminal 35 is overlapped and lapped with the fourth wiring transfer bar d, and the lapping direction faces the side of the sealing cover; and the other third main busbar 411 is overlapped and lapped with the fourth wiring transfer bar d, and the lapping direction faces the side of the sealing cover.

That is, the total positive terminal 34 is connected to one of the third main busbars 411 of the second power distribution box 41 by the third wiring transfer bar c, and the total negative terminal 35 is connected to the other third main busbar 411 of the second power distribution box 41 by the fourth wiring transfer bar d. Furthermore, they are all overlapped in the same direction, the mounting directions are all in the same direction, and the welding directions are all in the same direction. During welding, when welding from top to bottom, on one hand, it facilitates operation; on the other hand, since all welding is performed in the same direction, no directional adjustment is required during the welding process, which can improve production efficiency.

In an embodiment, the total positive terminal 34 and the total negative terminal 35, which are connected to the second power distribution box 41, are located at both ends in the width direction of the battery pack 10.

To further illustrate, the total positive terminal 34 and the total negative terminal 35 are located at both ends in the width direction of the battery pack 10, respectively. When the circuits of the two battery modules 30 connected to the first power distribution box 40 are disconnected, this configuration can increase the distance between the total positive terminal 34 and the total negative terminal 35 of the battery pack 10, thereby reducing the risk of short circuit.

Furthermore, considering the need to ensure that the operational space for both busbars is located at the end of the connection point away from the battery tray, i.e., the visibility of the busbars, thereby guaranteeing the reliability of the connection at the connection point of the two busbars during operation, the structural form of the busbars is specifically emphasized in an embodiment of this disclosure. Additionally, the busbar structure disclosed in the following embodiments can be applied to other application scenarios, thereby enhancing the adaptability of the busbars to a plurality of spatial positions within the battery pack.

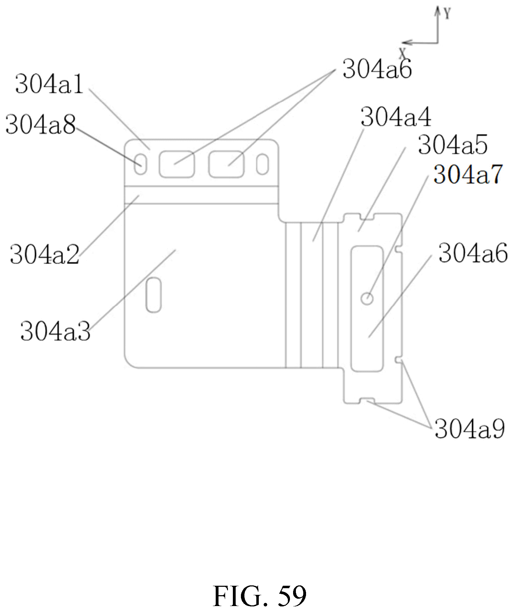

Specifically, as shown in FIGS. 59 to 65, the busbar 304a of the disclosure includes a first connecting portion 304a1, a first bending portion 304a2, a third transition portion 304a3, a second bending portion 304a4, and a second connecting portion 304a5 arranged sequentially. The first bending portion 304a2 has a plurality of metal sheets arranged sequentially along the thickness direction of the first bending portion 304a2, and the second bending portion 304a4 has a plurality of metal sheets arranged sequentially along the thickness direction of the second bending portion 304a4. The first connecting portion 304a1 and the first bending portion 304a2 are located at one end of the third transition portion 304a3 in a first direction, while the second bending portion 304a4 and the second connecting portion 304a5 are located at one end of the third transition portion 304a3 in a second direction, the first direction intersects the second direction. In the disclosure, the first bending portion 304a2 and the second bending portion 304a4 are formed by stacking a plurality of metal sheets, thereby enabling the first bending portion 304a2 and the second bending portion 304a4 to be bendable. This configuration, where the first connecting portion 304a1 and the first bending portion 304a2 are located at one end of the third transition portion 304a3 in the first direction, and the second bending portion 304a4 and the second connecting portion 304a5 are located at one end of the third transition portion 304a3 in the second direction, allows the connecting piece to adapt to different mounting environments and positions, improving the practicality of the connecting piece. The first direction and the second direction are arranged in an intersecting manner, i.e., the first direction and the second direction are arranged at a preset included angle. The specific included angle needs to be adjusted according to user requirements. Typically, when the busbar 304a is applied within the battery pack 10, the included angle may be selected as 90°. Furthermore, the thickness direction of the first bending portion 304a2 and the thickness direction of the second bending portion 304a4 are both perpendicular to the first direction and the second direction when the first bending portion 304a2 and the second bending portion 304a4 are not bent.

Specifically, in order to meet the bending requirements, the first bending portion 304a2 and the second bending portion 304a4 of the busbar 304a are formed by stacking a plurality of metal sheets, i.e., the first bending portion 304a2 has a plurality of metal sheets arranged sequentially along the thickness direction of the first bending portion 304a2, and the second bending portion 304a4 has a plurality of metal sheets arranged sequentially along the thickness direction of the second bending portion 304a4.

In the embodiment of the disclosure, employing the busbar disclosed above can ensure that the visualization of the busbar connection is achievable at any position within the battery pack.

Furthermore, the first bending portion 304a2 and the second bending portion 304a4 independently include 5 to 20 layers of metal sheets. That is, the number of metal sheet layers in the first bending portion 304a2 is between 5 and 20, and the number of metal sheet layers in the second bending portion 304a4 is also between 5 and 20. The number of metal sheet layers in the first bending portion 304a2 and the number of metal sheet layers in the second bending portion 304a4 can be the same, for example, 3, 8, 10, 15, 20, etc. The number of metal sheet layers in the first bending portion 304a2 and the number of metal sheet layers in the second bending portion 304a4 can also be different, for example, the number of metal sheet layers in the first bending portion 304a2 is 10, and the number of metal sheet layers in the second bending portion 304a4 is 15. Specifically, when the number of metal sheet layers is between 5 and 20, the first bending portion 304a2 and the second bending portion 304a4 can maintain good bending performance, while also reducing the risk of fracture in the first bending portion 304a2 and the second bending portion 304a4, and improving the flexibility and adaptability of the first bending portion 304a2 and the second bending portion 304a4.

In the embodiment disclosed in the disclosure, the connector is an integral piece. The first connecting portion 304a1, the first bending portion 304a2, the third transition portion 304a3, the second bending portion 304a4, and the second connecting portion 304a5 are formed by stacking a plurality of metal sheets followed by hot-pressing. Specifically, the first connecting portion 304a1, the third transition portion 304a3, and the second connecting portion 304a5 are formed by stacking and hot-pressing a plurality of metal sheets to form an integral whole, thereby improving the reliability and strength of connection between the busbar 304a and other components or the busbar 304a. The specific process is as follows: 1. first, a plurality of metal sheets with the preset shape are stacked. 2. The regions of the first connecting portion 304a1, the first bending portion 304a2, the third transition portion 304a3, the second bending portion 304a4, and the second connecting portion 304a5 are defined. 3. Then, a hot-pressing process is performed on the regions corresponding to the first connecting portion 304a1, the third transition portion 304a3, and the second connecting portion 304a5, so that the relevant parts are formed into an integral whole. The busbar 304a can be manufactured and molded by the above-described simple process. In other embodiments of the disclosure, the first connecting portion, the third transition portion 304a3, and the second connecting portion 304a5 are metal blocks, and the first bending portion and the second bending portion 304a4 are a plurality of metal sheets; the plurality of metal sheets and the metal blocks are welded together to form the connector. That is, the connector is formed by combining a plurality of components, where the first connecting portion, the first bending portion, the third transition portion 304a3, the second bending portion 304a4, and the second connecting portion 304a5 each have an independent structure.

In order to ensure the overcurrent capability of the battery pack 10, in an embodiment of the present disclosure, the thickness of the connector is 1.5 to 3.0 mm. In other types of battery packs 10, the thickness of the busbar 304a can be adjusted according to the overcurrent requirements of the battery pack 10. The thickness of the connector may refer to the thickness at any one position among the first connecting portion, the first bending portion, the third transition portion 304a3, the second bending portion 304a4, and the second connecting portion 304a5 being 1.5 to 3.0 mm, or it may refer to the overall thickness of the connector being in the range of 1.5 to 3.0 mm. The thickness of the first bending portion and the second bending portion 304a4 may be the sum of the thicknesses of each of the metal sheets, or it may be the distance between the two outermost metal sheets along the thickness direction.

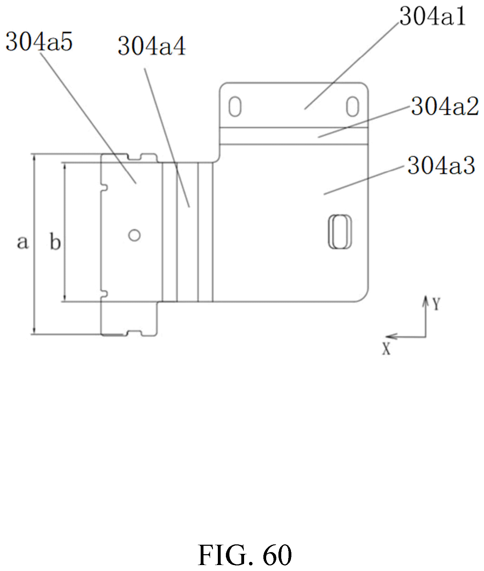

In an embodiment of the present disclosure, as shown in FIG. 60, in a direction perpendicular to the first direction, the width of the first connecting portion 304a1 is greater than the width of the first bending portion 304a2; and/or, in a direction perpendicular to the second direction, the width of the second connecting portion 304a5 is greater than the width of the second bending portion 304a4. Specifically, in the battery pack 10, the output terminals of the battery module 30 are generally electrode terminal structures, such as a positive terminal and a negative terminal. A plurality of batteries are connected in series or parallel by connecting sheets to form the battery module 30, the positive terminal of one of the two outermost batteries serves as the positive terminal of the battery module, and the negative terminal of the other one of the two outermost batteries serves as the negative terminal of the battery module. The width of the second connecting portion 304a5 in the direction perpendicular to the first direction being greater than the width of the second bending portion 304a4 can increase the connection area between the busbar 304a and the output terminal of the battery module 30, improve connection reliability, and reduce the risk of the busbar 304a detaching. In an embodiment of the present disclosure, as shown in FIG. 60, the first direction is perpendicular to the second direction; therefore, the width of the second connecting portion 304a5 in the second direction (i.e., the length of ain FIG. 59) is greater than the width of the second bending portion 304a4 in the second direction (i.e., the length of bin FIG. 60).

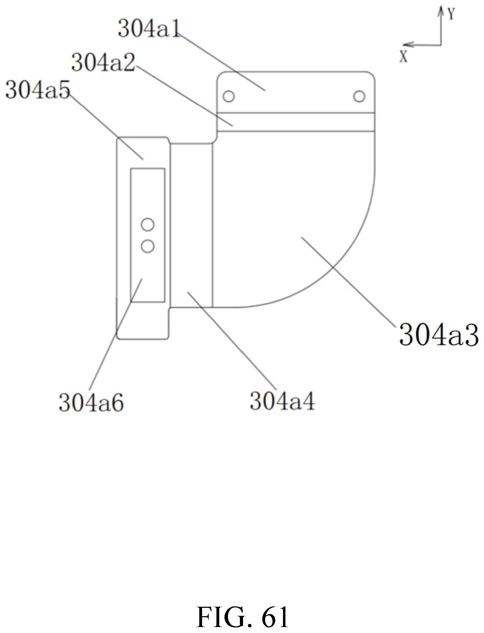

In an embodiment of the present disclosure, as shown in FIGS. 59 and 60, the projection of the third transition portion 304a3 along the thickness direction is rectangular. Configuring the projection of the third transition portion 304a3 along the thickness direction to be rectangular can improve the overcurrent capability of the busbar 304a. Furthermore, in another embodiment of the present disclosure, as shown in FIG. 61, the projection of the third transition portion 304a3 along the thickness direction is a quarter circle. Configuring the projection of the third transition portion 304a3 along the thickness direction to be a quarter circle facilitates processing and manufacturing, reducing manufacturing costs. In the embodiment of the present disclosure, the third transition portion 304a3 may also be designed in other shapes, and the specific selection can be determined according to actual requirements.

In an embodiment of the present disclosure, at least one of the first connecting portion 304a1 and the second connecting portion 304a5 is arranged with a depression 304a6. Specifically, as shown in the figures, the first connecting portion 304a1 and the second connecting portion 304a5 are configured to connect to components such as the battery module 30. Conventional connection methods typically involve welding, i.e., by melting a portion of the metal of the busbar 304a to achieve connection between the busbar 304a and components such as the battery module 30. However, the welding process is affected by the thickness of the busbar 304a; that is, a thicker busbar 304a requires higher welding power. Users often only have welding equipment with fixed power. Therefore, when constrained by welding process requirements, a thinning treatment is required for the first connecting portion 304a1 and the second connecting portion 304a5, thereby reducing the difficulty and demands of the welding process. Thus, the busbar 304a disclosed in the embodiment of the present disclosure is arranged with the depression 304a6 on at least one of the first connecting portion 304a1 and the second connecting portion 304a5, to reduce the thickness of the first connecting portion 304a1 or the second connecting portion 304a5, thereby reducing welding requirements. Moreover, the busbar 304a only reduces the thickness of the welding region by arranging the depression 304a6, without thinning other regions. The above design can also ensure the overall overcurrent capability of the busbar 304a. As shown in FIG. 59, both the first connecting portion 304a1 and the second connecting portion 304a5 are arranged with the depression 304a6, to improve connection reliability with the output terminal of the battery module 30 and also enhance connection reliability with other components (e.g., other busbars 304a).

Furthermore, as shown in FIG. 59, a plurality of depressions 304a6 are arranged. A plurality of depressions 304a6 are arranged on the connecting portion to reduce welding difficulty at a plurality of positions of the connecting part and improve connection reliability between the busbar 304a and other components or other busbars 304a. Further, as shown in FIG. 59, the plurality of depressions 304a6 are arranged along the first direction. Since the busbar 304a is welded in the regions of the depression 304a6, arranging the plurality of depressions 304a6 along the first direction can improve post-welding reliability, and reduce the risk of the busbar 304a detaching.

Furthermore, in order to enable users to determine the welding position more accurately, as shown in FIG. 59, in the embodiment disclosed in the present disclosure, a positioning hole 304a7 is arranged in the depression 304a6. The user can determine whether the busbar 304a matches the output terminal of the battery module 30 by the cooperation between the depression 304a6 and the positioning hole 304a7, thereby ensuring the reliability during subsequent welding. In addition, the positioning hole 304a7 can also be arranged in other regions of the busbar 304a. The specific position where it is arranged can be determined according to specific needs, with the purpose of enabling the busbar 304a to be positioned during fixed assembly and improving the accuracy during assembly of the busbar 304a.

In an embodiment of the present disclosure, as shown in FIG. 59, fixing holes 304a8 are arranged on the first connecting portion 304a1 and the second connecting portion 304a5. The busbar 304a can be fixed to the battery module 30 or other components by the fixing holes 304a8 to improve the stability of the busbar 304a. Further, as shown in FIG. 59, the fixing holes 304a8 are arranged on the connecting parts of the first connecting portion 304a1 and the second connecting portion 304a5 that are not connected to the output terminal of the battery module 30. Additionally, in another embodiment of the present disclosure, as shown in FIG. 59, the edges of the first connecting portion 304a1 and/or the second connecting portion 304a5 are arranged with notches 304a9. The busbar 304a can engage with the battery module 30 or other components by the edge notches 304a9, thereby achieving the fixation while positioning. Additionally, in other embodiments of the present disclosure, the first connecting portion 304a1 and/or the second connecting portion 304a5 can also be fixed by other fixing structures, such as engagement, embedded fixation, etc. The specific fixing method can be adjusted according to user requirements.

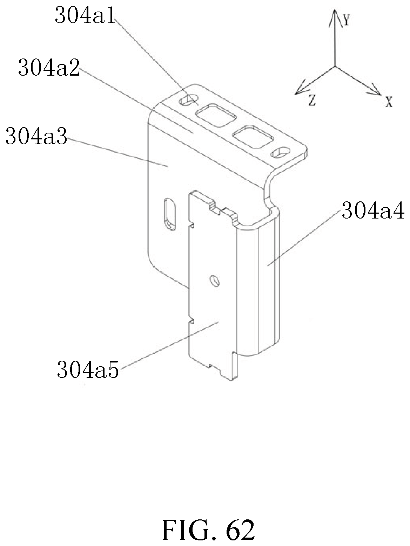

In the embodiment of the present disclosure, the bending angle between the first bending portion 304a2 and the second bending portion 304a4 is greater than or equal to 0° and less than or equal to 360°. Specifically, as shown in FIG. 62, the bending of the first bending portion 304a2 changes the relative position of the first connecting portion 304a1 to the third transition portion 304a3, and the bending of the second bending portion 304a4 changes the relative position of the second connecting portion 304a5 to the third transition portion 304a3. The first connecting portion 304a1 can be rotated along a third direction perpendicular to the first direction by the first bending portion 304a2, and the second connecting portion 304a5 can be rotated along the third direction perpendicular to the second direction by the second bending portion 304a4. The specific positions of the first connecting portion 304a1 and the second connecting portion 304a5 can be determined according to the specific rotation angles of the first bending portion 304a2 and the second bending portion 304a4. Therefore, the bending angle refers to the included angle between the initial position of the first connecting portion 304a1 and the position of the first connecting portion 304a1 after the first bending portion 304a2 is bent; or the included angle between the initial position of the second connecting portion 304a5 and the position of the second connecting portion 304a5 after the second bending portion 304a4 is bent. The third direction is the thickness direction of the third transition portion 304a3 of the busbar 304a, as shown by the Z direction in FIG. 62.

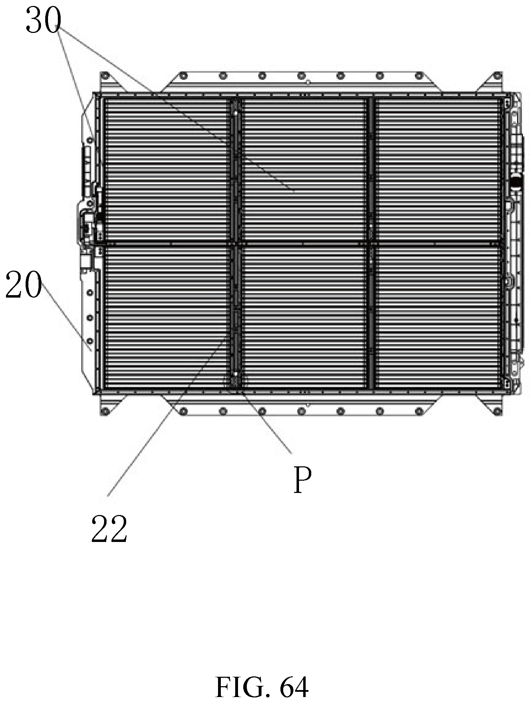

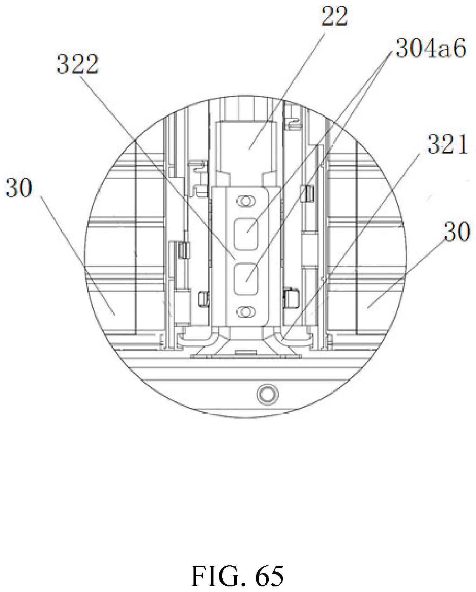

In an embodiment of the present disclosure, the battery pack 10 includes a plurality of battery modules 30 and the busbar 304a. The battery modules 30 are adapted to output current by the busbar 304a, i.e., the battery modules 30 are electrically connected to the busbar 304a. As shown in FIGS. 64 and 65, two battery modules 30 within the battery pack 10 are connected by the busbar 304a. Specifically, the battery pack 10 includes a battery tray 20, and a plurality of battery modules 30 are located within the battery tray 20. The structural beam 22 is arranged on the battery tray 20 to partition the battery tray 20 into a plurality of battery accommodating spaces 21. The battery modules 30 are located within the battery tray 20, and the battery modules 30 in two adjacent battery accommodating spaces 21 are communicated to each other by the busbar 304a, thereby forming a series or parallel connection of the two battery modules 30. The output terminals of a battery module are a positive terminal and negative terminal. The positive terminal of one of the battery modules 30 is connected to the negative terminal of the other battery module 30 by the busbar 304a, thereby realizing a series connection of the two battery modules 30.

In other embodiments disclosed in the present disclosure, the battery module 30 is also electrically connected to other electrical components by the busbar 304a. For example: a power distribution box, a battery management system, and a front-drive plugin, etc. The assembly method of the busbar 304a is similar to that in the first embodiment described above, and no further description will be provided.

The battery pack 10 disclosed in the present disclosure, by arranging the busbar 304a of the above form, ensures the connection between the battery modules 30 under the premise of limited space inside the battery pack 10, reduces the difficulty of connecting the battery modules 30, and simultaneously reduces the spatial volume inside the battery pack 10, thereby improving the volumetric utilization rate of the battery pack 10.

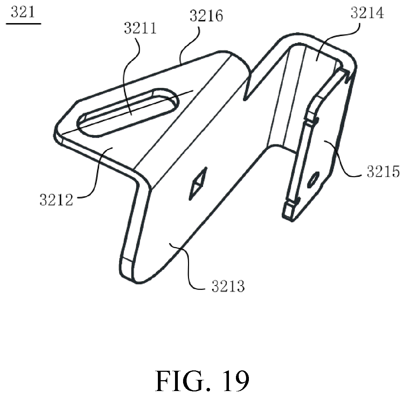

In an embodiment of the present disclosure, a variety of connection methods between busbars are arranged. Specifically, in the first embodiment disclosed in the present disclosure, as shown in FIGS. 19 to 26, in an alternative embodiment, one of the busbars is a first connector 321, the other busbar is a second connector, and the first connector 321 is formed with a first positioning hole 3211. A second connector 322 is formed with a second positioning hole 3321. A first boss 3031 and a second boss 3032 are arranged on the adapter. The shape of the first boss 3031 corresponds to that of the first positioning hole 3211, and the shape of the second boss 3032 corresponds to that of the second positioning hole 3321.

Referring to FIGS. 19 to 26, the connection structure of the battery pack 10 in the embodiment includes a first connector 321, a second connector 322, and an adapter 303. The first connector 321 is formed with a first positioning hole 3211, the second connector 322 is formed with a second positioning hole 3321, and a first boss 3031 and a second boss 3032 are arranged on the adapter. The shape of the first boss 3031 corresponds to that of the first positioning hole 3211, and the shape of the second boss 3032 corresponds to that of the second positioning hole 3321. That is, if the first boss 3031 has a circular shape, then the first positioning hole 3211 also has a circular shape; if the first boss 3031 has a triangular shape, then the first positioning hole 3211 also has a triangular shape. The correspondence between the second boss 3032 and the second positioning hole 3321 is similar to the above. As can be more clearly seen from FIG. 16, when the first battery module and the second battery module need to be electrically connected, the first boss 3031 is inserted into the first positioning hole 3211, and the second boss 3032 is inserted into the second positioning hole 3321. In this way, the relative position between the first connector 321 and the second connector 322 is fixed. After employing this electrical connection structure, if connection points need to be added, it is only necessary to increase the number of bosses on the adapter and correspondingly increase the number of connectors. It is not necessary to use a pair of connectors for every two connectors, thereby reducing the number of parts. When the first battery module and the second battery module need to be connected to a power distribution box, only three components including the first connector 321, the second connector 322, and the adapter 303 are required, eliminating the need for four connectors, i.e., one pair of connectors arranged between the first battery module and the second battery module, and one pair of connectors arranged between the second battery module and the power distribution box. Consequently, the number of components is effectively reduced, and the connection complexity is lowered. This beneficial effect will be described in further detail below with specific examples.

In an embodiment, in a state where the first connector 321 and the second connector 322 are connected to the adapter, the first connector 321 and the second connector 322 do not overlap in the height direction.

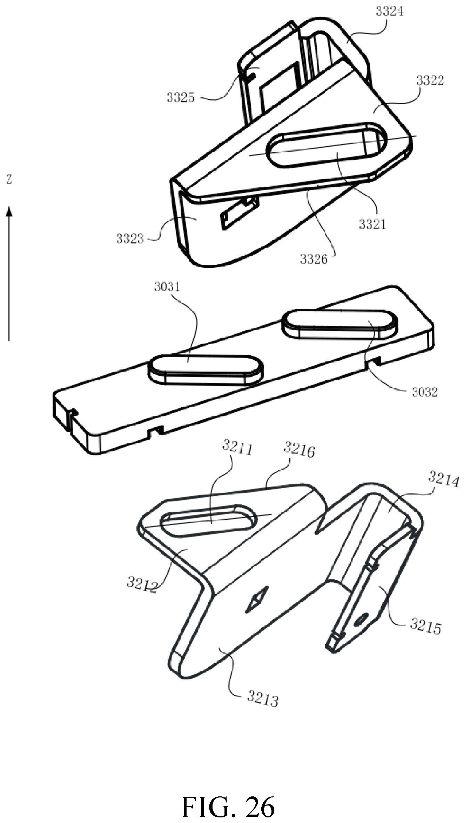

Referring to FIGS. 19 and 26, in a state where the first connector 321 and the second connector 322 are connected to the adapter, the first connector 321 and the second connector 322 do not overlap in the height direction. The advantage of this structure is that, in a subsequent welding process, the two connectors will not block each other due to overlapping. If a welding defect is present between the first connector 321 and the adapter, or a welding defect is present between the second connector 322 and the adapter, the welding defect can be discovered in time.

In an embodiment, the first connector 321 includes a first positioning portion 3212, the first positioning portion 3212 is formed with a first positioning hole 3211, the first positioning hole 3211 is a waist-shaped hole, and the first boss 3031 is a waist-shaped boss; and/or the second connector 322 includes a second positioning portion 3322, the second positioning portion 3322 is formed with a second positioning hole 3321, the second positioning hole 3321 is a waist-shaped hole, and the second boss 3032 is a waist-shaped boss.

As shown in FIGS. 19 to 21, the first connector 321 includes a first positioning portion 3212, the first positioning portion 3212 is formed with a first positioning hole 3211, and the first positioning hole 3211 is a waist-shaped hole, and correspondingly, the first boss 3031 is a waist-shaped boss. The waist shape facilitates visual identification of the assembly orientation, thereby achieving a fool-proof design.

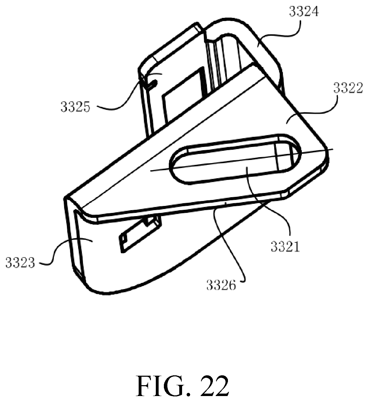

As shown in FIGS. 22 to 24, the second connector 322 includes a second positioning portion 3322, the second positioning portion 3322 is formed with a second positioning hole 3321, the second positioning hole 3321 is a waist-shaped hole, and correspondingly, the second boss 3032 is a waist-shaped boss. The waist shape facilitates visual identification of the assembly orientation, thereby achieving a fool-proof design.

In an embodiment, the long axis of the first boss 3031 is arranged at an angle to the long axis of the adapter; and/or the long axis of the second boss 3032 is arranged at an angle to the long axis of the adapter.

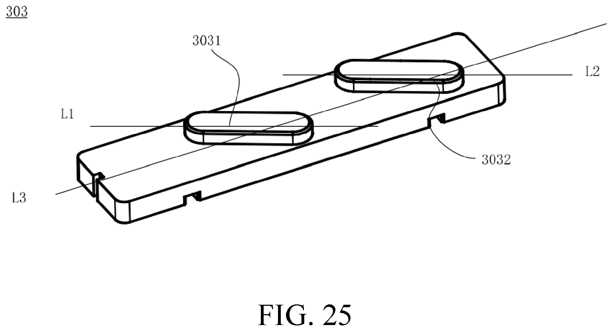

Referring to FIG. 25, the long axis L1 of the first boss 3031 is arranged at an angle to the long axis L3 of the adapter, that is, L1 is neither parallel nor coincident with L3. This configuration facilitates the installer's visual identification of the assembly angle during mounting of the first connector 321, thereby achieving the fool-proof design. Similarly, the long axis L2 of the second boss 3032 can also be arranged at an angle to the long axis L3 of the adapter. This configuration likewise facilitates the installer's visual identification of the assembly angle during mounting of the second connector 322, thereby achieving the fool-proof design.

In an embodiment, in a state where the first connector 321 and the second connector 322 are connected to the adapter, the sum of the area of the first positioning portion 3212 and the area of the second positioning portion 3322 is less than the area of the adapter.

Referring to FIG. 26, in a state where the first connector 321 and the second connector 322 are connected to the adapter, the sum of the area of the first positioning portion 3212 and the area of the second positioning portion 3322 is less than the area of the adapter. In other words, on the plane where the first boss 3031 and the second boss 3032 are located, the first positioning portion 3212 and the second positioning portion 3322 do not completely cover the adapter, a portion of the adapter needs to be exposed, which facilitates visual identification of the connection reliability between the first connector 321, the second connector 322, and the adapter. Additionally, this exposed portion can provide clearance space for the connection of other components, such as a sampling member, to the adapter.

In an embodiment, the first connector 321 includes a first transition portion 3213, and the first transition portion 3213 is arranged at an angle to the first positioning portion 3212; and/or the second connector 322 includes a second transition portion 3323, and the second transition portion 3323 is arranged at an angle to the second positioning portion 3322.

Referring to FIGS. 19 to 21, the first connector 321 further includes a first transition portion 3213, and the first transition portion 3213 is arranged at an angle to the first positioning portion 3212, that is, the first transition portion 3213 is neither parallel nor coincident with the first positioning portion 3212.

Referring to FIGS. 22 to 24, the second connector 322 further includes a second transition portion 3323, and the second transition portion 3323 is arranged at an angle to the second positioning portion 3322, that is, the second transition portion 3323 is neither parallel nor coincident with the second positioning portion 3322.

In an embodiment, in the state where the first connector 321 and the second connector 322 are connected to the adapter, the first transition portion 3213 and the second transition portion 3323 are respectively located on both sides of the adapter.

Referring to FIG. 26, in the state where the first connector 321 and the second connector 322 are connected to the adapter, the first transition portion 3213 and the second transition portion 3323 are respectively located on both sides of the adapter. After the first boss 3031401 is inserted into the first positioning hole 3211 and the second boss 3032 is inserted into the second positioning hole 3321, the first transition portion 3213 and the second transition portion 3323 are respectively located on both sides of the adapter. In this configuration, the first transition portion 3213 and the second transition portion 3323 can respectively assist in positioning the first connector 321 and the second connector 322. Furthermore, by utilizing the compression from surrounding components on these two transition parts, the first connector 321 and the second connector 322 can be attached to the adapter at an appropriate position, thereby avoiding subsequent issues such as virtual welding or weld cracking.

In an embodiment, the first connector 321 further includes a first wiring portion 3215, and the first wiring portion 3215 is spaced apart from the first transition portion 3213; and/or the second connector 322 further includes a second wiring portion 3325, and the second wiring portion 3325 is spaced apart from the second transition portion 3323.

As shown in FIGS. 19 to 21, the first connector 321 further includes: a first bending portion 3214 arranged at an angle to both the first positioning portion 3212 and the first transition portion 3213; and a first wiring portion 3215 arranged at an angle to the first bending portion 3214. The first wiring portion 3215 is spaced apart from the first transition portion 3213. This spaced arrangement can be achieved either by stamping the component material or by welding.

As shown in FIGS. 22 to 24, the second connector 322 further includes: a second bending portion 3324 arranged at an angle to both the second positioning portion 3322 and the second transition portion 3323; and a second wiring portion 3325 arranged at an angle to the second bending portion 3324. The second wiring portion 3325 is spaced apart from the second transition portion 3323. This spaced arrangement can be achieved either by stamping the component material or by welding.

In an embodiment, in the state where the first connector 321 and the second connector 322 are connected to the adapter, the first wiring portion 3215 is farther from the adapter than the first transition portion 3213, and the second wiring portion 3325 is farther from the adapter than the second transition portion 3323.

As shown in FIG. 26, after the first connector 321 and the second connector 322 are connected to the adapter, the first wiring portion 3215 and the second wiring portion 3325 are parallel to each other and respectively located on both sides of the adapter. The first wiring portion 3215 is farther from the adapter than the first transition portion 3213, and the second wiring portion 3325 is farther from the adapter than the second transition portion 3323. This configuration offers the advantage of not only facilitating the connection between the two connectors and the surrounding wire harnesses, but also maximizing the distance between the connection points of the two connectors and the surrounding wire harnesses, thereby reducing risks such as arcing and short circuits.

In an embodiment, the first positioning portion 3212 has a first edge 3216 parallel to the length direction of the first positioning hole 3211, and the second positioning portion 3322 has a second edge 3326 parallel to the length direction of the second positioning hole 3321. In the state where the first connector 321 and the second connector 322 are connected to the adapter, the first edge 3216 and the second edge 3326 are spaced apart.

As shown in FIG. 17, after the first connector 321 and the second connector 322 are connected to the adapter, the first edge 3216 and the second edge 3326 are spaced apart. This configuration allows the two connectors to be interleaved without lapping, facilitating simultaneous visual identification during subsequent welding processes to determine whether the two connectors have become detached or fallen off from the adapter.

In order to enhance the connection strength, after the first boss 3031 is inserted into the first positioning hole 3211 and the second boss 3032 is inserted into the second positioning hole 3321, the first connector 321 and the adapter are welded along the periphery between the first boss 3031 and the first positioning hole 3211; and the second connector 322 and the adapter are welded along the periphery between the second boss 3032 and the second positioning hole 3321.

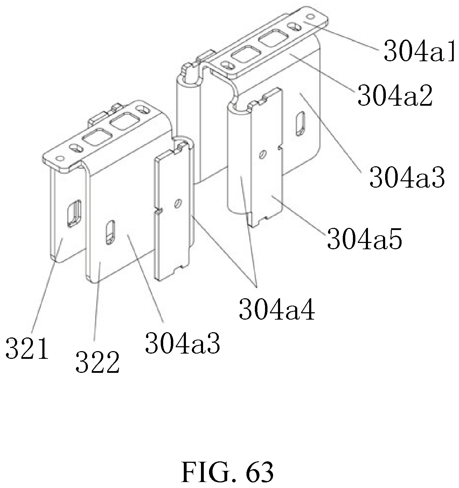

In the second embodiment disclosed in the present disclosure, as shown in FIG. 65, the battery pack 10 includes at least a first battery module and a second battery module. The busbar 304a includes a first connector 321 and a second connector 322. One end of the first connector 321 is electrically connected to the first battery module, the other end of the first connector 321 is electrically connected to one end of the second connector 322, and the other end of the second connector 322 is electrically connected to the second battery module. Further, in an embodiment of the present disclosure, as shown in FIGS. 63 and 65, the other end of the first connector 321 and the one end of the second connector 322 are connected in a stacked manner. Specifically, the first connecting portion 304a1 of the first connector 321 and the first connecting portion 304a1 of the second connector 322 are stacked and electrically connected by welding or fastening. The first connecting portion 304a1 of the first connector 321 and the first connecting portion 304a1 of the second connector 322 are stacked on the structural beam 22, to support the first connecting portion 321 and the second connecting portion 322 by the structural beam 22. Both the first connector 321 and the second connector 322 are insulated from the structural beam 22 to ensure the safety of the busbar 304a. The second connecting portion 304a5 of the first connector 321 is electrically connected to the output terminal of the first battery module, and the second connecting portion 304a5 of the second connector 322 is electrically connected to the output terminal of the second battery module. Furthermore, in the embodiment, the first connecting portion 304a1 of the first connector 321 is electrically connected to the first connecting portion 304a1 of the second connector 322, the bending angle of the first bending portion 304a2 of the first connector 321 is 0 to 90 degrees, the second connecting portion 304a5 of the first connector 321 is electrically connected to the first battery module, and the bending angle of the second bending portion 304a4 of the first connector 321 is 90 to 180 degrees; and/or the bending angle of the first bending portion 304a2 of the second connector 322 is 0 to 90 degrees, the second connecting portion 304a5 of the second connector 322 is electrically connected to the second battery module 201, and the bending angle of the second bending portion 304a4 of the second connector 322 is 90 to 180 degrees. Further, in an embodiment of the present disclosure, the bending angle of the first bending portion 304a2 of the first connector 321 is 0 to 90 degrees, and the bending angle of the second bending portion 304a4 of the first connector 321 is 90 to 180 degrees; and the bending angle of the first bending portion 304a2 of the second connector 322 is 0 to 90 degrees, and the bending angle of the second bending portion 304a4 of the second connector 322 is 90 to 180 degrees. The selection of the aforementioned angles is primarily determined by the placement of the battery modules 30. Due to the limited space at the location where the battery modules 30 are positioned relative to the structural beam 22, the bending angle of the bending portion in the busbar 304a close to the battery module 30 is greater than 90 degrees to satisfy the spatial requirements between the battery module 30 and the structural beam 22. In contrast, the bending angle of the bending portion near the connection of the two busbars 304a is mainly dictated by the structural design of the structural beam 22. Generally, since the cross-section of the structural beam 22 is rectangular, the bending angle of the bending portion is required to be less than 90 degrees.

For the above-mentioned embodiment, the assembly process is as follows: 1. the second connecting portion 304a5 of the first connector 321 is electrically connected to the output terminal of the first battery module. 2. The first connector 321 is bent by the second bending portion 304a4, so that the second connecting portion 304a5 and the third transition portion 304a3 are arranged parallel to each other. 3. The first connecting portion 304a1 of the first connector 321 is bent by the first bending portion 304a2, so that the first connecting portion 304a1 is arranged on the top surface of the structural beam 22. 4. The second connector 322 is processed according to the above steps 1 to 3, so that the output terminal of the second battery module is electrically connected to the second connector 322, and the first connecting portion 304a1 of the second connector 322 is arranged on the top surface of the structural beam 22 and is stacked with the first connecting portion 304a1 of the first connector 321. 5. The first connecting portion 304a1 of the first connector 321 and the first connecting portion 304a1 of the second connector 322 are welded.

In the third embodiment of the present disclosure, the first connector and the second connector may also be horizontally aligned, contacting only in the horizontal direction, and thus connected together. At this time, the connection point is also located at the end of the structural beam away from the tray. Furthermore, other assembly forms of the connecting sheets are consistent with the aforementioned second embodiment.

In summary, since the tray transverse beams and tray longitudinal beams on the battery traypartition the battery accommodating space into a plurality of battery accommodating spaces, and each of the battery strings is arranged within the battery accommodating space, the connection methods disclosed in the first embodiment or the second embodiment described above need to be used when connecting the battery stringsin the twobattery accommodating spaces.

In order to ensure the independence of the two battery accommodating spaces, sealing is required at the position of the structural beam where the two battery strings are connected.

Therefore, in an embodiment of the present disclosure, the tray transverse beam 223 includes a partition body 22301 and an insulating assembly 22302. The partition body 22301 is arranged on the side beam structure 25, and the partition body 22301 is arranged with a notch. The insulating assembly 22302 is configured to seal the notch, and the insulating assembly 22302 is configured to allow a connecting assembly connected to the battery module 30 to pass through.

Referring to FIG. 31, the base plate 23 is arranged at the bottom of the battery tray 20. The base plate 23 is configured to support the battery module 30. The side beam structure 25 is arranged on the peripheral side of the base plate 23 to enclose a mounting cavity. The side beam structure 25 is, for example, arranged at the edge of the base plate 23, and the side beam structure 25 as a whole is annular.

The base plate 23 is extruded from a metal material such as an aluminum profile. The base plate 23 and the side beam structure 25 are welded together by, for example, peripheral arc welding or laser welding. The side beam is configured as an annular structure, such as rectangular, circular, or other shapes. The present disclosure does not limit the specific shape of the side beam, as long as the side beam and the base plate 23 cooperate to enclose and form an accommodating cavity.

As shown in FIG. 31, the tray transverse beam 223 includes four tray transverse beams 223 and one tray longitudinal beam 224, and six battery accommodating spaces 21 are formed within the battery tray 20. The tray longitudinal beam 224 is arranged at the centerline position of the tray transverse side beams 221, the tray longitudinal beam 224 is perpendicular to the tray transverse side beams 221, and two ends of the tray longitudinal beam 224 are fixedly connected to the tray transverse side beams 221, respectively.

Referring to FIGS. 31 to 34, at least one tray transverse beam 223 is arranged. When a plurality of tray transverse beams 223 are arranged, a plurality of tray transverse beams 223 are arranged parallel to each other, for example. The tray transverse beams 223 are arranged inside the side beam structure 25. The tray transverse beams 223 are configured to partition the base plate 23 into at least two battery accommodating spaces 21, each of the battery accommodating spaces is configured to place a battery module 30.

The tray transverse beam 223 includes a partition body 22301 and an insulating assembly 22302. Referring to FIGS. 31 and 34, an end of the partition body 22301 adjacent to the side beam structure 25 is fixedly connected to the side beam structure 25. A side of the partition body 22301 adjacent to the base plate 23 abuts against the base plate 23. Certainly, the side of the partition body 22301 adjacent to the base plate 23 may also be fixedly connected to the base plate 23 by means such as welding or adhesive bonding.

The insulating assembly 22302 is arranged on the partition body 22301. The partition body 22301 is arranged with a notch, and the insulating assembly 22302 is configured to seal the notch. It should be noted that the insulating assembly 22302 seals the notch position of the partition body 22301, so that gas in the accommodating cavities on both sides of the tray transverse beam 223 cannot easily flow at the connection point between the partition body 22301 and the insulating assembly 22302. Furthermore, the insulating assembly 22302 and the partition body 22301 are hermetically connected. Sealed connection means that a sealing structure is formed at the connection between the partition body 22301 and the insulating assembly 22302, and the gas in the battery accommodating spaces 21 on both sides of the first partition cannot flow at the connection point between the partition body 22301 and the insulating assembly 22302.

In an embodiment of the present disclosure, the partition body 22301 is made of a metal material, such as steel, which is beneficial for improving the structural strength of the partition body 22301. The insulating assembly 22302 is made of a material such as rubber, which is beneficial for achieving insulation protection at the electrical connection position of the battery module 30. It is also beneficial for reducing the self-weight of the partition device, thereby reducing the self-weight of the battery tray 20 and achieving lightweight of the assembled battery pack 10. In addition, the insulating assembly 22302 is made of a rubber material, which is also beneficial for improving the sealing effect between the partition body 22301 and the insulating assembly 22302.

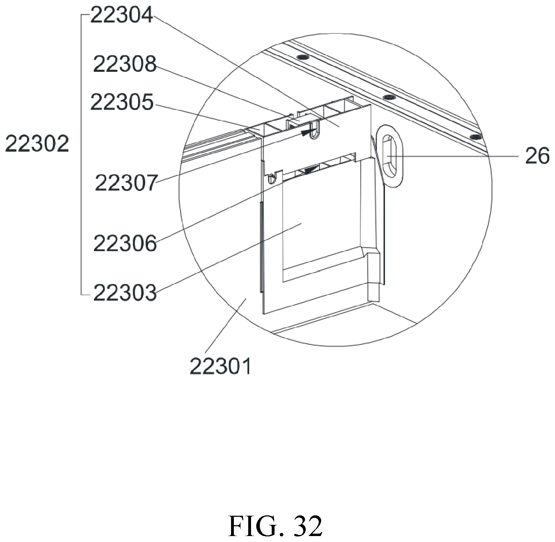

Referring to FIG. 32, a battery module 30 is arranged in each of the battery accommodating spaces 21. The battery modules 30 located on both sides of the tray transverse beam 223 are connected by a connector. The connector is, for example, connected to the electrode terminal of the battery module 30. The connector is a busbar or an electrical wire made of a conductive metal material such as copper, aluminum, iron, nickel, copper alloy, or aluminum alloy.

The insulating assembly 22302 is configured to allow a connector, which is connected to the battery module 30, to pass through.

Furthermore, the insulating assembly 22302 includes an insulator body. The insulator body is connected to the partition body 22301 in a sealed manner. A clearance region is arranged on the insulator body, and the clearance region is configured to allow a connecting assembly connected to the battery module 30 to pass through.

Still further, as shown in FIG. 32, the insulating assembly 22302 includes an insulator body connected to the partition body 22301 in a sealed manner. The insulator body is, for example, made of a rubber material. The insulator body and the partition body 22301 are, for example, fixed by adhesive bonding or welding.

A clearance region is arranged on the insulator body. The clearance region is, for example, arranged at the position where the battery cell of the battery module 30 is located. The clearance region penetrates through the insulator body.

The clearance region is configured to allow a connecting assembly connected to the battery module 30 to pass through. At least a portion of the connecting assembly is located within the clearance region, and both ends of the connector extend to both sides of the insulating assembly 22302 to connect the battery modules 30 located on both sides of the insulating assembly 22302.

The insulating assembly 22302 is, for example, arranged as one. Certainly, the insulating assembly 22302 may also be arranged as two, or a plurality. The clearance region is, for example, arranged as one. Certainly, the clearance region may also be arranged as two, or a plurality.

It should be noted that, in the present disclosure, the number of the insulating assemblies 22302 and the number of the clearance regions do not need to correspond one-to-one. That is to say, when one insulating assembly 22302 is arranged, one clearance region may be arranged, or two or more clearance regions may be arranged.

In an embodiment, the size of the clearance region is adjusted according to the size of the connecting assembly to reduce the gap when the connecting assembly is located within the clearance region, thereby improving the sealing effect of the electromagnetic accommodating space.

In an embodiment, the insulating assembly 22302 includes a first insulator 22303 and a second insulator 22304. The first insulator 22303 is arranged on the partition body 22301, and the second insulator 22304 is arranged on the first insulator 22303.

A clearance region is arranged on at least one of the first insulator 22303 and the second insulator 22304.

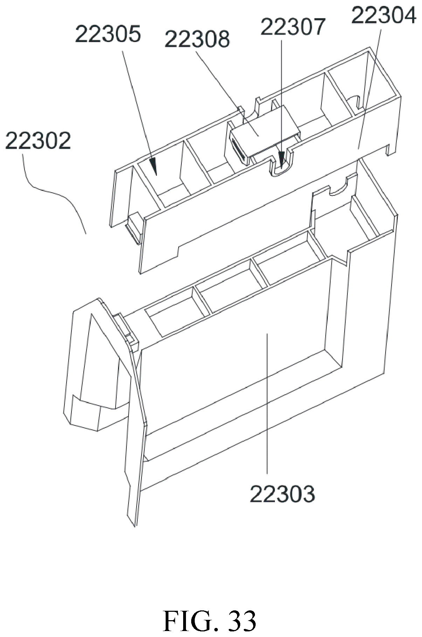

Referring to FIGS. 32 and 33, the insulating assembly 22302 includes a first insulator 22303 and a second insulator 22304 which are arranged in a stacked manner. The first insulator 22303 is arranged on the partition body 22301. The first insulator 22303 and the partition body 22301 are, for example, fixedly connected by means of engagement.

The second insulator 22304 is arranged on a side of the first insulator 22303 away from the partition body 22301, that is, the second insulator 22304 is arranged above the first insulator 22303, as shown in FIG. 32. The second insulator 22304 and the first insulator 22303 are connected by means of engagement. Referring to FIG. 33, a side of the first insulator 22303 close to the second insulator 22304 is arranged with a bump, and the second insulator 22304 is arranged with a card slot engaged with the bump, so as to realize the engagement between the first insulator 22303 and the second insulator 22304.

Referring to FIG. 32, a clearance region is located on at least one of the first insulator 22303 and the second insulator 22304. That is to say, the clearance region may be formed only on the first insulator 22303, the clearance region may be formed only on the second insulator 22304, or the clearance region may be formed simultaneously on both the first insulator 22303 and the second insulator 22304.

In the present disclosure, the insulating assembly 22302 is arranged to include the first insulator 22303 and the second insulator 22304, i.e., the insulating assembly 22302 is arranged separately, so that during assembly, first the connector can be assembled with the battery module 30, then the battery modules 30 connected by the connector can be placed as a whole on the first insulator 22303, and finally the second insulator 22304 can be mounted. This improves the mounting convenience of the insulating assembly 22302, for the connector and simultaneously reduces processing difficulty while enhancing processing efficiency.

In an embodiment of the present disclosure, the clearance region includes a first clearance region 22306 and a second clearance region 22307. The first clearance region 22306 and the second clearance region 22307 accommodate a busbar and an electrical wire, respectively.

The first clearance region 22306 is, for example, configured to allow a busbar connected to the battery module 30 to pass through, and the second clearance region 22307 is, for example, configured to allow an electrical wire connected to the battery module 30 to pass through. Certainly, it may also be configured such that the first clearance region 22306 allows an electrical wire connected to the battery module 30 to pass through, and the second clearance region 22307 is configured to allow a busbar connected to the battery module 30 to pass through. The present disclosure does not impose specific limitations in this regard.

In addition, the present disclosure does not limit the arrangement positions of the first clearance region 22306 and the second clearance region 22307. The second clearance region 22307 is, for example, located on a side of the second insulator 22304 away from the first insulator 22303. Specifically,
in an embodiment, as shown in FIG. 32, the first clearance region 22306 is formed on a side of the first insulator 22303 close to the second insulator 22304.

In an embodiment, the first clearance region 22306 is located on the first insulator 22303 and the second insulator 22304, and is located between the first insulator 22303 and the second insulator 22304.

In an embodiment, the first clearance region 22306 is located on a side of the second insulator 22304 close to the first insulator 22303.

It should be noted that the insulating assembly 22302 may further include a larger number of insulators, such as a third insulator, a fourth insulator. The present disclosure does not specifically limit the number of insulators in the insulating assembly 22302, and the structure of the insulating assembly 22302 is selected according to the actual structure.

By arranging the first insulator 22303 and the second insulator 22302, and forming a clearance region between the first insulator 22303 and the second insulator 22304, the present disclosure facilitates partitioned insulation protection for various connecting assemblies between adjacent battery modules 30, facilitates arranging the shape of the clearance region according to the specific shape of the connecting assembly, so as to reduce the gap after the connecting assembly is placed within the clearance region, thereby improving the sealing effect of the battery accommodating space 21 and further enhancing the exhaust effect.

In an embodiment, the insulating assembly 22302 further includes a limiting member 22308. The limiting member 22308 is arranged on the second insulator 22304, and the limiting member 22308 is configured to limit the connecting assembly within the clearance region.

Referring to FIGS. 32 and 33, a side of the second insulator 22304 away from the first insulator 22303 is arranged with a second clearance region 22307 and a limiting member 22308. The second clearance region 22307 is arranged with an opening on a side away from the first insulator 22303.

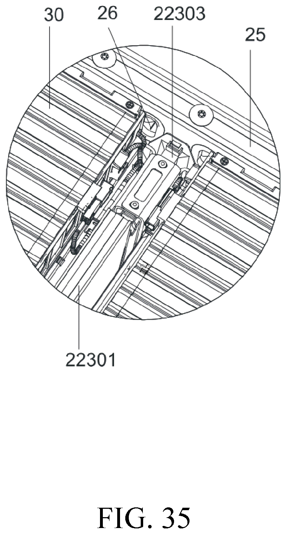

In an embodiment, the limiting member 22308 covers the second clearance region 22307, and the limiting member 22308 is fixedly connected to the second insulator 22304. The limiting member 22308 is, for example, fixedly connected to the second insulator 22304 by a snap-fit structure, as shown in FIG. 35.

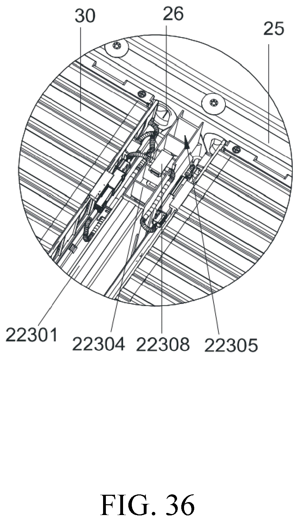

A connector, such as an electrical wire connected to the battery module 30, is arranged within the second clearance region 22307. The limiting member 22308 is configured to limit the connector within the second clearance region 22307, so as to limit the connector inside the second clearance region 22307, as shown in FIG. 36.

In the present disclosure, a side of the second insulator 22304 away from the first insulator 22303 is arranged with a limiting member 22308, and the limiting member 22308 cooperates with the second clearance region 22307 to achieve limitation of the connector within the second clearance region 22307, thereby further improving the limiting effect and insulating effect of the insulating assembly 22302 on the connector.

In an embodiment, a sealing adhesive is arranged within at least one of the first insulator 22303 and the second insulator 22304. The sealing adhesive is configured to seal the connecting assembly within the clearance region.

Referring to FIGS. 32 and 33, in an embodiment of the present disclosure, the second insulator 22304 is arranged above the first insulator 22303. The second insulator is arranged with at least one third through hole 22305. The third through hole 22305 penetrates through the second insulator 22304, so that the first insulator 22303 located below the second insulator 22304 communicates with the outside.

A sealing adhesive is arranged within the third through hole 22305. The sealing adhesive bonds and fixes the first insulator 22303 to the second insulator 22304 and seals the gap between the connector and the clearance region. Thereby, the overall sealing performance of the insulating assembly 22302 is improved, that is, the sealing performance of the battery accommodating space 21 is further improved, thus enhancing the exhaust effect of the battery tray 20.

In an embodiment, a side of the first insulator 22303 close to the second insulator 22304 is arranged with an accommodating cavity. The accommodating cavity is arranged corresponding to the third through hole 22305. As shown in FIG. 5, the accommodating cavity is configured to accommodate the sealing adhesive, further sealing the gap between the connecting assembly and the clearance region, and improving the sealing performance of the battery accommodating space 21.

In the present disclosure, by arranging the sealing adhesive between the first insulator 22303 and the second insulator 22304, it is beneficial to seal the gap between the connector and the clearance region, thereby improving the sealing performance of the battery accommodating space 21 within the battery tray 20, ensuring the exhaust gas in the battery accommodating space 21 independent of each other, and causing the airflow to be discharged into the exhaust channel 2212 from the position of the one-way valve 26 according to a preset path, thereby improving the exhaust effect of the battery tray 20.

When the insulating assembly 22302 is mounted in the battery tray 20 provided by the present disclosure, the first insulator 22303 is first mounted onto the partition body 22301. Then, the bus copper bars between adjacent battery modules 30 are connected and lapped onto the first clearance region 22306. Next, the second insulator 22304 is mounted onto the first insulator 22303; the second insulator 22304 limits the bus copper bars within the first clearance region 22306. Subsequently, the electrical wires between adjacent battery modules 30 are placed into the second clearance region 22307 and limited by the limiting member 22308. Finally, the sealing adhesive is injected into the third through hole 22305 of the second insulator 22304 to seal the region between the first insulator 22303 and the second insulator 22304.

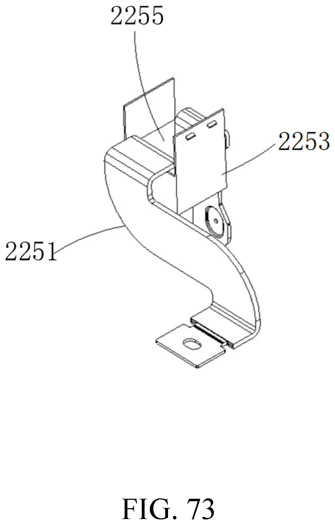

In another embodiment of the present disclosure, referring to FIGS. 73 to 75, the insulating assembly 22302 includes a first connecting assembly 2251, a second connecting assembly 2252, and a first housing 2253.

The first connecting assembly 2251 includes a first connecting terminal and a second connecting terminal. The first connecting terminal is adapted to be electrically connected to a first electrical assembly within one of the battery accommodating spaces 21 or electrical accommodating spaces 28. The second connecting assembly 2252 includes a third connecting terminal and a fourth connecting terminal. The third connecting terminal is adapted to be electrically connected to a second electrical assembly within the other of the battery accommodating spaces 21 or electrical accommodating spaces 28. Specifically, in an embodiment of the present disclosure, the battery pack includes a plurality of battery accommodating spaces. The first connecting terminal is adapted to be electrically connected to a first electrical assembly within one of the battery accommodating spaces 21. The second connecting assembly 2252 includes a third connecting terminal and a fourth connecting terminal. The third connecting terminal is adapted to be electrically connected to a second electrical assembly within the other of the battery accommodating spaces 21. In another embodiment of the present disclosure, the first connecting terminal is adapted to be electrically connected to a first electrical assembly within a battery accommodating space 21. The second connecting assembly 2252 includes a third connecting terminal and a fourth connecting terminal. The third connecting terminal is adapted to be electrically connected to a second electrical assembly within an electrical accommodating space 28.

An accommodating cavity is formed in the first housing 2253, and the accommodating cavity is arranged with an open side.

The second connecting terminal and the fourth connecting terminal are adapted to be accommodated within the accommodating cavity via the open side, and the second connecting terminal and the fourth connecting terminal are electrically connected to each other. The open side is formed as a glue injection port, configured to inject insulating adhesive into the accommodating cavity to cover the second connecting terminal and the fourth connecting terminal after they are electrically connected. It should be noted that, in practical applications, the insulating assembly 22302 may be in a state where the injection of insulating adhesive is not completed.

The first connecting terminal of the first connecting assembly 2251 and the third connecting terminal of the second connecting assembly 2252 are connected to two electrical assemblies, respectively, wherein the two electrical assemblies are located in adjacent battery accommodating space 21 and electrical accommodating space 28, or in adjacent battery accommodating space 28 and battery accommodating space 28; the first housing 2253 is accommodated in the clearance space.

In the aforementioned insulating assembly 22302, an accommodating cavity is formed in the first housing 2253, and the accommodating cavity is arranged with an open side. The second connecting terminal and the fourth connecting terminal can be accommodated within the accommodating cavity via the open side. Correspondingly, the position where the third connecting terminal and the fourth connecting terminal are electrically connected is also located within the accommodating cavity. The open side can serve as a glue injection port, configured to inject insulating adhesive into the accommodating cavity to cover the second connecting terminal and the fourth connecting terminal after they are electrically connected. In this way, due to the constraint of the first housing 2253, the injection position and the amount of adhesive are determined and controllable; moreover, after the injection is completed, the connection and insulation positions of the first connecting assembly 2251 and the second connecting assembly 2252 can form a regular shape, facilitating the coordination with the shape and position of other electrical or structural components. Correspondingly, the battery pack 10 employing the insulating assembly 22302 and the electrical device employing the battery pack 10 can also utilize the excellent characteristics of the insulating assembly 22302.

In an embodiment, the electrical assembly may include a power distribution box and a battery module 30. Correspondingly, the battery pack 10 provided in the present disclosure may include a battery tray 20, an insulating assembly 22302, a power distribution box, and a battery module 30.

The power distribution box may be accommodated in the electrical accommodating space 28, and the battery module 30 may be accommodated in the battery accommodating space 21. The battery module 30 includes a plurality of battery cells 101 for storing electrical energy to achieve power supply for electrical devices. The power distribution box typically exists in the form of a power distribution box, and is configured to perform power connection, breaking, distribution, and charging management of the battery module 30.

In an embodiment, the battery pack 10 may include one battery module 30, or may include two or more battery modules 30. Each of the battery modules 30 may include one battery cell 101. Typically, the battery module 30 includes a plurality of battery cells 101, and the plurality of battery cells 101 may form corresponding series or parallel connections according to the voltage output requirements of the battery pack 10, which can be set based on actual needs and is not limited herein.

In some embodiments, the battery accommodating space 21 is configured to accommodate the battery module 30. One of the battery accommodating spaces 21 is adjacent to the electrical accommodating space 28. The first connecting terminal of the first connecting assembly 2251 is electrically connected to the power distribution box, and the third connecting terminal of the second connecting assembly 2252 is electrically connected to the battery module 30. In an embodiment, the battery tray 20 is typically partitioned into one electrical accommodating space 28 and a plurality of battery accommodating spaces 21 by two or more partitions, the power distribution box accommodated in the electrical accommodating space 28 is electrically connected to the battery module 30 in the adjacent battery accommodating space 21 by one insulating assembly 22302. Similarly, two battery modules 30 located in two adjacent battery accommodating spaces 21 are also electrically connected by another insulating assembly 22302. The number of insulating assemblies 22302 can be set according to requirements.

For example, the battery tray 20 is partitioned by three partitions into one electrical accommodating space 28 and three battery accommodating spaces 21. The battery pack 10 includes one power distribution box and three battery modules 30.

In some embodiments, the battery tray 20 includes a base plate 23, a plurality of side beams, and a plurality of tray transverse beams 223. The plurality of side beams are connected to the base plate 23 and arranged along the periphery of the base plate. The plurality of side beams and the base plate 23 jointly define the battery accommodating spaces 21 and the electrical accommodating space 28.

A plurality of tray transverse beams 223 are arranged in the battery tray 20 and arranged at intervals. The tray transverse beams 223 serve as partitions to partition the battery tray 20 into a plurality of mutually independent battery accommodating spaces 21 and an electrical accommodating space 28.

One side of the tray transverse beam 223 is fixedly connected to the base plate, which can provide reinforcement for the battery pack 10. The clearance space is a notch formed on another opposite side of the tray transverse beam 223 and penetrating through the tray transverse beam 223. An inner wall of the notch is formed with a holding portion corresponding to the first housing 2253. In an embodiment, the holding portion may be a separately arranged engaging structure, or may be the inner wall of the notch itself, as long as it can achieve positioned mounting of the first housing 2253.

In some embodiments, a first clamping portion 2261 is formed on the outer side of the first housing 2253, and the first clamping portion 2261 is adapted to engage with and be fixed to an external device. Specifically, a card hole may be formed on the inner wall of the notch of the tray transverse beam 223, the first clamping portion 2261 may be formed as a snap-fit on the outer side of the first housing 2253, and the first housing 2253 is positioned and mounted at the notch of the tray transverse beam 223 through the cooperation of the snap-fit and the card hole. Certainly, the positions of the snap-fit and the card hole may be interchanged, or other structures having equivalent effects may be arranged.

In some embodiments, the insulating assembly 22302 may further include a second housing 2251. The second housing 2251 is configured to cooperate with the first housing 2253 to close the open side. The second housing 2251 may include a second clamping portion 2262, and the second clamping portion 2262 is adapted to engage with and be fixed to an external device. In an embodiment, the cooperation between the second housing 2251 and the first housing 2253 serves two purposes: on one hand, it can close the open side of the first housing 2253, allowing the portions of the first connecting assembly 2251 and the second connecting assembly 2252 located inside the first housing 2253 to be covered by the injected insulating adhesive, forming a regular shape; on the other hand, it can also be configured to fill and level the notch on the tray transverse beam 223. In an embodiment, the first housing 2253 and the second housing 2251 may be made of an insulating material to assist in ensuring the insulation gap.

In some embodiments, the first connecting assembly 2251 and the second connecting assembly 2252 may be a copper busbar or aluminum busbar, and are formed with a bent configuration according to requirements to meet the needs of electrically connecting different electrical assemblies and adapting to shape and position relationships. For example, the first connecting assembly 2251 may include a first connecting section 2256, a second connecting section 2257, and a first extension section 2258 connected between the first connecting section 2256 and the second connecting section 2257. A free end of the first connecting section 2256 forms the first connecting terminal, and a free end of the second connecting section 2257 forms the second connecting terminal. Furthermore, at least one of the first connecting section 2256 and the second connecting section 2257 is bent relative to the first extension section 2258.

Correspondingly, the second connecting assembly 2252 includes a third connecting section 2259, a fourth connecting section 2263, and a second extension section 2260 connected between the third connecting section 2259 and the fourth connecting section 2263. A free end of the third connecting section 2259 forms the third connecting terminal, and a free end of the fourth connecting section 2263 forms the fourth connecting terminal. At least one of the third connecting section 2259 and the fourth connecting section 2263 is bent relative to the second extension section 2260.

In some embodiments, the insulating assembly 22302 further includes a fixing member (not shown in the figures). The second connecting section 2257 and the fourth connecting section 2263 are sheet-like structures. When accommodated within the accommodating cavity, the second connecting section 2257 and the fourth connecting section 2263 at least partially overlap and are fixed by the fixing member. For example, fixing holes are arranged on the second connecting section 2257 and the fourth connecting section 2263, respectively, and the fixing member passes through the fixing holes to fix the second connecting section 2257 and the fourth connecting section 2263. The fixing member may be a rivet, screw, or the like, which, while achieving the fixed connection between the second connecting section 2257 and the fourth connecting section 2263, can also serve an auxiliary electrical connection function.

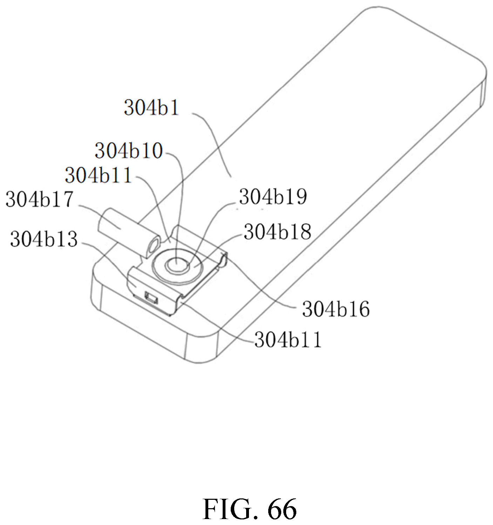

In an embodiment of the present disclosure, the structure of the sampling assembly should also be adaptively adjusted to ensure sampling reliability. Specifically, as shown in FIGS. 66 to 72, the busbar 304b is fixed on the base plate and electrically connected to the pole of the battery cell 101 to collect electrical signals from the battery cell 101. The sampling unit includes a sampling wire harness and a receiver. The receiver is located at the outer edge of the base plate. The sampling wire harness is connected between the receiver and the busbar 304b to transmit the electrical signals collected by the busbar 304b to the receiver. The receiver then analyzes, stores, and exchanges the received electrical signals with external devices, so as to facilitate real-time monitoring of the status of each battery cell 101 and prevent undesirable phenomena such as overcharging, over-discharging, and excessive temperature of the battery cells 101.

Understandably, in other embodiments, the battery pack 10 further includes a sealing cover (not shown in the figures). The sealing cover is arranged opposite to the base plate and cooperates with the side wall and the base plate to form a hermetically sealed accommodating space.

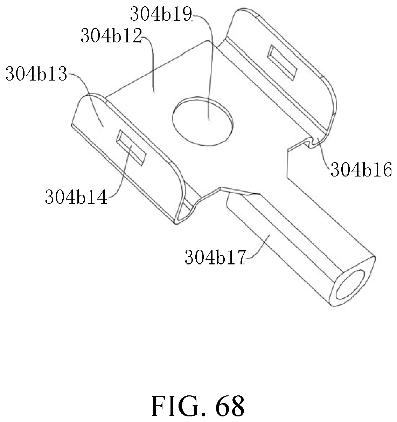

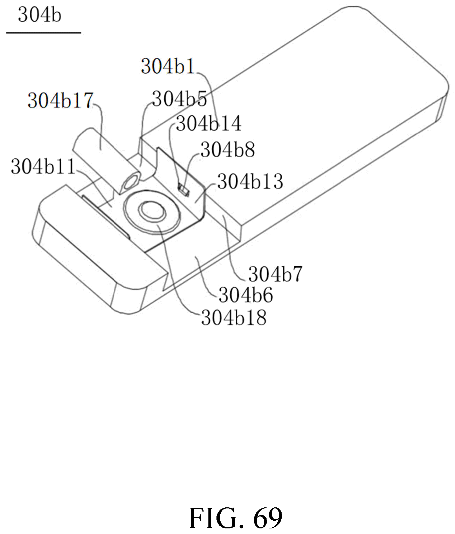

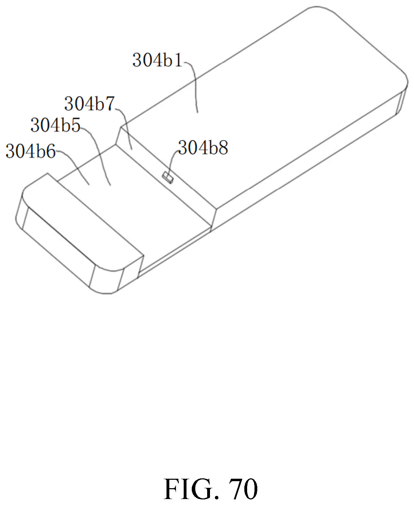

Referring to FIGS. 66 to 68 in combination, FIG. 68 is a schematic plan view of a busbar 304b according to an embodiment of the present disclosure; FIG. 69 is a schematic plan view of a conductive member 304b1 according to an embodiment of the present disclosure; FIG. 70 is a schematic plan view of a wiring connector 304b11 according to an embodiment of the present disclosure.

As shown in FIGS. 68 to 70, the busbar 304b in the present disclosure includes a conductive member 304b1 and a wiring connector 304b11. The conductive member 304b1 includes two opposite ends, one end is electrically connected to the pole of the battery cell 101, and the other end is arranged with a protrusion 304b2. The wiring connector 304b11 includes a wiring sheet 304b12 and holding portions 304b13, the number of holding portions 304b13 is two, and the two holding portions 304b13 are respectively located on opposite sides of the wiring sheet 304b12. The wiring connector 304b11 is located at the end of the conductive member 304b1 arranged with the protrusion 304b2, and the wiring sheet 304b12 of the wiring connector 304b11 is attached to the top surface 304b3 of the protrusion 304b2. The holding portions 304b13 extend along a direction of the wiring sheet 304b12 close to the conductive member 304b1 and are fixedly connected to the outer surface 304b4 of the protrusion 304b2, thereby fixing the wiring connector 304b11 to the conductive member 304b1. The holding portions 304b13 may abut against the outer surface 304b4 of the protrusion 304b2 to achieve fixed connection, or the holding portions 304b13 may be engaged with the outer surface 304b4 of the protrusion 304b2 to achieve fixed connection.

It is understandable that, since the busbar 304b of the present disclosure is arranged with the protrusion 304b2 on the conductive member 304b1 and the holding portions 304b13 are correspondingly arranged on the wiring connector 304b11, the holding portions 304b13 and the protrusion 304b2 are fixed to each other, thereby defining the relative position between the conductive member 304b1 and the wiring connector 304b11, preventing the conductive member 304b1 from being displaced relative to the wiring connector 304b11, and improving the mounting efficiency.

It should be noted that the number and position of the holding portions 304b13 in the above-described embodiments are provided by way of example only. That is, in other embodiments of the present disclosure, the number of the holding portions 304b13 is not limited to two, and may be one, three, or any other number. Meanwhile, the holding portions 304b13 may not only be distributed on opposite sides of the wiring sheet 304b12, but may also be arranged on any side of the wiring sheet 304b12. The present disclosure does not impose any specific limitations in these regards.

The wiring connector 304b11 further includes a wiring hole 304b 17. The wiring hole 304b17 is located at an end of the wiring connector 304b11 away from the conductive member 304b1 and is located on a side of the wiring sheet 304b12 facing away from the conductive member 304b1. The wiring hole 304b17 is connected to the sampling wire harness to transmit the collected signals to the receiver.

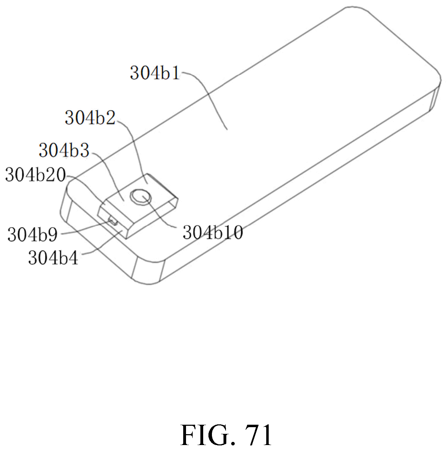

Referring to FIG. 70 and FIG. 71 in combination, FIG. 70 is a schematic plan view of a busbar 304b according to another embodiment of the present disclosure; FIG. 70 is a schematic plan view of a conductive member 304b1 according to another embodiment of the present disclosure.

As shown in FIGS. 70 and 71, the busbar 304b of the present disclosure includes a conductive member 304b1 and a wiring connector 304b11. The conductive member 304b1 includes two opposite ends, one end is electrically connected to the pole of the battery cell 101, and the other end is arranged with a groove 304b5. The wiring connector 304b11 includes a wiring sheet 304b12 and holding portions 304b13, the number of holding portions 304b13 is two, and the two holding portions 304b13 are respectively located on opposite sides of the wiring sheet 304b12. The wiring connector 304b11 is located at the end of the conductive member 304b1 arranged with the groove 304b5, and the wiring sheet 304b12 of the wiring connector 304b11 is attached to the bottom surface 304b6 of the groove 304b5. The holding portions 304b13 extend along a direction of the wiring sheet 304b12 facing away from the conductive member 304b1 and abut against the inner surface 304b7 of the groove 304b5, thereby fixing the wiring connector 304b11 to the conductive member 304b1. The wiring connector 304b11 further includes a wiring hole 304b17, the wiring hole 304b17 is located at an end of the wiring connector 304b11 away from the conductive member 304b1 and is located on a side of the wiring sheet 304b12 facing away from the conductive member 304b1. The wiring hole 304b17 is connected to the sampling wire harness to transmit the collected signals to the receiver.

It is understandable that, since the busbar 304b of the present disclosure is arranged with the protrusion 304b2 or the groove 304b5 on the conductive member 304b1 and the holding portions 304b13 are correspondingly arranged on the wiring connector 304b11, the holding portion 304b13 abuts against the outer surface 304b4 of the protrusion 304b2 or the inner surface 304b7 of the groove 304b5, thereby defining the relative position between the conductive member 304b1 and the wiring connector 304b11, preventing the conductive member 304b1 from being displaced or rotated relative to the wiring connector 304b11, and facilitating the subsequent welding process between the conductive member 304b1 and the wiring connector 304b11 and improving mounting efficiency.

In an embodiment, a protrusion 304b2 is arranged on the conductive member 304b1, and a holding portion 304b13 is correspondingly arranged on the wiring connector 304b11. A protrusion is also arranged on the holding portion 304b13. Two connecting holes are formed on the connecting sheet, one of the connecting holes is sleeved on the protrusion of the conductive member 304b1, and the other connecting hole is sleeved on the protrusion of the wiring connector 304b11, thereby defining the relative position between the conductive member 304b1 and the wiring connector 304b11 by the holding portion 304b13.

In the embodiment shown in FIG. 66, the holding portions 304b13 are elastic. The minimum distance between the two holding portions 304b13 is smaller than the width dimension of the protrusion 304b2. The two holding portions 304b13 clamp both sides of the protrusion 304b2 to fix the wiring connector 304b11. It is understandable that, in this embodiment, based on the conductive member 304b1 being arranged with the protrusion 304b2 and due to the inherent elasticity of the holding portions 304b13, the minimum distance between the two holding portions 304b13 is set to be smaller than the width dimension of the protrusion 304b2, while the two holding portions 304b13 clamp both sides of the protrusion 304b2. This utilizes the self-elastic deformation capability of the holding portions 304b13 to achieve automatic press-fit engagement between the holding portions 304b13 and the outer surface 304b4 of the protrusion 304b2, thereby fixing the wiring connector 304b11.

In the embodiment shown in FIG. 69, the maximum distance between the two holding portions 304b13 is greater than the width dimension of the groove 304b5. The two holding portions 304b13 abut against the inner surface 304b7 of the groove 304b5 to fix the wiring connector 304b11. It is understandable that, in this embodiment, based on the conductive member 304b1 being arranged with the groove 304b5 and due to the inherent elasticity of the holding portions 304b13, the maximum distance between the two holding portions 304b13 is set to be greater than the width dimension of the groove 304b5, while the two holding portions 304b13 abut against the inner surface 304b7 of the groove 304b5. This utilizes the self-elastic deformation capability of the holding portions 304b13 to achieve automatic press-fit engagement between the holding portions 304b13 and the inner surface 304b7 of the groove 304b5, thereby fixing the wiring connector 304b11.

Referring back to FIG. 68, in an embodiment, the wiring connector 304b11 includes a pre-bending section 304b16. The pre-bending section 304b16 is connected between the side wall of the wiring sheet 304b12 and the holding portion 304b13, and a cross-section of the pre-bending section 304b16 is arc-shaped. It is understandable that, in the embodiment, by arranging the pre-bending section 304b16 as a transition structure at the connection between the side wall of the wiring sheet 304b12 and the holding portion 304b13, and configuring the cross-section of the pre-bending section 304b16 to be arc-shaped, stress concentration can be reduced, thereby lowering the risk of fracture at the connection between the side wall of the wiring sheet 304b12 and the holding portion 304b13.

Referring back to FIGS. 66 to 69, in an embodiment, the conductive member 304b1 includes bumps 304b8, and the number of the bumps 304b8 is two. The two bumps 304b8 are respectively arranged on the outer surface 304b4 of opposite sides of the protrusion 304b2, and each of the bumps 304b8 projects toward a corresponding one of the holding portions 304b13. Each of the holding portions 304b13 includes a hollow region 304b14. The position and number of the hollow regions 304b14 are arranged corresponding to the position and number of the bumps 304b8. Each of the bumps 304b8 extends into and abuts against one hollow region 304b14.

Referring back to FIGS. 69 and 70, in an embodiment, the conductive member 304b1 includes bumps 304b8, and the number of the bumps 304b8 is two. The two bumps 304b8 are respectively arranged on the inner surface 304b7 of opposite sides of the groove 304b5, and each of the bumps 304b8 projects toward a corresponding holding portion 304b13. Each of the holding portions 304b13 includes a hollow region 304b14. The position and number of the hollow region 304b14 are arranged corresponding to the position and number of the bumps 304b8. Each of the bumps 304b8 extends into and abuts against one hollow region 304b14.

In the above embodiment, the bump 304b8 is arranged on the outer surface 304b4 of the protrusion 304b2 or on the inner surface 304b7 of the groove 304b5, and the hollow region 304b14 is arranged at the position of the holding portion 304b13 corresponding to the bump 304b8, and the bump 304b8 extends into and abuts against the hollow regions 304b14 to prevent the wiring connector 304b11 from moving away from the conductive member 304b1, thereby defining the relative position between the conductive member 304b1 and the connecting sheet.

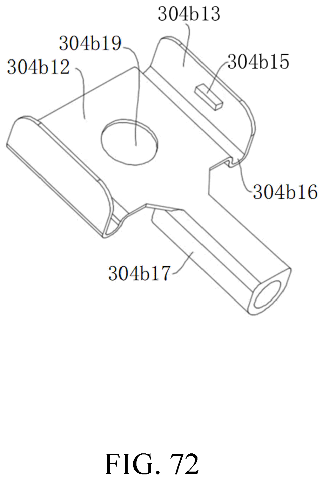

As shown in FIGS. 71 and 72, in an embodiment, the conductive member 304b1 includes card slots 304b9. The card slots 304b9 are arranged on the outer surface 304b4 of opposite sides of the protrusion 304b2. The holding portion 304b13 includes bosses 304b15. The position and number of the bosses 304b15 are arranged corresponding to the position and number of the card slots 304b9. Each of the bosses 304b15 is configured to extend into and abut against one card slot 304b9. It is understandable that, in this embodiment, the outer surface 304b4 of the protrusion 304b2 is recessed in a direction facing away from the holding portion 304b13 to form the card slots 304b9, while bosses 304b15 are correspondingly arranged on the holding portion 304b13 at positions matching the card slots 304b9, the card slots 304b9 and the bosses 304b15 engage with each other through abutting cooperation, preventing the wiring connector 304b11 from moving in a direction away from the conductive member 304b1, thereby further defining the relative position between the conductive member 304b1 and the connecting sheet.

It should be noted that, in an embodiment where the conductive member 304b1 is arranged with the groove 304b5, the inner surface 304b7 of the groove 304b5 may be recessed in a direction facing away from the holding portion 304b13 to form the card slots 304b9, which can also achieve the effects described in the above embodiment.

In an embodiment, when the conductive member 304b1 includes the bumps 304b8, projections of the hollow regions 304b14 of the two holding portions 304b13 on a surface of one of the holding portions 304b13 partially overlap or are spaced apart from each other. In another embodiment, when the conductive member 304b1 includes the card slots 304b9, projections of the bosses 304b15 of the two holding portions 304b13 on one of the holding portions 304b13 partially overlap or are spaced apart from each other.

It is understandable that, in the above-described embodiment, based on the conductive member 304b1 including the bumps 304b8 or the groove 304b5, the projections of the hollow regions 304b14 or the bosses 304b15 of the two holding portions 304b13 on a surface of one of the holding portions 304b13 are configured to partially overlap or be spaced apart from each other; that is, the shapes of the hollow regions 304b14 or the bosses 304b15 of the two holding portions 304b13 are set differently, or positions of the hollow regions 304b14 or the bosses 304b15 of the two holding portions 304b13 are set differently, so that the wiring connector 304b11 can be mounted in a preset posture at a preset position, thus preventing the reverse mounting of the wiring connector 304b 11.

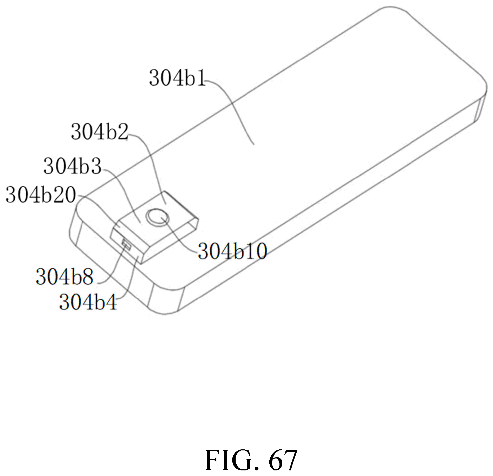

As shown in FIG. 67, in an embodiment, the protrusion 304b2 is arranged with a chamfer 304b20. The chamfer 304b20 is arranged on the top surface 304b3 of the protrusion 304b2. It is understandable that, in the embodiment, the chamfer 304b20 on the top surface 304b3 of the protrusion 304b2 can serve to guide the holding portion 304b13 as it is inserted toward the protrusion 304b2, thereby making the assembly process of the wiring connector 304b11 with the conductive member 304b1 easier.

It should be noted that, in another embodiment, when the conductive member 304b1 is arranged with the groove 304b5 for fixing the wiring connector 304b11, the chamfer 304b20 may be arranged at the opening of the groove 304b5 to guide the holding portion 304b13 as it is inserted into the groove 304b5, thereby making the assembly process of the wiring connector 304b11 with the conductive member 304b1 easier.

As shown in FIG. 66, in an embodiment, a surface of the wiring sheet 304b12 facing away from the conductive member 304b1 is arranged with a positioning portion 304b 18. It is understandable that, in the embodiment, by providing the positioning portion 304b18 on the surface of the wiring connector 304b11 facing away from the wiring sheet 304b12, the required welding spot can be identified and accurately positioned with the aid of the positioning portion 304b18 when welding the wiring connector 304b11 and the conductive member 304b1.

In the embodiment shown in FIG. 66, the positioning portion 304b18 includes a positioning hole 304b19. A surface of the conductive member 304b1 attached to the wiring sheet 304b12 is arranged with a positioning column 304b10. The position and shape of the positioning column 304b10 and the positioning hole 304b19 are arranged to match, allowing the positioning column 304b10 to extend into the positioning hole 304b19. It is understandable that, in the embodiment, by providing the positioning hole 304b19 on the wiring connector 304b11 and correspondingly arranging the positioning column 304b10 on the surface of the conductive member 304b1 attached to the wiring sheet 304b12, the positioning column 304b10 can extend into the positioning hole 304b19 and abut against an inner surface of the positioning hole 304b19, thereby defining the relative position between the conductive member 304b1 and the wiring connector 304b 11.

It should be noted that the structure of the aforementioned positioning portion 304b18 is introduced by way of example only. In some other embodiments, the positioning portion 304b18 may be arranged on the surface of the wiring connector 304b11 facing away from the wiring sheet 304b12 in any other form, such as a positioning point or other planar graphics, as long as it can perform an identification function to facilitate positioning.

In one embodiment, the holding portion 304b13, the pre-bending section 304b16, and the wiring sheet 304b12 are of an integral structure. It is understandable that configuring the holding portion 304b13, the pre-bending section 304b16, and the wiring sheet 304b12 as an integral structure means that the holding portion 304b13, the pre-bending section 304b16, and the wiring sheet 304b12 can be directly formed by stamping from the body of the wiring connector 304b11, thereby simplifying the manufacturing process of the wiring connector 304b11 while also improving the reliability of the wiring connector 304b 11.

In an embodiment, the wiring connector 304b11 is made of nickel. It is understandable that, in the embodiment, based on nickel's advantages such as good electrical conductivity, excellent solderability, and oxidation resistance, using nickel to manufacture the wiring connector 304b11 can improve the reliability of the busbar 304b of the present disclosure.

In an embodiment, the busbar 304b further includes an adapter. One end of the adapter is fixedly connected to the conductive member 304b1, and the other end is connected to the pole of the battery cell 101, thereby realizing the electrical signal transmission function between the battery cell 101 and the conductive member 304b1.

In an embodiment, the battery pack 10 further includes a battery information collector. The battery information collector is configured to collect voltage information and/or temperature information of the battery module 30. On both sides of the tray longitudinal beam 224 of the battery tray 20, the number of temperature information collection points is the same.

In an embodiment, the base plate 23 of the battery tray 20 has a protective composite material with aluminum honeycomb sandwiched in the middle. Specifically, the base plate 23 includes a first inorganic-organic composite layer, a honeycomb core layer, and a second inorganic-organic composite layer arranged in a stack. The use of the honeycomb core layer in the base plate 23 allows it to absorb energy and possess a degree of toughness, significantly enhancing the base plate 23's ability to resist impact deformation and improving the utilization of the reserved buffer space at the bottom 23 of the battery tray 20. The first and second inorganic-organic composite layers, while providing certain strength, mechanical support, and corrosion protection for the honeycomb core layer, also serve to reduce the weight of the base plate. Evidently, the effects contributed by the different layers are distinct. In order to achieve better overall performance of the final base plate 23, the present disclosure ensures that specific parameters of each of the layers, such as thickness and strength, satisfy certain quantitative relationships. Consequently, while coordinating the cooperation between the layers to ensure superior protective performance of the base plate 23, the lightweight degree of the base plate 23 is fully enhanced, thereby greatly improving the application prospects of the protective plate.

Furthermore, in another embodiment, the base plate 23 may also be made of a metal plate or a composite material plate, or the like.

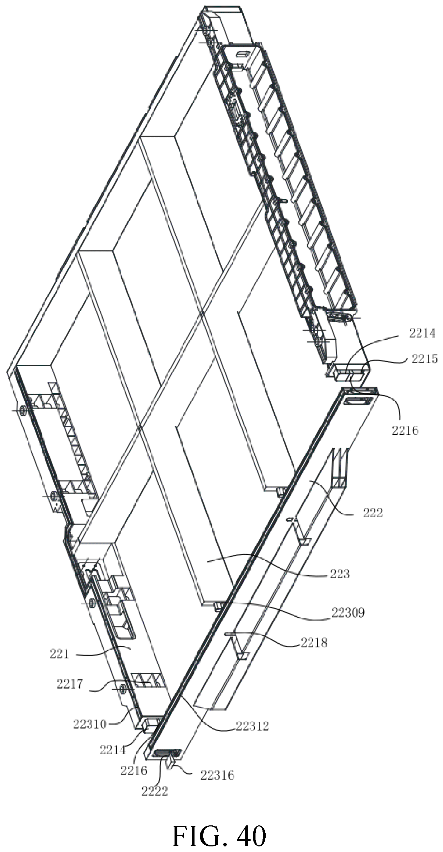

Furthermore, in an embodiment of the present disclosure, as shown in FIGS. 40 to 46, a first deformation block 2214 and a second deformation block 2215 are arranged on the tray transverse side beam 221, and a third interval space 2216 is arranged between the first deformation block 2214 and the second deformation block 2215. The tray longitudinal side beam 222 is formed with a first through hole 2222, and the first deformation block 2214 and the second deformation block 2215 are inserted into the first through hole 2222. The battery tray 20 further includes a wedge block 22316, the wedge block 22316 is inserted into the third interval space 2216. The wedge block 22316 presses the first deformation block 2214 and the second deformation block 2215, the first deformation block 2214 and the second deformation block 2215 are deformed after being pressed, and are fixed in the first through hole 2222, and the tray transverse side beam 221 and the tray longitudinal side beam 222 are connected together by utilizing the principle of a mortise-and-tenon structure. At this point, even without subsequent welding, the first deformation block 2214, second deformation block 2215, and wedge block 22316 alone provide an effective fixed connection. When welding is subsequently performed to enhance connection reliability, the presence of the first deformation block 2214, second deformation block 2215, and wedge block 22316 significantly mitigates issues such as weld spatter, high-temperature deformation, and difficulties in subsequent polishing, compared to directly butt-welding the two side beams. An annular gasket 22313 is arranged between one tray transverse side beam 221 and another tray transverse side beam 221, the annular gasket 22313 surrounds the first deformation block 2214 and the second deformation block 2215. After assembly is completed, the annular gasket 22313 achieves sealing at the first through hole 2222, improving the sealing performance.

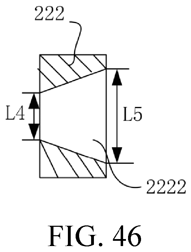

Referring to FIG. 46, the figure schematically shows the shape of the first through hole 2222 in a cross-sectional view. In FIG. 46, the left side is a side close to the tray transverse side beam 221, and the right side is a side away from the tray transverse side beam 221. As shown in FIG. 46, the first through hole 2222 is a tapered hole, and the length L4 of the first through hole 2222 on the side close to the tray transverse side beam 221 is smaller than the length L5 of the first through hole 2222 on the side away from the tray transverse side beam 221. The advantage of this structure is that the wedge block 22316 is inserted into the third interval space 2216 on the side away from the tray transverse side beam 221, after being pressed by the wedge block 22316, the first deformation block 2214 and the second deformation block 2215 will deform toward the upper and lower directions in FIG. 3, respectively, thereby hooking onto the tray longitudinal side beam 222 and making the connection between the tray transverse side beam 221 and the tray longitudinal side beam 222 more reliable.

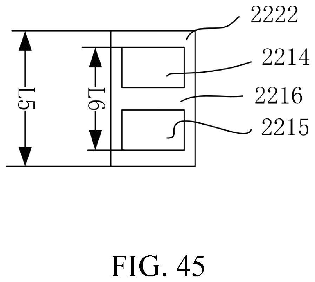

Referring to FIG. 45, the figure is a schematic view of the first through hole 2222 of the tray longitudinal side beam 222 observed from the side away from the tray transverse side beam 221. In the state where the wedge block 22316 is not inserted, the length L5 of the first through hole 2222 is greater than the length L6 between the upper end surface of the first deformation block 2214 and the lower end surface of the second deformation block 2215. The advantage of this structure is that sufficient deformation space is given to the first deformation block 2214 and the second deformation block 2215, thereby making the connection between the tray transverse side beam 221 and the tray longitudinal side beam 222 more reliable, and preventing the tray longitudinal side beam 222 from being torn due to excessive compression after the wedge block 22316 is inserted.

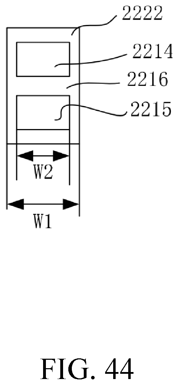

Referring to FIG. 44, the width W1 of the first through hole 2222 is greater than the width W2 of the second deformation block 2215. Similarly, the width W1 of the first through hole 2222 is also greater than the width of the first deformation block 2214 and the width of the wedge block 22316. That is, among the first through hole 2222, the first deformation block 2214, the second deformation block 2215, and the wedge block 22316, the width W1 of the first through hole 2222 is the largest. The advantage of this structure is that, on one hand, it facilitates the insertion of the wedge block 22316; on the other hand, when welding is required, the redundant width space within the first through hole 2222 can accommodate more filler metal, thereby achieving better welding strength.

In an embodiment, in the state where the wedge block 22316 is not inserted, and on the side away from the tray transverse side beam 221, the length difference between the length L5 of the first through hole 2222 and the length L6 (the length L6 is the distance from the upper end surface of the first deformation block 2214 to the lower end surface of the second deformation block 2215) is greater than the width difference between the width W1 of the first through hole 2222 and the width of any one of the first deformation block 2214, the second deformation block 2215, or the wedge block 22316. In other words, in the length direction of the first through hole 2222, the gaps between the first deformation block 2214 and the tray longitudinal side beam 222 and between the second deformation block 2215 and the tray longitudinal side beam 222 are greater than the gap, in the width direction of the first through hole 2222, between any one of the first deformation block 2214, the second deformation block 2215, or the wedge block 22316 and the tray longitudinal side beam 222. The advantage of this structure is that the first deformation block 2214 and the second deformation block 2215 can be deformed primarily in the up-down direction as much as possible, thereby improving the connection reliability.

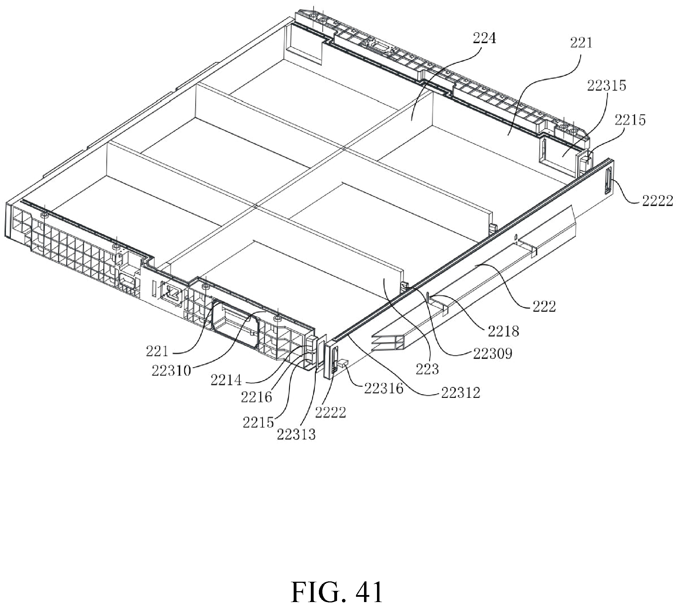

As shown in FIG. 41, the tray transverse side beam 221 is also formed with a weight reducing hole 2217. The weight reducing hole 2217 is located at the position where the first deformation block 2214 and the second deformation block 2215 join the main body of the tray transverse side beam 221. The advantage of forming the weight reducing hole 2217 at this location is that it not only serves a weight reduction function, but also weakens the local strength of the tray transverse side beam 221, thereby making the first deformation block 2214 and the second deformation block 2215 more prone to deformation.

In an embodiment, the battery tray 20 further includes a tray transverse beam 223 and a tray longitudinal beam 224. The tray longitudinal side beam 222 is formed with a second through hole 2218. The tray transverse beam 223 is arranged with a protrusion 22309, and the protrusion 22309 is inserted into the second through hole 2218. This plug-in connection method between the tray transverse beam 223 and the tray longitudinal side beam 222 makes mounting more convenient. Similarly, the tray longitudinal beam 224 can also be arranged with the protrusion 22309, correspondingly, the tray transverse side beam 221 can also be formed with the second through hole 2218, and the tray longitudinal beam 224 and the tray transverse side beam 221 can also be connected by means of plug-in connection.

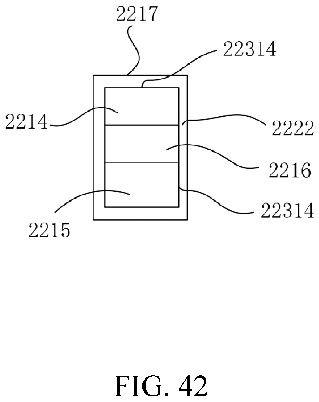

Referring to FIG. 42, when the wedge block 22316 is not inserted into the third interval space 2216, the first deformation block 2214 and the second deformation block 2215 are in an undeformed state, at this time, the inner edge 22314 of the annular gasket 22313 abuts against the first deformation block 2214 and the second deformation block 2215. The advantage of this structure is that it ensures the junctions between the first deformation block 2214 and the first through hole 2222, and between the second deformation block 2215 and the first through hole 2222 can be completely sealed.

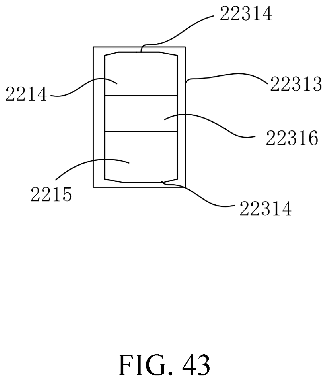

Referring to FIG. 43, when the wedge block 22316 is inserted into the third interval space 2216, the first deformation block 2214 and the second deformation block 2215 are in a deformed state, at this time, the deformation occurring at the edges of the first deformation block 2214 and the second deformation block 2215 is as shown by the dashed lines. Correspondingly, the first deformation block 2214 and the second deformation block 2215 apply an expansion force to the inner edge 22314 of the annular gasket 22313, causing the inner edge 22314 to also deform, exhibiting a tendency to expand toward the outer edge 22315 of the annular gasket 22313. The advantage of this structure is that the annular gasket 22313 can be pressed more tightly by the first deformation block 2214, the second deformation block 2215, the tray transverse side beam 221, and the tray longitudinal side beam 222, thereby achieving a better sealing effect.

Referring to FIGS. 40, 41, and 42, the tray transverse side beam 221 is arranged with a first sealing strip 22310. The first sealing strip 22310 and the outer edge 22315 of the annular gasket 22313 ensures the sealing effect at the junction between the tray transverse side beam 221 and the annular gasket 22313. Similarly, the tray longitudinal side beam 222 is arranged with a second sealing strip 22312. The second sealing strip 22312 simultaneously abuts against both the first sealing strip 22310 and the outer edge 22315 of the annular gasket 22313, the abutment among these three components enables continuous sealing at the seam between the tray transverse side beam 221 and the tray longitudinal side beam 222.

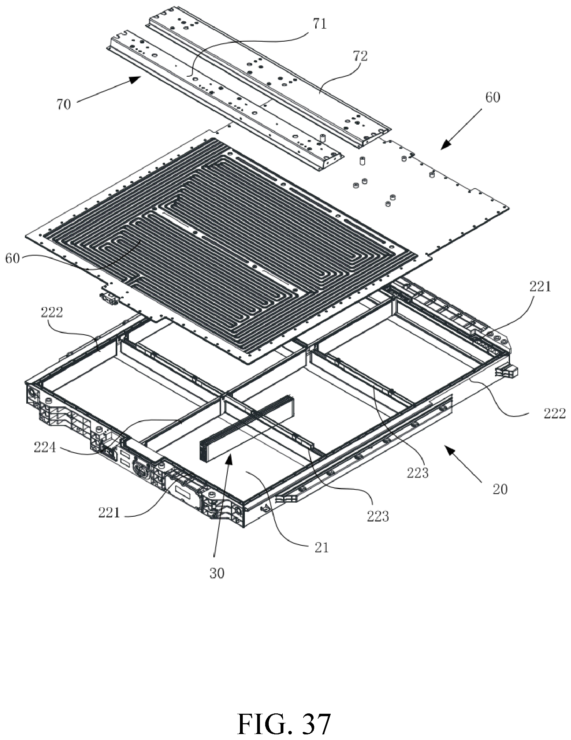

Furthermore, in the second aspect, a seat support mounting structure is also disclosed in the present disclosure. Specifically, as shown in FIGS. 37 to 39, the seat support mounting structure includes a seat support 70 and a battery pack 10. The seat support 70 and the battery pack 10 are connected by a structural adhesive.

To further illustrate, the seat support 70 is configured to mount a seat, thereby providing support for the seat in the passenger compartment. The structural adhesive typically has a compressive strength of greater than 65 MPa, a steel-to-steel tensile bonding strength of greater than 30 MPa, and a shear strength of greater than 18 MPa, such as silicone structural adhesives commonly available on the market. Connecting the seat support 70 to the battery pack 10 by a structural adhesive eliminates the need to weld the seat support 70 to the vehicle body. This is advantageous for vehicle bodies made of composite materials, such as carbon fiber, as composite materials like carbon fiber are not suitable for welding processes. Additionally, after the seat support 70 and the battery pack 10 are connected by a structural adhesive, stress between the seat support 70 and the battery pack 10 can be alleviated, tightly integrating the seat support 70 and the battery pack 10 enhances the crash resistance strength of the battery pack 10, reducing intrusion into the battery during a collision, and ensuring the safety of the battery pack 10.

Although in the embodiment shown in FIG. 37, the length of the seat support 70 extends in the transverse direction, in actual production, the length of the seat support 70 can also extend in the longitudinal direction.

In an embodiment, the battery pack 10 includes a battery tray 20 and a cooling plate 60. The battery tray 20 has a battery accommodating space 21. The cooling plate 60 is arranged above the battery tray 20. The seat support 70 is arranged above the cooling plate 60. The seat support 70 and the cooling plate 60 are connected by a structural adhesive.

To further illustrate, in the embodiment shown in FIG. 37, the battery pack 10 includes a battery tray 20 and a cooling plate 60. The battery tray 20 has a battery accommodating space 21. The cooling plate 60 is configured to exchange heat with the battery module 30 shown in FIG. 37, and may employ methods such as air cooling, liquid cooling, or direct cooling. Specifically, the cooling plate 60 is arranged above the battery tray 20. The seat support 70 is arranged above the cooling plate 60. The seat support 70 and the cooling plate 60 are connected together by a structural adhesive bonding. For example, in supercar models, where the vehicle body material often uses composite materials such as carbon fiber which are not suitable for welding, after the seat support 70 and the cooling plate 60 are connected via adhesive bonding, there is no need for further welding to the vehicle body. Moreover, during a side collision, part of the collision force can be dispersed through the cooling plate 60 and the seat support 70, thereby enhancing the crash resistance strength of the battery pack 10, reducing intrusion into the battery module 30 during a collision, and ensuring the safety of the battery pack 10.

In an embodiment, the length of the seat support 70 extends in the transverse direction.

To further illustrate, the length of the seat support 70 extends in the transverse direction, which is more beneficial for enhancing the strength of the battery pack 10 against side collisions. For the battery pack 10, side collisions are more likely to cause damage; therefore, having the length of the seat support 70 extend transversely is more advantageous.

In an embodiment, both ends of the seat support 70 are fixedly connected to the tray longitudinal side beams 222.

Referring to FIG. 37, the battery tray 20 includes a pair of tray transverse side beams 221 and a pair of tray longitudinal side beams 222. The tray transverse side beams 221 are fixedly connected to the tray longitudinal side beams 222, forming a rectangular frame.

In the embodiment of FIG. 37, the seat support 70 includes a first seat support 71 and a second seat support 72. In practical designs, it is also possible to employ only one seat support 70, or to use more than two seat supports 70. Each of the first seat support 71 and the second seat support 72 has a first end and a second end. Both the first end and the second end are fixedly connected to the tray longitudinal side beam 222 of the battery tray 20 by a second connector 322. In actual production, the first end and the second end can also be fixedly connected to the tray longitudinal side beam 222 of the battery tray 20 by means such as welding or riveting. The advantage of this structure is that the seat support 70 is directly connected to the tray longitudinal side beam 222. During a side collision, the side collision force acting on the tray longitudinal side beam 222 can be directly transmitted to the seat support 70. This enables the seat support 70, while supporting the vehicle seat, to also enhance the structural strength of the battery pack 10, thereby improving the battery pack 10's ability to withstand side collisions and protecting the battery module 30 shown in FIG. 37.

In an embodiment, at the position between the two ends of the seat support 70, the first fixing member 73 passes through the seat support 70 and the cooling plate 60 and is then fastened to the tray transverse beam 223.

In an embodiment, the battery tray 203 further includes tray transverse beams 223 arranged between the pair of tray longitudinal side beams 222. The tray transverse beams 223 are configured to partition the battery tray 20 into a plurality of battery accommodating spaces 21 while enhancing the structural strength of the battery tray 20 itself. At the position between the first end and the second end of the first seat support 71, the first fixing member 73 passes through the first seat support 71 and the cooling plate 60 and is then fastened to a tray transverse beam 223, thereby forming the mounting structure as shown in FIG. 3. The advantage of this structure is that a connection relationship is established between the tray transverse beam 223 and the first seat support 71, and in the event of side collision deformation, at the position between the first end and the second end, the tray transverse beam 223 and the first seat support 71 can consistently jointly resist the side collision force, thereby reducing the intrusion into the battery module 30 in FIG. 2. The first fixing member 73 and the second fixing member 74 can be bolts, rivets, etc.

In an embodiment, the cooling plate 60 is arranged with a cooling medium channel region. The area of the cooling medium channel region located on the two sides of the seat support 70 is equal.

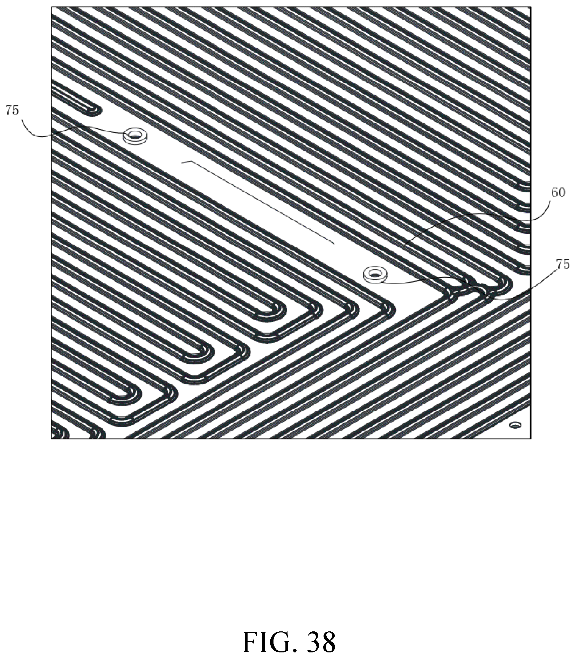

Referring to FIG. 37 and FIG. 38, the cooling plate 60 is arranged with a cooling medium channel region. A cooling medium channel is arranged within the cooling medium channel region, and a cooling medium such as air, coolant, or refrigerant can flow within the cooling medium channel to exchange heat with the battery module 30 in FIG. 2. As shown in FIG. 3, after the first seat support 71 is mounted, the area of the cooling medium channel region located on the two sides of the first seat support 71 (i.e., on two sides of the first seat support 71 in the longitudinal direction) is equal. Since the first fixing member 73 needs to pass through the cooling plate 60, the cooling medium channel must avoid this penetration region, which consequently affects the layout of the cooling medium channel. Using the first seat support 71 as a boundary, making the area of the cooling medium channel region on both sides of the first seat support 71 equal, enables the first seat support 71 to minimize the impact on the heat dissipation performance of the battery module 30 in FIG. 37. This approach ensures the temperature uniformity of the battery module 30 while enhancing the structural strength of the battery pack 10.

In an embodiment, the seat support 70 includes a first seat support 71 and a second seat support 72. Two ends of the first seat support 71 are fixedly connected to the tray longitudinal side beam 222, and, at the position between the two ends of the first seat support 71, the first fixing member 73 passes through the first seat support 71 and the cooling plate 60 and is then fastened to the tray transverse beam 223. The two ends of the second seat support 72 are fixedly connected to the tray longitudinal side beam 222, and the second seat support 72 is not connected to the tray transverse beam 223.

In the embodiment, two beams are employed: the first seat support 71 and the second seat support 72. The first end and the second end of the first seat support 71 are fixedly connected to the tray longitudinal side beam 222, and, at the position between the first end and the second end of the first seat support 71, the first fixing member 73 passes through the first seat support 71 and the cooling plate 60 and is then fastened to the tray transverse beam 223. In contrast, only the first end and the second end of the second seat support 72 are fixedly connected to the tray longitudinal side beam 222, and the second seat support 72 is not connected to the tray transverse beam 223. The advantage of this structure is that the first seat support 71 primarily functions to enhance the battery pack 10's resistance to side collision forces, while the second seat support 72 serves to assist in improving the battery pack 10's resistance to side collision forces, and both can begin resisting the side collision force immediately upon the initiation of a side impact. However, by having only the first seat support 71 connected to the tray transverse beam 223, the region required for the fixing member to penetrate the cooling plate 60 is minimized, thereby reducing the adverse impact on the heat exchange area of the cooling medium channel region.

In an embodiment, the cooling plate 60 is formed with a mounting hole. A sleeve 75 is arranged through the mounting hole, and the first fixing member 73 passes through the sleeve 75.

Referring to FIG. 38, the cooling plate 60 is formed with a mounting hole. A sleeve 75 is arranged through the mounting hole, and the first fixing member 73 passes through the sleeve 75 and is then fastened to the tray transverse beam 223. The sleeve 75 can enhance the tear resistance of the cooling plate 60 at the connection position of the fixing member.

In an embodiment, the upper end surface of the sleeve 75 is higher than the upper surface of the cooling medium channel of the cooling plate 60.

To further illustrate, the upper end face of the sleeve 75 is higher than the upper surface of the cooling medium channel of the cooling plate 60. In this way, the sleeve 75 can protect the cooling medium channel from being compressed, deformed, or worn by the first seat support 71.

This embodiment provides a vehicle. The aforementioned battery pack 10 is mounted on the vehicle, or the aforementioned seat support mounting structure is mounted on the vehicle.

According to another aspect of the present disclosure, a vehicle is provided. The vehicle employs the aforementioned seat support mounting structure or the aforementioned battery pack 10. Consequently, the vehicle body does not need to be welded to the seat support 70.

If the vehicle body is manufactured employing composite materials not suitable for welding processes, it is particularly suitable to employ the seat support mounting structure or the battery pack 10 of the present disclosure. This is because, in this case, the seat support is directly bonded to the housing of the battery pack 10, thereby also enhancing the structural strength of the battery pack 10.

Furthermore, the vehicle according to the embodiment of the present disclosure, by employing the aforementioned battery pack 10, ensures safety and stability during driving and reduces the maintenance cost of the vehicle.

In some embodiments, the vehicle includes a vehicle body and the battery pack 10. The battery pack 10 is arranged at the bottom of the vehicle body. In this case, the first side of the flow channel plate 601 faces the vehicle body.

In some embodiments, the vehicle body includes a passenger compartment. The sealing plate 606 is formed with an opening 607 penetrating through along the thickness direction of the flow channel plate 601. The opening 607 is arranged corresponding to the passenger compartment.

In some embodiments, the vehicle further includes a sealing member. The sealing member is arranged surrounding the opening 607 and is arranged between the opening 607 of the sealing plate 606 and the vehicle body. For example, the sealing member has a rectangular shape and is arranged around the edge of the opening 607. By arranging the sealing member between the opening 607 of the sealing plate 606 and the vehicle body, the sealing performance between the battery pack 10 and the vehicle body can be enhanced.

To further illustrate, the cooling plate 60 has a cooling medium inlet and a cooling medium outlet. The cooling medium inlet branches to form at least two branch inlets, and at least two branch outlets converge at the cooling medium outlet. A plurality of branch flow channels are formed between the cooling medium inlet and the cooling medium outlet. In a direction away from the cooling medium inlet and the cooling medium outlet, the plurality of branch flow channels form a first flow channel region, a second flow channel region, and a third flow channel region that are spaced apart from each other. The first flow channel region is surrounded by the branch flow channels of the second flow channel region, and the second flow channel region is surrounded by the branch flow channels of the third flow channel region.

The preceding embodiments have primarily focused on highlighting the differences between the various embodiments. As long as the distinct optimization features of the different embodiments are not contradictory, they can be combined to form even more optimal embodiments. For the sake of conciseness, these possible combinations will not be elaborated upon further herein.

Although some specific embodiments of the present disclosure have been described in detail through examples, a person skilled in the art will understand that the above examples are for illustrative purposes only and are not intended to limit the scope of the present disclosure. A person skilled in the art will understand that modifications can be made to the above embodiments without departing from the scope and spirit of the present disclosure. The scope of the present disclosure is defined by the appended claims.

## Claims

1. A battery pack (10), the battery pack (10) comprising a battery tray (20), a structural beam (22) being arranged on the battery tray (20), the structural beam (22) being adapted to partition the battery tray (20) into a battery accommodating space (21) and an electrical accommodating space (28), the battery accommodating space (21) and the electrical accommodating space (28) being isolated from each other, a battery module (30) being accommodated in the battery accommodating space (21), and a power distribution box (40a) being accommodated in the electrical accommodating space (28).

2. The battery pack (10) according to claim 1, wherein each of the battery modules (30) comprises a plurality of battery cells (101), and the battery cells (101) are arranged on the battery tray (20) in an insulated manner.

3. The battery pack (10) according to claim 2, wherein an insulating adhesive (206) is arranged between adjacent battery cells (101); and/or a first insulating layer (201) is arranged between the structural beam (22) and the battery cells (101); and/or a second insulating layer is arranged in the power distribution box (40a); and/or the battery pack (10) further comprises a cooling plate (60), and a third insulating layer is arranged between the cooling plate (60) and the battery cells (101).

4. The battery pack (10) according to claim 3, wherein an upper surface and/or a lower surface of the cooling plate (60) is a flat surface.

5. The battery pack (10) according to claim 3 or 4, wherein the cooling plate (60) comprises:
a flow channel plate (601), two sides of the flow channel plate (601) in a thickness direction are a first side plate (602) and a second side plate (604) respectively, the first side plate (602) has a protrusion (603), and the protrusion (603) and the second side plate (604) jointly define a flow channel (605);
a sealing plate (606), the sealing plate (606) is arranged on the side of the flow channel plate (601) close to the first side plate (602); and
a support (608), the support (608) is supported between the flow channel plate (601) and the sealing plate (606).

6. The battery pack (10) according to claim 5, wherein the flow channel plate (601) comprises a flow channel region and a non-flow channel region, the non-flow channel region is arranged on a peripheral side of the flow channel plate (601) surrounding the flow channel region, the flow channel region is arranged with a flow channel (605), and the non-flow channel region is not arranged with a flow channel (605); the support (608) is of a frame-shaped structure, and the support (608) is arranged in the non-flow channel region.

7. The battery pack (10) according to any one of claims 1 to 6, wherein:
the battery module (30) comprises at least one set of first battery modules and second battery modules;
the power distribution box (40a) comprises a first power distribution box (40) and a second power distribution box (41);
the first power distribution box (40) is connected in series between the first battery module and the second battery module, the second power distribution box (41) is configured to output electrical power externally, and the second power distribution box (41) is connected to the first power distribution box (40); and
the first power distribution box (40) is configured to respond to a signal from the second power distribution box (41), to connect or disconnect the first battery module and the second battery module.

8. The battery pack (10) according to claim 7, wherein the first power distribution box (40) comprises a first switch module (403), the first switch module (403) is connected in series between the first battery module and the second battery module and is communicatively connected to the second power distribution box (41), and the first switch module (403) is configured to respond to the signal from the second power distribution box (41), to connect or disconnect the first battery module and the second battery module.

9. The battery pack (10) according to claim 7 or 8, wherein the first power distribution box (40) further comprises a second switch module (404), the second switch module (404) is connected in series between the first battery module and the second battery module, and the second switch module (404) is adapted to disconnect when a preset parameter reaches a threshold.

10. The battery pack (10) according to any one of claims 1 to 9, wherein the battery pack (10) further comprises a battery wire harness;
a side of the structural beam (22) away from the battery tray (20) is arranged with an accommodating groove (2244), the open side of the accommodating groove (2244) is arranged away from the battery tray (20), and the battery wire harness is accommodated in the accommodating groove (2244) and is insulated from the structural beam (22).

11. The battery pack (10) according to claim 10, wherein the battery pack (10) further comprises an accommodating member, the battery wire harness is accommodated in the accommodating member, the accommodating member is accommodated in the accommodating groove (2244), the accommodating member is a trough-shaped member, and the open side of the accommodating member faces the same direction as the open side of the accommodating groove (2244).

12. The battery pack (10) according to any one of claims 1 to 11, wherein a plurality of battery modules (30) are arranged in the battery pack (10), the two battery modules (30) are connected by a busbar or the battery module (30) and the power distribution box (40a) are connected by a busbar, the busbar comprises a first connecting portion (304a1), a first bending portion (304a2), a third transition portion (304a3), a second bending portion (304a4), and a second connecting portion (304a5) arranged sequentially, the first bending portion (304a2) has a plurality of metal sheets arranged sequentially along the thickness direction of the first bending portion (304a2), the second bending portion (304a4) has a plurality of metal sheets arranged sequentially along the thickness direction of the second bending portion (304a4), the first connecting portion (304a1) and the first bending portion (304a2) are located at an end of the third transition portion (304a3) in a first direction, the second bending portion (304a4) and the second connecting portion (304a5) are located at an end of the third transition portion (304a3) in a second direction, and the first direction intersects the second direction.

13. The battery pack (10) according to claim 12, wherein the battery pack (10) further comprises a sealing cover sealing the battery tray (20), and a support member is arranged on the battery tray (20);
the battery pack (10) further comprises an adapter (303), two busbars are connected by the adapter (303), and a connection point between one of the busbars and the adapter (303), and a connection point between the other busbar and the adapter (303) are both located on a side of the support member facing the sealing cover.

14. The battery pack (10) according to claim 13, wherein one of the two busbars is a first connector (321), and the other busbar is a second connector (322);
the first connector (321) is formed with a first positioning hole (3211);
the second connector (322) is formed with a second positioning hole (3321);
a first boss (3031) and a second boss (3032) are arranged on the adapter (303); and
a shape of the first boss (3031) corresponds to a shape of the first positioning hole (3211), and a shape of the second boss (3032) corresponds to a shape of the second positioning hole (3321).

15. The battery pack (10) according to claim 14, wherein, in a state where the first connector (321) and the second connector (322) are connected to the adapter (303), the first connector (321) and the second connector (322) do not overlap in the height direction.

16. The battery pack (10) according to any one of claims 1 to 15, wherein the structural beam (22) comprises a tray transverse beam (223) and a tray longitudinal beam (224), the tray transverse beam (223) is formed with a third bayonet (2231), the tray longitudinal beam (224) is formed with a fourth bayonet (2241), and the third bayonet (2231) of the tray transverse beam (223) engages with the fourth bayonet (2241) of the tray longitudinal beam (224) to partition a space inside the battery pack (10) into a plurality of battery accommodating spaces (21).

17. The battery pack (10) according to claim 16, wherein the structural beam (22) comprises a tray longitudinal side beam (222), the tray transverse beam (223) has a first exhaust cavity, the tray longitudinal side beam (222) has a second exhaust cavity, the first exhaust cavity communicates with the second exhaust cavity, the battery accommodating space (21) inside the battery tray (20) communicates with the first exhaust cavity, and the second exhaust cavity communicates with a space outside the battery tray (20).

18. The battery pack (10) according to any one of claims 1 to 17, wherein the structural beam (22) partitions the battery tray (20) into a plurality of battery accommodating spaces (21).

19. The battery pack (10) according to claim 18, wherein the battery tray (20) further comprises an insulating assembly (22302), the structural beam (22) comprises a tray transverse beam (223) and/or a tray longitudinal beam (224), the tray transverse beam (223) and/or the tray longitudinal beam (224) is formed with an opening, the insulating assembly (22302) is arranged on the tray transverse beam (223) and/or the tray longitudinal beam (224) and seals the opening, and the insulating assembly (22302) is configured to allow electrical connection of electrical assemblies in two adjacent electrical accommodating spaces (28) and/or battery accommodating spaces (21).

20. A seat support mounting structure, comprising:
a seat support (70); and
the battery pack (10) according to any one of claims 1 to 19;
and the seat support (70) being connected to the battery pack (10).

21. The seat support mounting structure according to claim 20, wherein the battery pack (10) further comprises a cooling plate (60), the seat support (70) is arranged above the cooling plate (60) of the battery pack (10), and the seat support (70) and the cooling plate (60) are adapted to be connected by a structural adhesive.

22. A vehicle, the battery pack (10) according to any one of claims 1 to 19 being mounted on the vehicle, or the seat support mounting structure according to claim 20 or 21 being mounted on the vehicle.
